(19) Europäisches Patentamt
European Patent Office
Office européen des brevets

(11) Publication number: **0 287 233 B1**

# (12) EUROPEAN PATENT SPECIFICATION

(45) Date of publication of patent specification: **22.06.94**

(51) Int. Cl.5: **C09D 167/00**

(21) Application number: **88302759.1**

(22) Date of filing: **28.03.88**

Divisional application 92111038.3 filed on 28/03/88.

## (54) Polymeric vehicle for coatings.

(30) Priority: **27.03.87 US 31395**
**27.03.87 US 31397**
**18.08.87 US 86504**
**15.03.88 US 168231**
**21.03.88 US 170907**

(43) Date of publication of application:
**19.10.88 Bulletin 88/42**

(45) Publication of the grant of the patent:
**22.06.94 Bulletin 94/25**

(84) Designated Contracting States:
**AT BE CH DE ES FR GB IT LI LU NL SE**

(56) References cited:
**EP-A- 0 138 768**
**US-A- 4 522 971**

(73) Proprietor: **NORTH DAKOTA STATE UNIVERSITY**
**University Drive**
**Fargo, North Dakota 58105(US)**

(72) Inventor: **Jones, Frank N.**
**3245 17th Avenue South**
**Fargo, North Dakota 58103(US)**
Inventor: **Chen, Der-Shyang**
**3-953 Summerside Avenue**
**Winnipeg, Manitoba R3T 4Y1(CA)**
Inventor: **Dimian, Adel F.**
**824 North University Drive**
**Fargo, North Dakota 58103(US)**
Inventor: **Wang, Daozhang**
**1006 11th Street North**
**Fargo, North Dakota 58102(US)**

(74) Representative: **Hardisty, David Robert et al**
**BOULT, WADE & TENNANT**
**27 Furnival Street**
**London EC4A IPO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 287 233 B1

## Description

This application relates to polymeric vehicles for coatings which provides a coating binder and a coating film of high hardness, flexibility and impact resistance.

### BACKGROUND OF INVENTION

Liquid-crystal (L-C) polymers are known to form mesophases having one- and two-dimensional order as disclosed by Flory, P. J., Advances in Polymer Science, Liquid Crystal Polymers I; Springer-Verlag: New York (1984) Volume 59; Schwarz, J. Mackromol, Chem. Rapid Commun. (1986) 7, 21. Further, mesophases are well known to impart strength, toughness and thermal stability to plastics and fibers as described by Kwolek et al in Macromolecules (1977) 10, 1390; and by Dobb et al, Advances in Polymer Science, Liquid Crystal Polymers II/III (1986) 255(4), 179.

While L-C polymers have been widely studied, their potential utility as coatings binders seems to have been overlooked. Japanese patents claiming that p-hydroxybenzoic acid (PHBA), a monomer commonly used in L-C polymers, enhances the properties of polyester powder coatings are among the very few reports that may describe L-C polymers in coatings; Japanese Kokai 75/40,629 (1975) to Maruyama et al; Japanese Kokai 76/56,839 (1976) to Nakamura et al; Japanese Kokai 76/44,130 (1976) to Nogami et al; and Japanese Kokai 77/73,929 (1977) to Nogami et al.

Hardness and impact resistance are two desirable characteristics of coatings. However, because hardness is associated with higher $T_g$s (glass transition temperatures), and good impact resistance with lower $T_g$s, there is usually a trade-off between hardness and impact resistance. Further, non-baked polymeric vehicles with low viscosities which provide binder coating films with improved hardness and shorter drying times through combinations of polymers with mesogenic groups are not disclosed in the prior art and are to be desired.

This invention is concerned with the provision of modified polymers comprising low Tg polymers covalently bonded with mesogenic groups for use in formulated coatings to provide improved films, and more particularly this invention aims to provide enamels of improved hardness and impact resistance.

The invention also provides high solids/low viscosity, non-baking formulated coatings comprising polymeric vehicles for providing films wherein the coating formulation is fast drying and provides hard and impact resistant films.

According to the present invention there is provided a polymeric vehicle which when applied to a substrate provides binder having a Tg not greater than 60°C, a pencil hardness of at least H, and a reverse impact resistance of at least 30 inch-lbs. (3.4J) at a binder thickness of 1 mil (25µm) , said polymeric vehicle comprising:

(a) from 100 to 35 weight percent, based upon the weight of the polymeric vehicle, of a modified polymer, said modified polymer being selected from polyester polymers covalently bound to at least one mesogenic group selected from the group consisting of compounds of the Formula I, II, III, IV or V:

I. 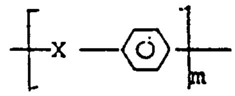 or covalently bonded combinations of such general formula

II. 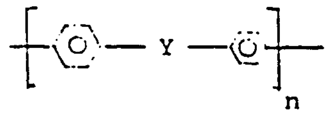 or covalently bonded combinations of such general formula

III. 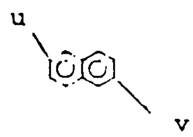 or 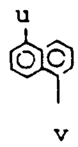 or covalently bonded combinations of such general formulas

IV. Combinations of I, II, and 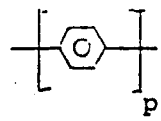 or covalently bonded combinations selected from the group consisting of formulas I, II and

V. Combinations of III and 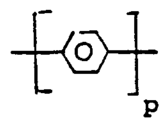 or covalently bonded combinations selected from the group consisting of the formula III and the formula III and

wherein

X = 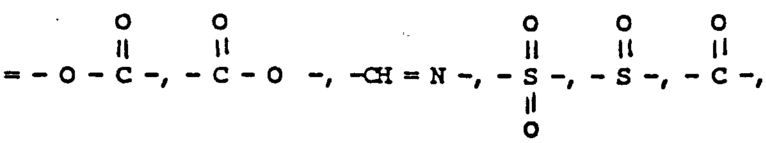

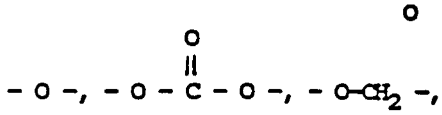

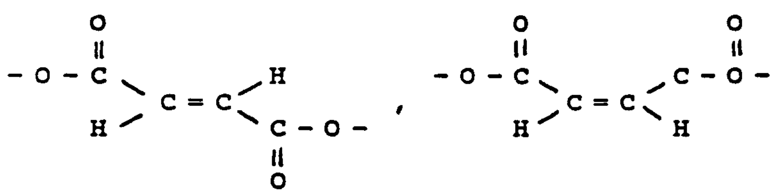

Y = X or 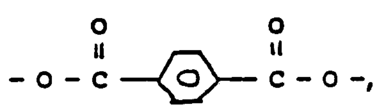 or 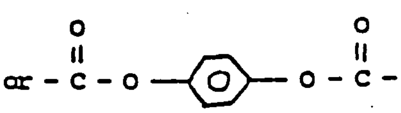

v = 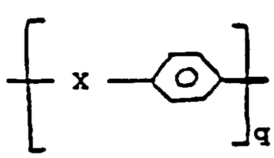

u = X
m = an integer from 2 to 8;
n = 1 or 2;
p = an integer from 1 to 4; and
q = an integer from 1 to 3.

(b) 0 - 65 weight percent based upon the weight of the polymeric vehicle, of a composition selected from the group consisting of cross-linker resin, unmodified polymer resin, and mixtures thereof.

## BRIEF DESCRIPTION OF THE FIGURES

FIG. 1 outlines the synthesis of modified alkyds.
FIG. 2 provides a thermogram of a modified alkyd.
FIG. 3 shows the effect of PHBA (parahydroxybenzoic acid) content in alkyd resins has on viscosity.
FIG. 4 shows the effect that solution solid content has on viscosity for alkyd resins.
FIG. 5 shows thermograms of modified diols.

## DESCRIPTION OF THE INVENTION

In accord with this invention a polymeric vehicle is prepared, the polymeric vehicle comprising a modified polymer containing covalently bonded mesogenic groups. This modified polymer may be used as the sole component of a polymeric vehicle for a coating, to which may be added solvents and known additives such as pigments, thereby providing a formulated coating. Optionally the polymeric vehicle comprises a modified polymer in a mixture with other polymers, modified or unmodified, and with cross-linking resins. Solvents and additives may be added to such a mixture of polymers and resins to make a formulated coating. An aspect of the invention is provision of a coating binder which is the polymer portion which includes the modified polymer, of a coating film which has high hardness, flexibility, and impact resistance. After the formulated coating is applied to a base or substrate, solvents (if present) evaporate leaving a solvent-free film. Evaporation may be accelerated by heating, as by baking. In some forms of the invention, no further chemical reaction is necessary to impart useful properties to the resulting solvent-free film. In other forms of the invention, optimum properties are attained only after chemical reactions occur within the film, forming covalent bonds and increasing the molecular weight of the modified polymer and usually converting it into a three-dimensional cross-linked polymeric network. In some cases these chemical reactions occur between the modified polymer and a cross-linking resin if present in the formulated coating. In other cases, the modified polymer may chemically react with substances to which the film is exposed after solvent evaporation, for example, with oxygen in the air. The chemical reactions that form a cross-linked network may be accelerated by heating (baking). It is the provision of this improved film with improved hardness, flexibility and impact resistance, and the coating binder therefor, to which this invention is particularly directed. Since the coating binder primarily provides the desired film characteristics, the properties of the coating binder are particularly described primarily by tests which measure hardness and impact resistance.

This invention provides for using a polymeric vehicle comprising a modified polymer which after film formation provides a low $T_g$ coating binder which has hardness and impact resistance. We have found that the presence of mesogenic groups covalently bonded to otherwise amorphous polymers provides coating binders that are substantially harder than comparable coating binders not having mesogenic groups and have found that this is obtained without substantially raising $T_g$ of the coating binder. The presence of covalently bound mesogenic groups also imparts other desirable properties to the formulated coating. Thus, according to the invention, it is possible to prepare very hard coating binders and films while retaining the impact resistance, flexibility and adhesion associated with a low $T_g$. Coating binders with $T_g$s in a range from -50 degrees C. to +10 C. are often very elastic and impact resistant, but they are generally too soft to be useful in most coatings applications. On the other hand, non-crosslinked coatings with $T_g$s above 60 degrees C. are usually hard, but they are generally brittle and have very poor impact resistance. It is, therefore, beneficial to impart hardness to coating binders without sacrificing impact resistance. Moreover, the presence of covalently bound mesogenic groups imparts other desirable properties to the formulated coating. For example, this invention can alleviate a common problem of formulated coatings: that substantial amounts of solvent are required to reduce viscosity to a level low enough for application of polymers whose $T_g$s and molecular weights are high enough to provide good properties. The use of large amounts of solvent

results in increased costs and often in unacceptable levels of atmospheric pollution. Especially large amounts of solvent are often required for conventional coatings vehicles whose $T_g$s and molecular weight are high enough to impart desirable properties without cross-linking. Presence of mesogenic groups can both improve their properties and reduce the amount of solvent required.

The groups that provide the coating binder of the invention are called "mesogenic groups". The mesogenic groups of this invention are chemical structures that contain a rigid sequence of at least two aromatic rings connected in the para position by a covalent bond or by rigid or semi-rigid chemical linkages. Optionally, one of the rigid aromatic rings may be a naphthalenic rings linked at the 1,5- or 2,6-positions. Modified polymers containing mesogenic groups are called "mesomorphous." The coating binders of this invention contain between 5 percent and 50 percent by weight of mesogenic groups to provide the desired characteristics. When a polymer is referred to as "liquid crystalline" herein it is meant to cover such polymer which exhibit mesophases. The presence of mesophases are often associated with the presence of mesogenic groups.

As used in this application, "polymer" means a polymeric or oligomeric component of a coating vehicle such as a polyester polymer; alkyd polymers are considered to be a sub-class of polyester polymers. "Cross-linker resin" means a di- or polyfunctional substance containing functional groups that are capable of forming covalent bonds with hydroxyl, carboxyl and -SH groups that are optionally present on the polymer; aminoplast and polyisocyanate resins are members of this class; melamine resins are a sub-class of aminoplast resins. "Modified polymer" means a polymer having covalently bound mesogenic groups as described herein. "Polymeric vehicle" means all polymeric and resinous components in the formulated coating, i.e. before film formation, including but not limited to modified polymers. "Coating binder" means the polymeric part of the film of the coating after solvent has evaporated and, in cases where cross-linking occurs, after cross-linking. "Formulated coating" means the polymeric vehicle and solvents, pigments, catalysts and additives which may optionally be added to impart desirable application characteristics to the formulated coating and desirable properties such as opacity and color to the film. "Film" is formed by application of the formulated coating to a base or substrate, evaporation of solvent, if present, and cross-linking, if desired. "Air-dried formulated coating" means a formulated coating that produces a satisfactory film without heating or baking. "Baked formulated coating" means a formulated coating that provides optimum film properties upon heating or baking above ambient temperatures.

"Polyester polymers" means the polymerized reaction product of polyacids and polyols; polyacids include diacids such as isophthalic, terephthalic, and fumaric acids and $HOOC(CH_2)_nCOOH$ where n = 2 to 14 and "dimer acids", anhydrides of diacids such as maleic, phthalic, hexahydrophthalic, and succinic, and anhydrides of polyacids such as trimellitic acid anhydride. The polyols include linear diols such as $HO-(CH_2)_mOH$ where m = 2 to 16, branched aliphatic diols such as neopentyl glycol, 1,3-butylene glycol, propylene glycol and 1,3-dihydroxy-2,2,4-trimethylpentane, cycloaliphatic diols such as hydroquinone, 1,4-dihydroxymethylcyclohexane and "hydrogenated bisphenol A", diol ethers such a diethylene glycol, triethylene glycol and dipropylene glycol, and polyols such as glycerol, pentaerythritol, trimethylol propane, trimethylol ethane, dipentaerythritol, sorbitol and styrene-allyl alcohol copolymer.

Esterification catalysts that are used in the process for preparing polyesters are butyl stannoic acid, barium oxide, barium hydroxide, barium naphthenate, calcium oxide, calcium hydroxide, calcium naphthenate, lead oxide, lithium hydroxide, lithium naphthenate, lithium recinoleate, sodium hydroxide, sodium naphthenate, zinc oxide, and lead tallate with butyl stannoic acid being preferred.

In this invention "alkyd polymers" are considered to be a sub-class of "polyester polymers." Alkyds are condensation polymers of the polyacids and polyols as described above that also contain monobasic acids. The monobasic acids may include saturated or unsaturated fatty acids having between 9 and 26 carbon atoms and monobasic aromatic acids.

Fatty, or other carboxylic, acids that are used to prepare alkyd resins include $HOOC(CH_2)_nCH_3$ where n = 7 to 22, oleic acid, linolelic acid, linolenic acid, erucic acid, soybean oil fatty acids, linseed oil fatty acids, safflower oil fatty acids, sunflower oil fatty acids, coconut oil fatty acids, tall oil fatty acids, dehydrated castor oil fatty acids, benzoic acid, toluic acid and t-butylbenzoic acid. Fatty acids may be incorporated into the alkyd polymer as such or as a component of triglycerides.

Although it is especially important that covalently bonded mesogenic groups, according to the invention, impart substantially improved hardness to coating binders without sacrificing impact resistance, the mesogenic groups often improve coatings in at least two other ways. In some cases inclusion of modified polymers according to the invention effectively lowers the viscosity of formulated coatings at a given solids content relative to the viscosity of comparable unmodified polymers in comparable solvents at the same solids level. The reason is that mesogenic groups tend to cause modified polymers to form stable dispersions rather than solutions in many common solvents. Thus, less solvent is required, reducing cost

and air pollution. Furthermore, in the case of air dried formulated coatings, the mesogenic groups greatly reduce the time necessary for the polymeric vehicle to harden into a film, referred to as "dry-to-touch" time.

We have found that mesogenic groups covalently bound to polymers can improve polymeric vehicles which provide coating binders having a $T_g$ as low as -50°C. or as high as +60°C. while providing improved hardness, adhesion, impact resistance and flexibility.

In accord with this invention, mesogenic groups in various forms are used to modify polymers for polymeric vehicles thereby providing films with desired characteristics. The polymeric vehicle comprises a modified polymer in the range of from about 100 to about 35 weight percent based upon the weight of the polymeric vehicle, and unmodified polymers and/or cross-linking resins in the range of from about 0 to about 65 weight percent based upon the polymeric vehicle. The modified polymer is a polyester polymer to which mesogenic groups are covalently bound such that the coating binder contains from about 5 to about 50 weight percent mesogenic groups, based upon the weight of the modified polymer. The mesogenic groups are selected from the group consisting of

I. 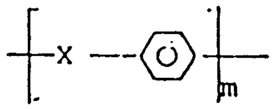 or covalently bonded combinations of such general formula

II. 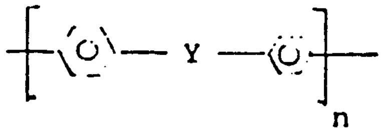 or covalently bonded combinations of such general formula

III. 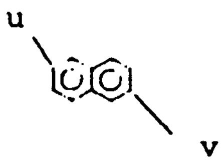 or 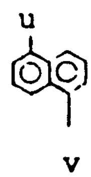 or covalently bonded combinations of such general formulas

IV. Combinations of I, II, and 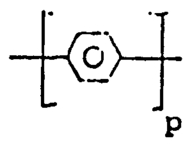 or covalently bonded combinations selected from the group consisting of formulas I, II and

V. Combinations of III and 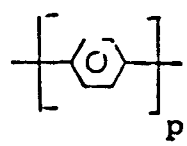 or covalently bonded combinations selected from the group consisting of the formula III and the formula III and

wherein

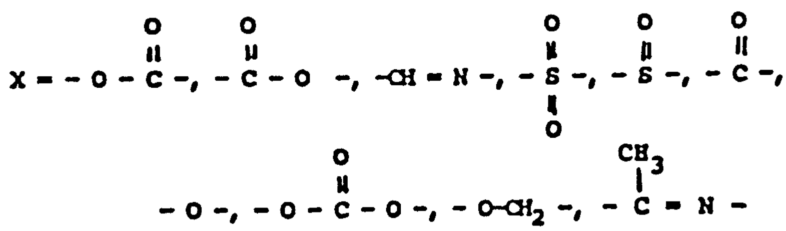

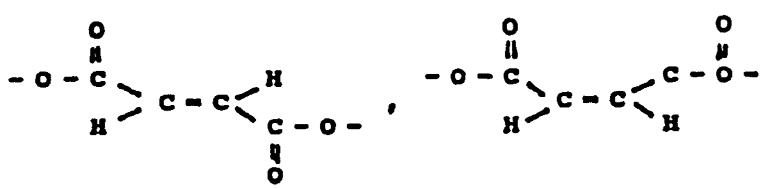

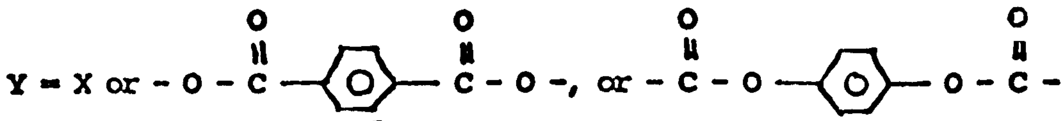

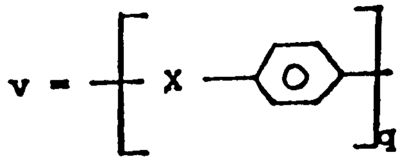

u = X
m = an integer from 2 to 8;
n = 1 or 2;
p = an integer from 1 to 4; and
q = an integer from 1 to 3.

The mesogenic groups may be reacted with the polymer as seen in the examples.

When one of the reactive constituents of the mesogenic groups are not reacted with the polymer they are terminated by -H, -CN, -COOR, -OOCR and -OR wherein R is H, alkyl (which is straight chained or branched) having 1 to 12 carbon atoms or aryl such as having from 6 to 12 carbon atoms.

The polymeric vehicle provides a coating binder having a Tg not greater than 60 °C as measured by Differential Scanning Colorimetry (DSC); and, at a thickness of 1 mil (25μm) , the coating binder has a pencil hardness of at least "H" and a reverse impact resistance of at least 30 inch-pounds (3.4J). Films which include coating binder generally will range from 0.05 mil (1.3μm) to 50 mil (1250μm)in thickness, but hardness and impact resistance may vary with the thickness of the film; hence hardness and impact resistance are described at a thickness of 1 mil (25μm).

An important aspect of the invention is when the modified polymer is cross-linked. It may be cross-linked with a cross-linking resin selected from the group consisting of aminoplast resins, polyisocyanate resins, and mixtures thereof; melamine resins are a sub-class of aminoplast resins; optionally, the isocyanate groups of the polyisocyanate resin may be blocked with active hydrogen compounds such as alcohols, phenols, oximes and lactams. In one important embodiment an aminoplast or polyisocyanate resin cross-links a modified polymer which is a a polyol or contains pendant or terminal -COOH or -SH groups. In one important embodiment the polyol has the general formula:

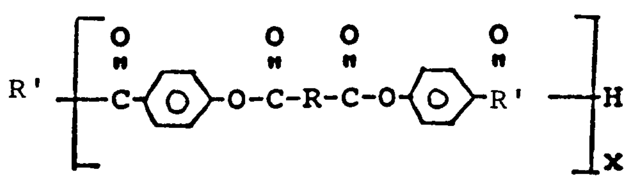

Wherein, x = 1 to 10;
R =

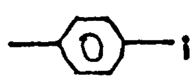

R' =
$O(CH_2)_nO$,
$O[(CH_2)_nO]_m$,

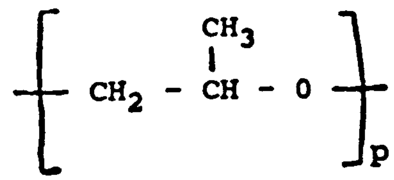

$\{O[(CH_2)_5COO]_pR''''\}_2$, or

$O[R''OOCR'''COO]_pR''O$;

R'' and R'''' = a aliphatic or cycloaliphatic radical having 12 carbon atoms or less;

R''' = aromatic radical having 10 carbon atoms or less, cycloaliphatic radical having 12 carbon atoms or less, or an aliphatic radical having 36 carbon atoms or less;

n = 5 to 16; m = 2 to 200; and p = 1 to 20.

In an alternate embodiment of the invention the modified polymer is a predominately phenolic oligoester polyol which is cross-linked with a melamine or polyisocyanate resin. In this embodiment the modified polymer (the oligoester polyol) is a reaction product of p-hydroxybenzoic acid (PHBA) and a non-liquid crystal linear oligoester diol which is a reaction product of a heated mixture of

(a) phthalic acid (PA), isophthalic acid, terephthalic acid hexahydrophthalic anhydride;

(b) an aliphatic dicarboxylic acid having a carbon chain length of from 4 to 36, such as adipic acid (AA); and

(c) aliphatic primary or secondary diols, the aliphatic chain having from 2 to 23 carbons, such as neopentyl glycol.

A procedure particularly successful in the production of oligoester polyols for this embodiment of the invention involves production of the non-modified linear oligoester polyol resin by reacting the aliphatic dicarboxylic acid having a carbon chain length of from 4 to 36, the aliphatic primary or secondary diol or polyol having the carbon chain length of from 2 to 23, and one or more of the dicarboxylic acids of (a) above. PHBA is then covalently bonded to this non-modified oligoester polyol using p-toluenesulfonic acid (p-TSA); thereby providing the oligoester polyol or modified polymer which cross-links with the melamine or polyisocyanate. The reasons that this procedure is considered particularly successful and preferred are:

(1) it can be used in large scale production; and (2) the use of p-TSA reduces the yield of by-product phenol and raises the yield of the desired modified polymer. In this embodiment, the weight ratio of PHBA to the non-mesogenic portion of the linear diol is in the range of from 20/80 to 60/40.

Another important aspect of the invention arises in cases where the mesogenic groups are bonded to polyester polymers by graft polymerization to prepare modified polymers. In this aspect, non-mesogenic polyester polymers containing reactive groups such as -COOH and -OH are synthesized. The reactive groups serve as sites for grafting.

Especially preferred are grafting sites consisting of -COOH groups. Polyester resins with -COOH groups can be synthesized by using an excess of polyacid monomers over polyol monomers. Alternatively, -OH functional polyester polymers can be provided with -COOH functional groups by reacting them with spacers such as diacids such as adipic, isophthalic or terephthalic acids or with cyclic anhydrides such as phthalic, succinic or maleic anhydrides. It is advantagous in some circumstances to convert -OH groups to -COOH groups because some reactants graft more readily to -COOH groups.

p-Hydroxybenzoic acid, PHBA, is a commonly used component of the mesogenic group in modified polymers. It may be grafted to polyester polymers having -OH or -COOH groups; the latter are preferred. A typical grafting process is shown in Figure 1. In this case the mesogenic groups grafted onto the polymer to form the modified polymer are oligomeric PHBA having the general formula:

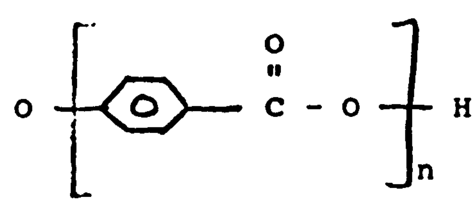

where n = 2 to 8 and preferably the number average degree of polymerization of graft segments is between 2.0 to 6.0. See Tables 13 a-h for mesogenic examples. See Tables 13 a-c (Mono-functional Derivates), 13 d-g (Di-Functional Derivates), 13 h (Miscellaneous Derivatives) for a description of specific mesogenic groups of the invention.

The modified polymer may comprise the entire polymeric vehicle, it may be blended with other polymers and/or with cross-linking resins, or it may be cross-linked by substances to which the film is exposed after application. In cases where the modified polymer is not cross-linked, it should have a number average molecular weight ($Mn_n$) above 7,000 for modified polyester polymers. A preferred range is 10,000 to $10^5$ for polyesters. When the modified polymers undergo chemical reactions after

Table 13 a
Monofunctional Derivatives

M1 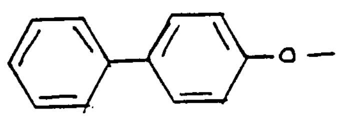

M2 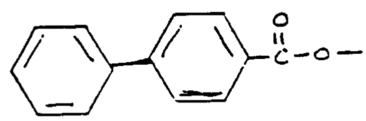

M3 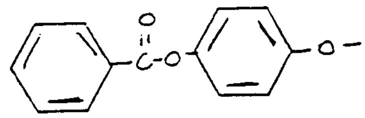

M4 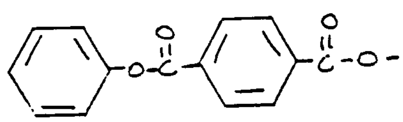

M5 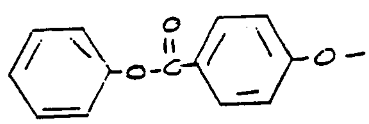

M6 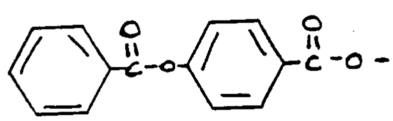

M7 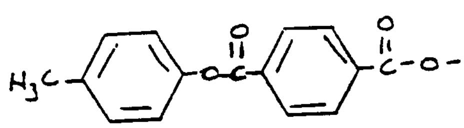

M8 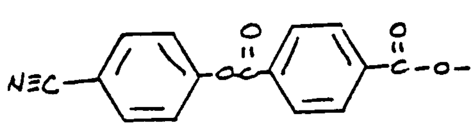

M9 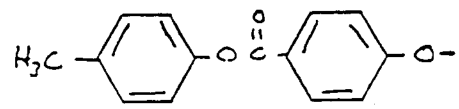

M10 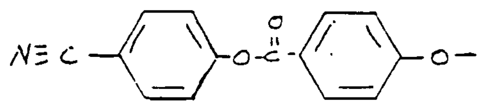

M11 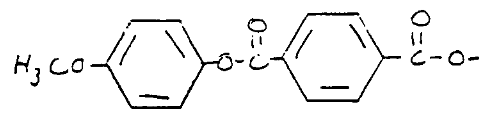

M12 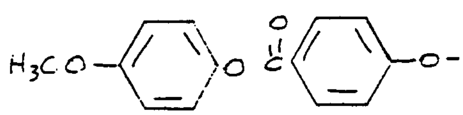

M13 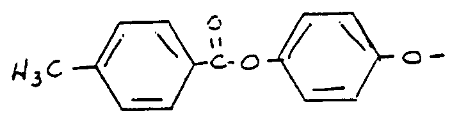

M14 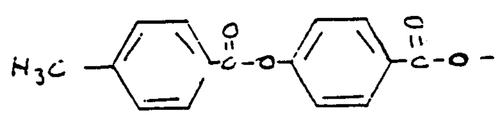

M15 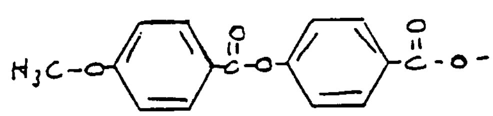

M16 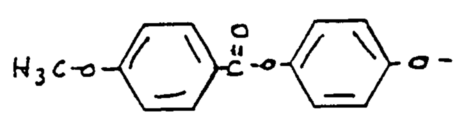

Table 13 b
Monofunctional Derivatives

M17

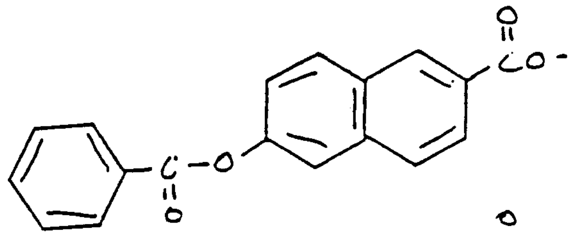

M18

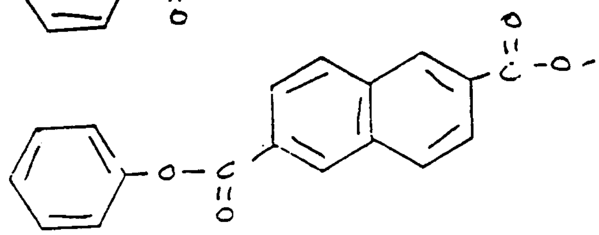

M19

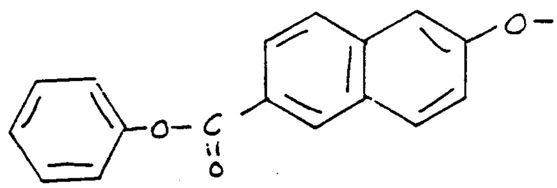

M20

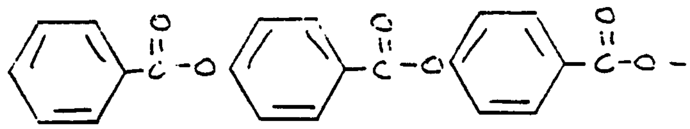

M21

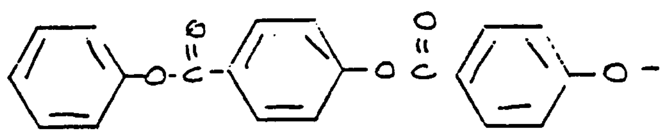

M22

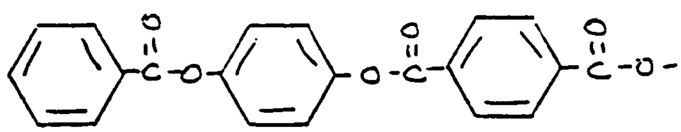

M23

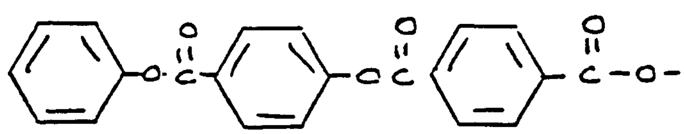

Table 13 c
Monofunctional Derivatives

M24

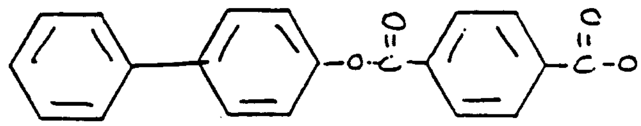

M25

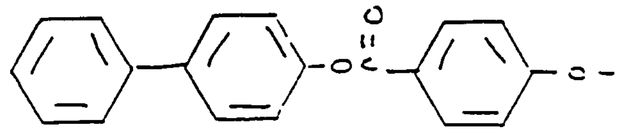

M26

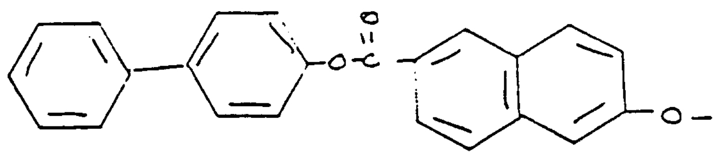

M27

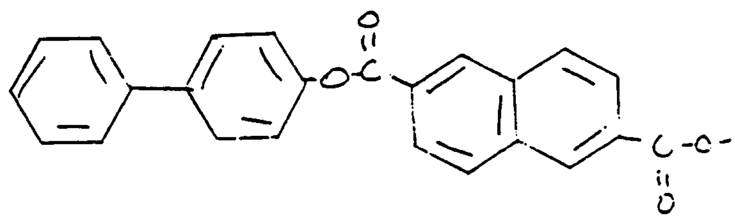

M28

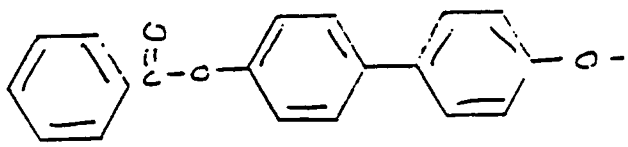

M29

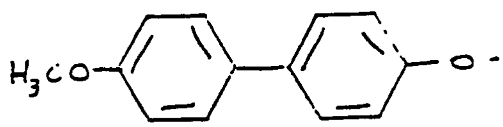

M30

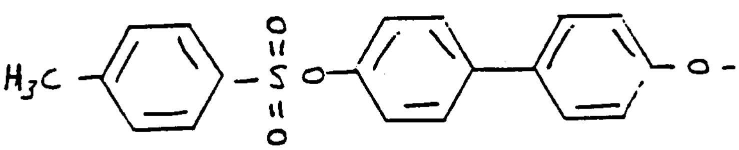

M31

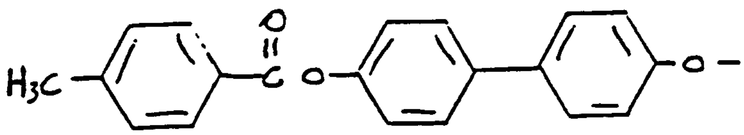

Table 13 d
Difunctional Derivatives

D1

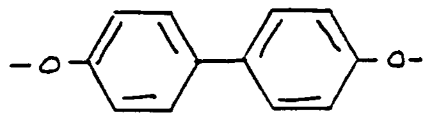

D2

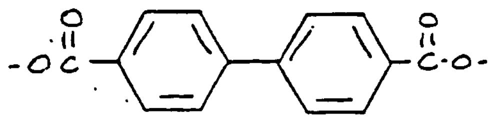

D3

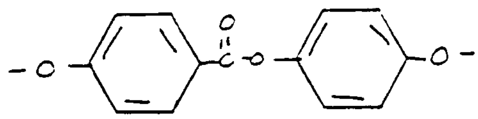

D4

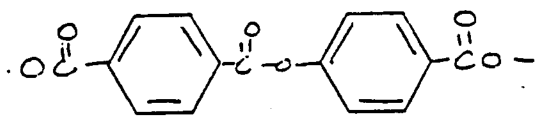

D5

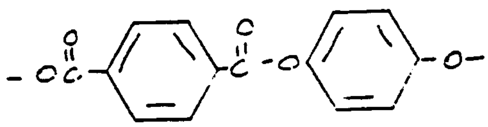

D6

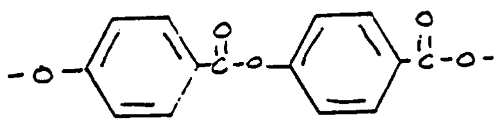

D7

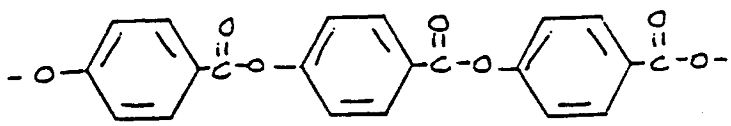

D8

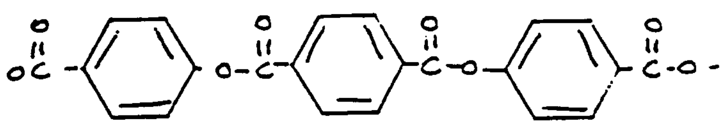

D9

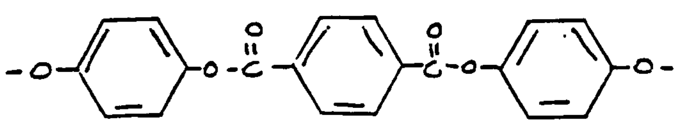

Table 13 e
Difunctional Derivatives

**D10**

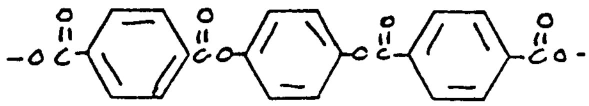

**D11**

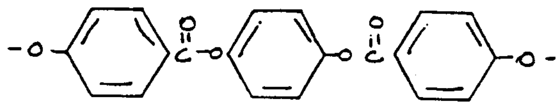

**D12**

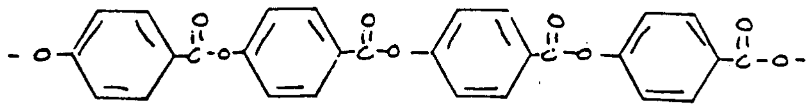

**D13**

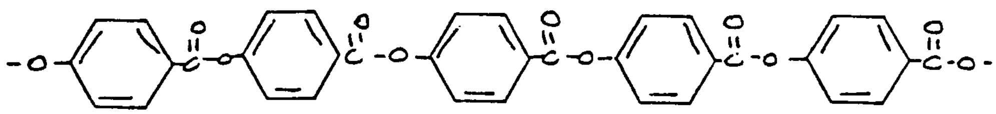

**D14**

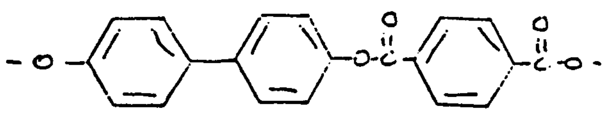

**D15**

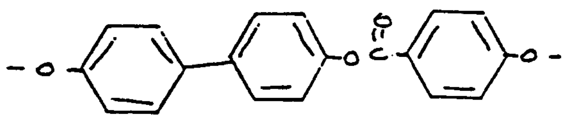

**D16**

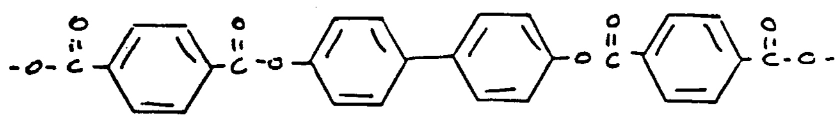

**D17**

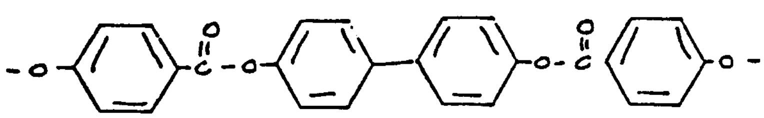

Table 13 F
Difunctional Derivatives

D18

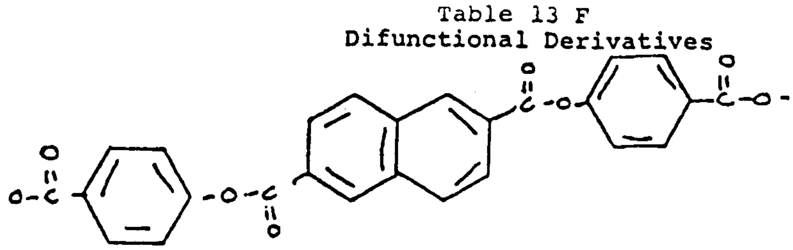

D19

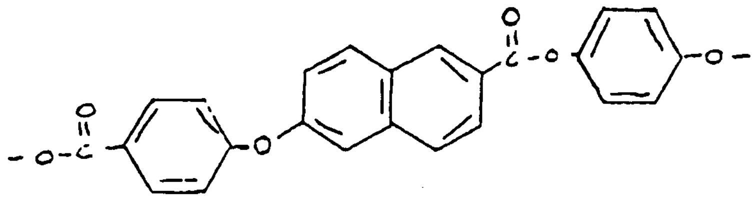

D20

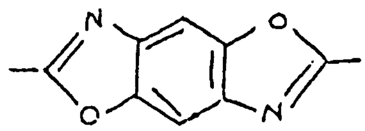

D21

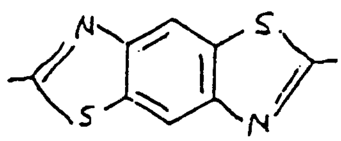

D22

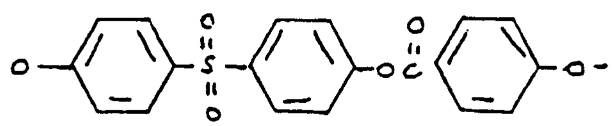

D23

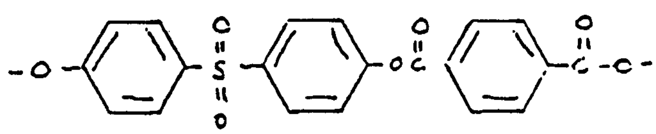

D24

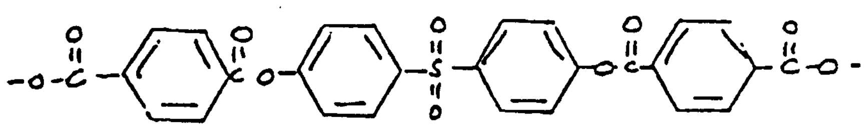

D25

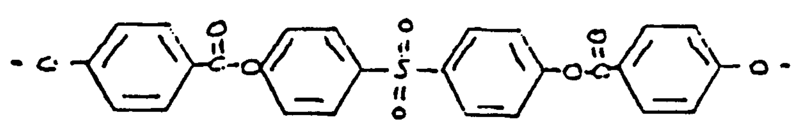

Table 13 G
Difunctional Derivatives

D26

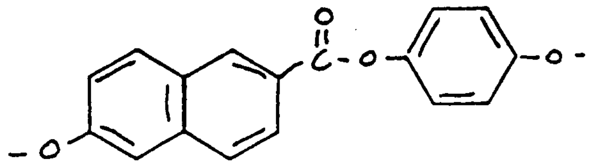

D27

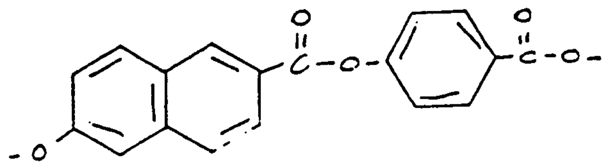

D28

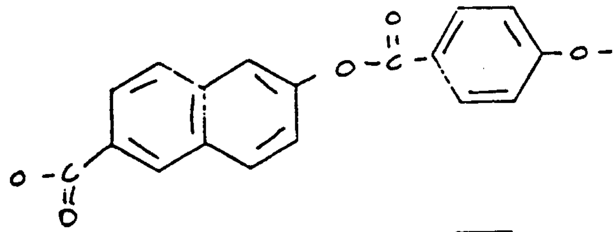

D29

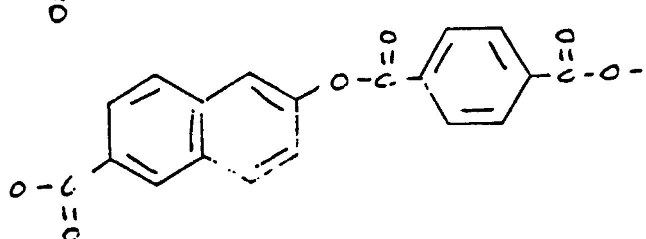

D30

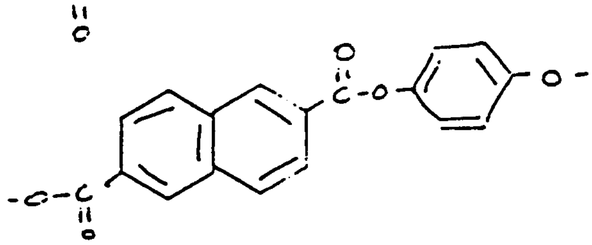

D31

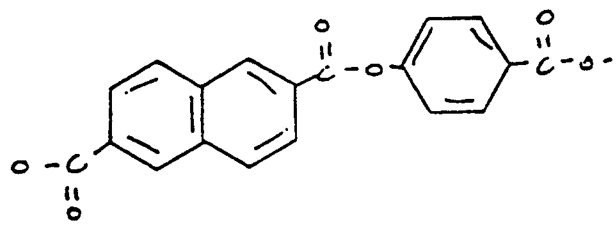

D32

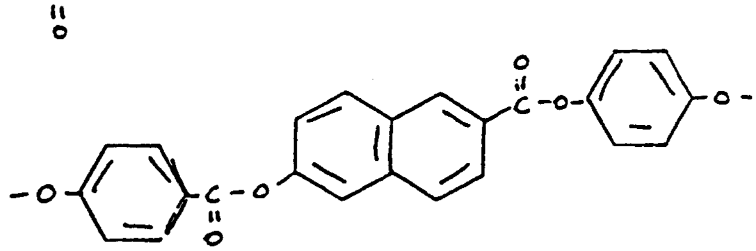

Table 13 H
Miscellaneous Derivatives

Mi1 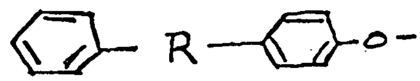

Mi2 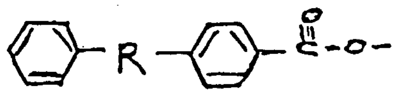

Mi3 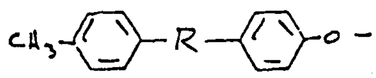

Mi4 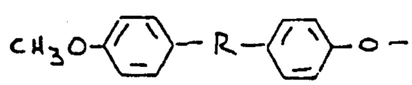

Mi5 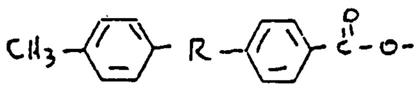

Mi6 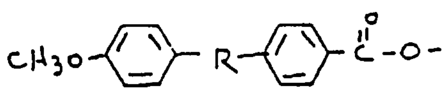

Mi7 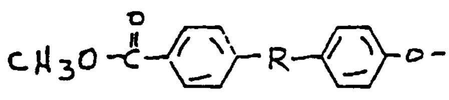

Mi8 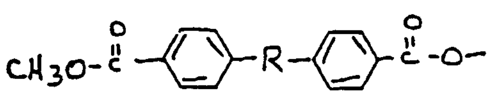

Mi9 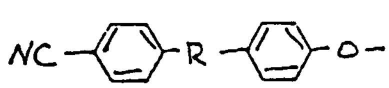

M10 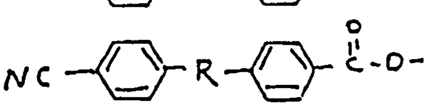

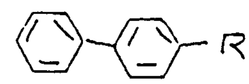 Mi11

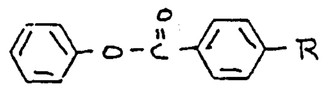 Mi12

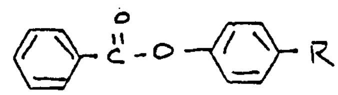 Mi13

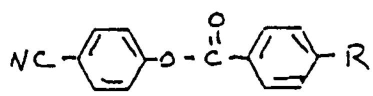 Mi14

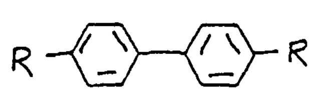 Mi15

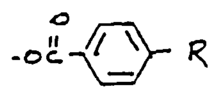 Mi16

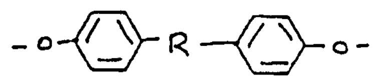 Mi17

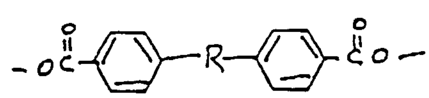 Mi18

application they may have lower $M_n$. A preferred range of $M_n$ is from 500 to 20,000 for cross-linkable modified polyester copolymers. Cross-linking is effective for baked and non-baked films.

If the film is to be baked, the modified polymer and cross-linking resin, such as aminoplasts and blocked isocyanates, may be combined as components of the coating formulation. Reaction of the modified polymer and such cross-linking resins is normally very slow until the coating is applied and baked. When highly reactive cross-linking resins such a polyisocyanate resins are used, it is usually desirable to mix the components within a few hours of the time of application. Such coatings require little or no baking. Cross-linking may also be effected by exposure of the film to reactants, such as oxygen, after application; in such cases baking is optional.

The following examples set forth methods of imparting the desired characteristics to polymeric binders and to films. In these examples the properties of coatings containing modified polymers are compared to those containing similar non-modified polymers in order to demonstrate the improvements of the invention: 1) a lowered solution viscosity, 2) a hard, adherent, flexible film having excellent impact resistance and 3) greatly reduced dry-to-touch time in the case of air-dried coatings.

EXAMPLE 1

This example concerns model alkyd resins made by a synthetic procedure. The example involves grafting oligomeric esters of p-hydroxybenzoic acid (PHBA) or of PHBA/terephthalic acid (TPA) to alkyd resins so that liquid crystalline phases are formed. Here the objective is to demonstrate the usefulness of L-C alkyds.

Materials

Linoleic acid (Emersol 315, Emery Ind. Inc., equivalent weight 288) was dried with anhydrous $Na_2SO_4$. Pyridine (Aldrich) was distilled and dried with anhydrous $Na_2SO_4$. All other materials (Aldrich) were used as received.

Synthesis of Grafted Model Alkyds G1-G5

Synthesis of grafted PHBA-modified alkyds is outlined in Fig. 1.

(A.) Preparation of unmodified alkyd U1.

A low molecular weight model alkyd, U1, with 55% oil length and 22% OH excess was prepared from 25.00 g (0.0868 mol) of linoleic acid, 10.70 g (0.0722 mol) of phthalic anhydride, and 12.61 g (0.094 mol) of trimethylolpropane using the DCC-p-TSA process described by Kangas, S. and Jones, F.N., "Model alkyd resins for higher-solids coatings, I", J. Coat. Technol., 59(744), 89 (1987). DCC is dicyclohexyl carbodiimide. Yield was 85%. The OH value was 56 mg-KOH/g determined by the phthalic anhydride/pyridine method.

(B1.) Modification with succinic anhydride.

Alkyd U1 was heated with succinic anhydride (one mol per equiv OH) in pyridine at 80 °C for 12 hr. The solution was concentrated; the residue was dissolved in $CH_2Cl_2$ and washed with 10% aq. HCl. The $CH_2Cl_2$ layer was concentrated and the residue was vacuum dried at 80 C. Yield of resin was above 90%; acid number was 64 mg-KOH/g.

(B2.) Modification with terephthalic acid (TPA).

A solution of 10.0 g (0.010 equiv) of alkyd U1, 8.51 g (0.050 mol) of terephthalic acid, TPA, 2.27 g (0.011 mol) of DCC and 0.11 g of p-TSA in 150 ml of pyridine was stirred at 25 C for 12 hr. The mixture was filtered to remove DCU and excess TPA. The filtrate was concentrated, dissolved in $CH_2Cl_2$, washed with 10% aq. HCl and concentrated as above. Traces of crystalline material were removed by dissolving the residue in 1/1 pentane/ethyl acetate, cooling in a freezer, filtering, reconcentrating and vacuum drying at 80 C. Yield was 9.62 g of resin; acid number was 62 mg-KOH/g.

(C.) Grafting to form alkyds G1-G5.

The intermediate step of reacting alkyd U1 with succinic anhydride or with TPA is desirable to improve grafting efficiency. This step converts -OH groups of U1 to -COOH groups; grafting to -COOH groups is more efficient. The succinic anhydride modified alkyd was grafted or covalently bonded with PHBA using the DCC-p-TSA/pyridine process. Weight ratios (PHBA/alkyd) of 0.1, 0.2, 0.3 and 0.5 gave alkyds G1 - G4 respectively. For example, the synthesis on alkyd G2 is described:

A solution of 10.0 g (0.0114 equiv) of carboxyl-terminated model alkyd (prepared as described in B1, above), 2.0 g (0.0145 mol) of PHBA, 3.14 g (0.0152 mol) of DCC, and 0.16 g of p-TSA in 120 ml of pyridine was stirred at 25 C for 12 hrs. The product (10.2 g, 85% yield) was isolated essentially as described immediately above in the TPA reaction.

TPA modified alkyd prepared as described in B2 was covalently bonded by a similar process using a weight ratio (PHBA/alkyd) of 0.5 to give alkyd G5. Modification with TPA has the additional advantage of putting half the structure needed for liquid crystal formation into place.

Synthesis of "Random" Model Alkyds R1-R3

A series of random model alkyds R1, R2 and R3 containing 15%, 22% and 27% by weight in the feed were prepared from linoleic acid, phthalic anhydride, trimethylolpropane, and PHBA in a single step by the DCC-p-TSA process. These weight percents correspond roughly to the weight percents of PHBA actually incorporated in alkyds G2, G3 and G4, respectively. For example, preparation of R3 is described:

A solution of 5.50 g (0.0190 mol) of linoleic acid, 2.54 g (0.017 mol) of phthalic anhydride, 2.91 g (0.022 mol) of trimethylolpropane, 4 g (0.029 mol) of PHBA, 12.24 g (0.060 mol) of DCC, and 0.612 g of p-TSA in 200 ml of anhydrous pyridine were mixed in a 250 ml flask for 12 hrs. at 25 C. Alkyd R3 was isolated essentially as described above in the TPA reaction.

Alkyd Structure Characterization

$^1$H-NMR spectra were determined at 34 C using a Varian Associates EM 390 NMR spectrometer with $Me_4Si$ as internal standard. IR spectra were recorded on a Perkin-Elmer 137 spectrophotometer using a 20 weight percent solution in $CH_2Cl_2$.

Differential scanning calorimetry (DSC) was effected with a du Pont model 990 thermal analyzer at a heating rate of 20 C/min using samples that had been vacuum dried at 80 C to constant weight. $T_g$ was assigned as the onset of the endothermic inflection. Clearing points ($T_{cl}$) of L-C phases were assigned as the maxima of the endothermic peaks.

Equivalent weight per carboxyl group was determined by titration of pyridine solution with $KOH/CH_3OH$ to the phenolphthalein end point.

Number average molecular weight ($M_n$), weight average molecular weight ($M_w$), and polydispersity index (PDI = $M_w/M_n$) were measured by gel permeation chromatography (GPC) in tetrahydrofuran using a Waters model 510 pump, a R401 refractive index detector and a model M730 data module; columns were Ultrastyragel 100 A, 500 A, $10^3$ A, and $10^4$ A. Monodisperse polystyrene calibration standards were used.

Optical textures were examined with a Leitz D-6330 polarizing microscope equipped with a Reichert hot stage.

Grafting efficiency (GE%) and average number of PHBA units per COOH were estimated from equivalent weight difference as described in Chen, D.S. and Jones, F.N., "Graft-copolymers of p-hydroxylbenzoic acid, Part I, A general method for grafting mesogenic groups to oligomers", J. Polym. Sci., Polym. Chem. Ed., Vol. 25, pg. 1109-1125 (1987).

Measurement of Viscosity and Tests of Films Properties

Solution viscosity was measured in xylene using an ICI cone and plate viscometer at 25 C. Films were prepared by dissolving or dispersing resins and driers in xylene and casting films on untreated rolled steel panels by a casting bar to give the dry thickness of 0.5 ml.

Dry-to-touch time was measured according to ASTM D1640. Film properties were measured after 7 days of drying at ambient temperature. Reverse impact resistance and pencil hardness were measured according to ASTM D2794 and D3363 respectively; resistance to acetone was measured by the number of double rubs to remove trace of film with paper tissue after the dropping of acetone on the dry film. Extractability was measured by subjecting cured films to 8 hr. in a Soxhlet extractor using tetrahydrofuran.

The equivalent weight per carboxyl, $M_n$, $M_w$, PDI, and number average PHBA units per carboxyl of the control alkyd and the PHBA-grafted alkyds are shown in Table 1. As PHBA content increases equivalent weight, $M_n$, and $M_w$ increase in proportion to the mass of PHBA grafted but no more; PDI remains nearly constant. These results indicate that little or no coupling of molecules occurs during grafting. Data for "random" alkyds R1 - R3 are shown in Table 2.

Table 1.

Characterization of ungrafted alkyd U1 and PHBA-grafted G1 - G4:

| | U1 | G1 | G2 | G3 | G4 |
|---|---|---|---|---|---|
| wt ratio in feed PHBA/oligomer | ___ | 0.1 | 0.2 | 0.3 | 0.5 |
| Eq. wt. per COOH (g/eq.) | 876* | 916 | 1014 | 1065 | 1080 |
| wt% of PHBA in resin | ___ | 8.3 | 14.5 | 19.4 | 28.4 |
| GE% | ___ | 90 | 89 | 85 | 77 |
| units of PHBA GRAFTED PER COOH | ___ | 0.4 | 1.15 | 1.58 | 1.96 |
| $M_n$ | 1425** | 1460 | 1582 | 1717 | 1935 |
| $M_w$ | 2086** | 2287 | 2418 | 2689 | 2910 |
| PDI | 1.46 | 1.57 | 1.53 | 1.57 | 1.50 |
| $T_g$(C) | -29 | -24 | -20 | -15 | -10 |
| $T_{cl}$(C) | ___ | ___ | ___ | ___ | 190 |

*____After grafting with succinic anhydride.
**____Before grafting with succinic anhydride.

Table 2.

Properties of "random" alkyds:

| | $R_1$ | $R_2$ | $R_3$ |
|---|---|---|---|
| wt% of PHBA in feed | 15 | 22 | 27 |
| $M_n$ | 1650 | 1720 | 1600 |
| $M_w$ | 2772 | 2597 | 2512 |
| PDI | 1.68 | 1.51 | 1.57 |
| $T_g$,C | -23 | -18 | -12 |

IR spectra of the PHBA grafted alkyds are characterized by two sharp peaks at 1610 and 1510 $cm^{-1}$. $^1$H-NMR spectra show complex peaks in the range of 7.0 - 8.0 ppm. These spectral features are characteristic of PHBA grafted polymers. IR of random alkyds R1 - R3 also showed two sharp peaks at 1610 and 1510 $cm^{-1}$.

Onset $T_g$ (by DSC) of the unmodified alkyd U1 was -29 C; PHBA-grafted alkyds G1 - G5 had onset $T_g$s at -24, -20, -15, -10, and +17 C, respectively. DSC traces of the alkyd U1 and grafted alkyds G1 - G3 were

featureless except for the inflection assigned to $T_g$ and the broad exothermic peaks due to thermal cross-linking. DSCs of alkyds G4 and G5 had sharp endothermic peaks at 190 and 225 C, respectively; these peaks are attributed to the clearing temperature ($T_{cl}$) of the L-C phases. The DSC thermogram of alkyd G4 is shown in Figure 2. DSC thermograms of random alkyds R1 - R3 are similar to those of alkyds U1, G1, G2, and G3, no endothermic peaks appeared. $T_g$s of R1, R2, and R3 were -23, -18, and -12 C, respectively.

Optical textures of the dried films were examined under a polarizing microscope with a hot stage. Films of alkyds U1, G1 - G3 and R1 - R3 had no visible L-C phases. However, L-C (mesomorphous) phases were clearly visible in films of alkyds G4 and G5. The L-C phase in films of alkyd G4 disappeared when the specimen was heated above 190 C and reappeared quickly as it was cooled to around 190 C.

Viscocity and Appeance of Solutions and Dispersions

Alkyds U1, G1 - G3 and R1 - R3 appeared soluble in commercial xylene at all concentrations. In contrast, alkyds G4 and G5 formed stable, opaque dispersions in xylene at concentrations of 5 wt% or higher.

The relationship between viscosity and PHBA content of 70/30 (w/w) mixtures of alkyds G1 - G4 and R1 - R3 in xylene are shown in Figure 3. Viscosity increases with increasing PHBA content for alkyds G1 - G3, but it drops sharply for alkyd G4. This drop is presumably associated with the tendency of alkyd G4 to form non-aqueous dispersions. On the other hand, "random" alkyd R3, whose overall composition is similar to that of G4, has the highest viscosity in the series. The solids/viscosity relationship of alkyd G4 is shown in Figure 4.

Dry Time and Film Properties

As shown in Table 3, all PHBA-grafted alkyds dried faster than unmodified alkyd U1, and drying speed increased with PHBA content. Acceleration of drying is by far the greatest for L-C alkyds G4 and G5. The latter dried very rapidly (in 5 minutes). As shown in Table 4, the drying speed of "random" alkyds R1 - R3 also increased with the PHBA content, but the effect was much smaller than observed for their grafted counterparts G2 - G4.

Coatings made from all alkyds had good adhesion. Films made from alkyds U1, G1 G3 and R1 - R3 were glossy and transparent, while film from alkyds G4 and G5 were glossy and translucent.

As shown in Table 3, seven-day old films of PHBA-grafted alkyds G1 - G5 had better reverse impact resistance, were harder, and had slightly better acetone resistance than alkyd U1. All these film properties are favored by higher PHBA content. Alkyd G4 had the best balance of properties, while alkyd G5 was the hardest.

Table 3

| Dry-to-touch times and film properties of U1 and grafted alkyds G1 - G5: | | | | | | |
|---|---|---|---|---|---|---|
| Alkyd | U1 | G1 | G2 | G3 | G4 | G5 |
| Dry time* | 10D | 5D | 7H | 5.5H | 1H | 5M |
| film properties | | | | | | |
| hardness | 5B | 3B | 2B | B | H | 2H |
| reverse impact strength (in-lb) | 35 (4.0J) | 35 (4.0J) | 40 (4.5J) | 65 (7.3J) | 80 (9.0J) | 45 (5.1J) |
| crosshatch adhesion | 100% | 100% | 100% | 100% | 100% | 100% |
| resistance to acetone (rubs) | 3 | 5 | 5 | 6 | 8 | 8 |
| film appearance | GL TP | GL TP | GL TP | GL TP | GL TL | GL TL |

* dryers = 0.05% Co-napthenate + 0.15% Zn-naphthenate by weight per resin.
D = day, H = hour, M = minute.
GL = glossy, TP = transparent, TL = translucent.

Hardness and solvent resistance of films made from "random" alkyds R1 - R3 improved with increasing PHBA content (Table 4). On the other hand, impact strength decreased with increasing PHBA content.

Table 4

| Dry-to-touch times and film properties of "random alkyds" R1 - R3: | | | |
|---|---|---|---|
| | R1 | R2 | R3 |
| Dry time* | 5 H | 4.5 H | 3.5 H |
| Film Properties | | | |
| Hardness | HB | HB | H |
| reverse impact strength (in-lb) | 80(9.0J) | 45(5.1J) | 20(2.3J) |
| crosshatch adhesion | 100% | 100% | 100% |
| Resistance to acetone (number of rubs) | 3 | 4 | 4 |
| film appearance | GL, TP | GL, TP | GL, TP |

* dryers = 0.05% Co-naphthenate + 0.15% Zn-naphthenate per resin.
H = hour, GL = Glossy, TP = Transparent.

The data of the above example indicates the improvements made in an alkyd coating and resin when mesogenic groups are covalently bonded to the alkyd.

EXAMPLE 2

L-C telechelic oligoester diols are prepared and cross-linked with a resin, preferably a melamine resin, to provide the coatings of this example. After baking, the coatings retained their L-C character which provided the improved characteristics to the coatings. The properties of the coatings were tested on cold-rolled steel panels.

The ratio of L-C telechelic oligoester diols to resin should be in the range of 95:5 to 50:50, and is preferably about 70:30. The L-C oligoester diols were prepared by reacting 4,4'-terephthaloyldioxydibenzoyl (TOBC) with molar equivalents of aliphatic diols. The general formula is as follows:

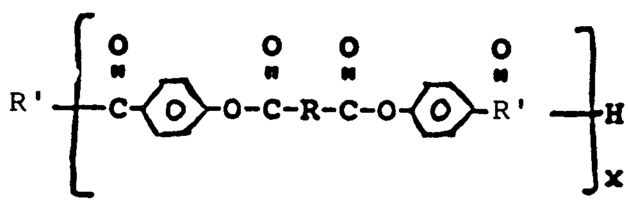

Wherein, x = 1 to 10;
R =

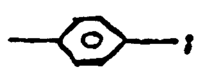

R' =
$O(CH_2)_nO$,
$O[(CH_2)_nO]_m$,

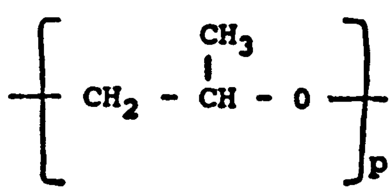

$\{O[(CH_2)_5COO]_pR''''\}_2$, or
$O[R''OOCR'''COO]_pR''O$;
R'' and R'''' = a aliphatic or cycloaliphatic radical having 12 carbon atoms or less;
R''' = aromatic radical having 10 carbon atoms or less,
cycloaliphatic radical having 12 carbon atoms or less,
or an aliphatic radical having 36 carbon atoms or less;
n = 5 to 16; m = 2 to 200; and p = 1 to 20.

The value of n, sometimes referred to as spacer length, should preferably be in the range of 5 to 12. When n = 5 or less, there is poor miscibility in forming enamels and at higher n values mixing becomes increasingly difficult.

Coatings were prepared by mixing the L-C oligoester diols or polyols after solubilization with melamine or polyisocyante resin in the presence of an accelerator. The coatings were cast on panels and baked at cross-linking temperatures for testing. L-C oligoester polyols may be prepared by replacing part of the aliphatic diol with a triol or tetrol.

Testing.

Proton NMR spectra were recorded at 34C on a Varian Associates EM-390 90 MHz NMR spectrometer, using $Me_4Si$ as internal standard. IR spectra were recorded at 25C on a Mattson Cygnus FT-IR using films cast on NaCl plates with polystyrene as standard. A DuPont model 990 thermal analyzer was used for differential scanning calorimetry (DSC) at heating rates of 10/min. After the crystalline-mesophase transition temperature ($T_m$) was reached, the temperature was held for 1 min. before the scan was resumed. Capillary melting points were used to confirm the thermal data. $M_n$ and $M_w$ were determined by gel-permeation chromatography (GPC) with a Waters model 520 pump equipped with a model R401 refractive index detector, a model M730 data analyzer, and Ultrastragel 100 A, 500 A, 1000 A, and 10000 A columns. Mass analysis was performed. A Leitz Labolux microscope equipped with a polarizing filter was used for optical micrographs at 500x magnification; diols were observed immediately after heating to $T_m$, enamels were observed at room temperature.

Seven samples of the L-C oligoester diols were prepared and designated 1a to 1g, inclusive and, for comparison, seven samples of non L-C oligoester diols were prepared and designated 2a to 2g, inclusive, having corresponding n values and made into amorphous coatings. These corresponding n values are indicated, as follows:

| | 1a<br>2a | 1b<br>2b | 1c<br>2c | 1d<br>2d | 1e<br>2e | 1f<br>2f | 1g<br>2g |
|---|---|---|---|---|---|---|---|
| n = | 4 | 5 | 6 | 7 | 8 | 10 | 12 |

In the preparation of the products, reagent materials were used and the steel panels which were coated were commercially available cold-rolled steel panels sold under the trademark Bonderite 1000 and having a size of 3 inches (76 mm) by 9 inches (229 mm) by 24 GA.

Preparation of 1a-g.

TOBC was prepared from terephthaloyl chloride and p-hydroxybenzoic acid (PHBA) as described by Bilibin et al at Polymer Science USSR (1984) 26, 2882. TOBC (0.005 mol), diol (0.025 mol), and diphenyl oxide (10 mL) were placed in a 100 mL single-necked round-bottomed flask equipped with a magnetic stirring bar, a distillation adapter, and a septum. The flask was flushed with argon for 15 min., and was stirred and heated in an oil bath at 190-200C under slow argon flow. The reaction mixture became homogeneous after 5 minutes and the evolution of HCl was observed. The reaction was continued until the evolution of HCl was no longer detectable by moistened litmus paper (4-5 hr.). The hot reaction mixture was poured cautiously into 100 mL of toluene and cooled. The oily residue that separated was dissolved in $CH_2Cl_2$, washed 3 times with water, and dried over anhydrous $MgSO_4$. The solution was filtered and concentrated using a rotary evaporator. The residue was precipitated from methanol. Yields were 87-92% based on TOBC $^1H$ NMR for 1c in $CDCl_3$; 1.4 (broad), 3.6 (triplet), 4.2 (multiplet), 6.8 (doublet), 8.1 ppm (multiplet). FT-IR for 1c: 3420, 2960, 2938, 1720,1606, 1512 $cm^{-1}$. L-C diols 1a-g had similar spectra.

For comparison to the L-C oligoester diols of this example, non-L-C oligoester diols were prepared from diols in which R = $(CH_2)_4$ and made into amorphous coatings.

Preparation of 2a-g.

The diacid chloride precursor was prepared by substituting adipoyl chloride for terepthaloyl chloride in Bilibin's procedure. Reaction of this precursor with diols was carried out as described for 1a-g except that the products were not poured into toluene. Diols 2a-g were resinous solids which solidified on standing.

Enamel formation.

Oligoester diols 1b-g and 2a-g, HMMM (hexakis (methyloxy-methyl) melamine resin), methyl isobutyl ketone (MIBK), as a solvent and p-toluenesulfonic acid (p-TSA) as a catalyst were thoroughly mixed in a 70/30/30/0.3 wt. ratio. The solution was cast on cold rolled steel panels and baked at 150C for 30 minutes. Less soluble L-C diols 1e-g were melted, dispersed in solvent, mixed with HMMM and immediately cast as films.

Oligoester Diols. The physical properties of 1a-g obtained by GPC, DSC and polarizing optical microscopy are summarized in Table 5.

Table 5

| Physical Properties of 1a-g | | | | | | | | |
|---|---|---|---|---|---|---|---|---|
| diol | n | $M_{Th}$[a] | Mn | $M_w$ | PDI | $T_m$ | $T_i$ | texture |
| 1a | 4 | 550 | 480 | 720 | 1.5 | 110 | 204 | -- |
| 1b | 5 | 578 | 530 | 740 | 1.4 | 58 | 207 | smectic |
| 1c | 6 | 606 | 570 | 810 | 1.4 | 75 | 349 | smectic |
| 1d | 7 | 634 | 610 | 850 | 1.4 | 47 | 300 | smectic |
| 1e | 8 | 662 | 650 | 910 | 1.4 | 82 | 302 | smectic |
| 1f | 10 | 718 | 680 | 950 | 1.4 | 80 | 231 | nematic |
| 1g | 12 | 774 | 720 | 1130 | 1.4 | 90 | 220 | smectic |

[a]theoretical molecular weight for x = 0

$^1$H NMR and 1R spectra were consistent with structures 1a-g and 2a-g assuming that partial chain extension occurred as indicated by GPC. Low $M_n$ values and slightly high H analyses suggest that small amounts of unreacted $HO(CH_2)_nOH$ were present in the products.

The L-C nature of 1a-g was demonstrated by DSC (Fig. 5) in which two first order transitions were observed; the crystalline-mesophase transition temperature ($T_m$), and the mesophase-isotropic transition temperature ($T_i$). The thermal data revealed an odd-even spacer effect for $T_m$. Smectic-nematic transitions were not evident in the DSC.

In contrast, diols 2a-g were apparently not L-C materials. Only one first order transition was observed by DSC.

The mesophases of 1a-g were observed in polarized optical micrographs taken immediately after melting the sample. Textures were identified by comparing appearance with published micrographs. See: Noel, Polymeric Liquid Crystals, Plenum Press, New York, (1984). A nematic texture is observed for 1f, while more highly ordered smectic textures are observed for 1b-e and 1g. Crystals were observed by microscopy for diols 2a-g.

Cross-linked Enamels. Diols 1b-g and 2a-g were cross-linked with HMMM at 150C, which falls within the temperature range at which 1b-g are liquid crystalline. Enamel formation of 1a was nearly impossible because of its poor miscibility. The properties of the cross-linked enamels are summarized in Table 6.

Table 6

| Properties of Enamels Prepared from 1b-g and 2a-g. Diol: HMMM:p-TSA 70:30:0.3 by wt., cure cycle 150/30 min. | | | | | | | |
|---|---|---|---|---|---|---|---|
| | mesogenic samples | | | | | | controls |
| | 1b | 1c | 1d | 1e | 1f | 1g | 2a-g |
| spacer length (n) | 5 | 6 | 7 | 8 | 10 | 12 | 4-12 |
| reverse impact (in-lb) | 80 (9.0J) | 50 (5.6J) | 80 (9.0J) | 50 (5.6J) | 50 (5.6J) | 55 (6.2J) | 8-15 (0.9 - 1.7J) |
| direct impact (in-lb) | 80 (9.0J) | 50 (5.6J) | 80 (9.0J) | 50 (5.6J) | 50 (5.6J) | 50 (5.6J) | 10-15 (1.1 - 1.7J) |
| pencil hardness (ASTM-D 3363) | 6H | 6H | 5H | 6H | 5H-6H | 6H | H-2H |
| adhesion[a] (ASTM-D 3363) | 5B | 5B | 5B | 5B | 5B | 5B | 5B |
| acetone rubs (double rubs) | 200 | 200 | 200 | 200 | 200 | 200 | 200 |
| flexibility (ASTM-D 522) | 100% | 100% | 100% | 100% | 100% | 100% | 100% |
| dry film thick.[b] | 0.5 | 0.5 | 0.5 | 0.5 | 0.5 | 0.5 | 0.5 |
| T[c] | 17 | 35 | 23 | 16 | 15 | 22 | 17-28 |
| appearance | transparent, glossy | | | | | | |

[a]5B is 100% cross-hatch adhesion;
[b]units are 1/1000 in.;
[c]onset of transition, determined by DSC.

As shown in Table 6 , all enamels had excellent adhesion, solvent resistance, and flexibility. The L-C enamels were far superior to control enamels in both hardness (5H-6H vs. H-2H) and impact resistance (50 (5.6J) to 80(9.0J) in-lb vs. 8 (0.9J) to 15 (1.7J) in-lb). The odd spacers 1b and 1d afforded the best properties. Spacer variations did not measurably affect enamel properties in the control oligoesters.

DSC thermograms of the cross-linked enamels revealed onset of glass transitions ($T_g$) ranging from $T_g$ 15 to 35 for L-C enamels 1b-g and amorphous enamels 2a-g. An odd-even pattern was not observed in either type.

Polarized optical micrographs revealed L-C regions in the cross-linked enamels of 1b-g. Enamels of 2a-g appeared amorphous. IR spectra of the baked L-C and amorphous enamels had peaks attributable to unreacted OH groups at 3420 $cm^{-1}$ (OH stretch) and at 1271 $cm^{-1}$ (OH bend).

In summary, the method used to make oligoester diols 1a-g was adapted from Bilibin's method for making chain L-C high polymers by using a five-fold excess of $HO(CH_2)_nOH$. Spectral, chromatographic and mass analytical evidence all indicated that the expected products were obtained from the adapted process.

GPC and analytical data suggested that the structures with x = 1 and x = 2 predominate; smaller amounts of structures with x > 1 and of $HO(CH_2)_nOH$ are probably present in 1a-g and 2a-g.

The thermal behavior of 1a-g observed by DSC (Figure 5) confirms the presence of mesophases and is typical of low molecular weight liquid crystals. The odd-even effect is of interest because of its direct affect on the physical properties of the L-C diols. The lower $T_m$ for 1b and 1d is consistent with the higher entropy of activation for crystallization of odd-n spacers, demonstrated in several main chain L-C polymers, Ober et al, Advances in Polymer Science, Liquid Crystal Polymers I, Springer-Verlag (1984), Vol. 59. The apparent absence of nematic-smetic transitions in the DSC suggests the observed morphology exists for the entire mesophase.

The nematic texture of oligomeric L-C diol 1f is the same as reported for the homologous main chain L-C high polymer, Lenz, Journal Polymer Science, Polymer Symposium (1985) 72, 1-8.

Oligomeric diols 1b-d were soluble in MIBK and were miscible with the HMMM cross-linker; films were readily cast. Higher melting diols 1e-g were less miscible, but the consistently good film properties indicate that adequate mixing was achieved. Mixing of diol 1a with HMMM was inadequate to produce uniform films.

Enamels made from odd-n L-C diols 1b and 1d had better impact resistance than those made from even-n diols. This effect may be attributed to an odd-even effect, although other variables may be involved.

The enhanced properties of the L-C diol enamels are not simply explainable by the monomer raising the $T_g$ of the coating. In fact, $T_g$s of the cross-linked enamels of 1b-g are abnormally low for hard coatings, and are similar to the much softer control enamels.

EXAMPLE 3

A non-L-C linear oligoester diol is prepared by heating a mixture of phthalic acid (PA), adipic acid (AA) and neopentyl glycol (NPG). The reaction of the mixture is effected under $N_2$ at 230C with removal of $H_2O$ until the acid number was less than 10 mg KOH/g. The sum of the mols of acids should be less than the mols of diols and the ratio should be in the range of 1:2 to 1:1.1. A particular example of a mixture of PA, AA and NPG at a mol ratio of 1:1:3 was highly satisfactory.

A mixture of the diol or polyol, PHBA, an acid catalyst and particularly p-TSA and solvent was heated under $N_2$ in a 3-neck flask equipped with stirrer, Dean-Stark trap, condenser and thermometer. The PHBA was in substantially pure form so as not to affect catalytic action. The PHBA/diol or PHBA/polyol weight ratio varied from 20/80 to 60/40, but the preferred ratio is about 40/60; 0.2 weight % of p-TSA was used as an acid catalyst to provide a predominantly phenolic L-C oligoester diol or polyol. About 10 weight % of solvent was used; the amount was adjusted to maintain the temperature in the range Of 210°C to 250°C, and preferably in the range of 227 to 233°C. In an actual preparation the temperature was held at 230 +/- 3C. Distillate (cloudy $H_2O$) was collected in the Dean-Stark trap during 9 to 11 hr. The reaction mass was cooled to 115C, and MIBK was added to yield a solution (20/80 PHBA/diol ratio) or suspension (other PHBA/diol ratios) of the crude L-C polyol. A preferred solvent is "Aromatic 150" sold by Exxon.

It is important that the acid catalyst be used and that the temperature be controlled to provide the L-C predominately phenolic oligoesters of the invention. Likewise, it is important that the PHBA be used in the weight ratio range specified to give the L-C diols desired.

The linear oligoester diol was heated with salycilic acid and with MHBA using a similar procedure to yield modified polyols. 60% to 80% of theoretical distillation was obtained.

Purification.

The crude L-C polyols made from 20/80 and 30/70 PHBA/diol ratios were concentrated and dissolved in $CH_2Cl_2$. The solution was washed 5 times with $H_2O$, dried with $Na_2SO_4$, and concentrated on a rotary evaporator. The residues were heated at 130C to constant weight. The crude L-C polyols made from 40/60 to 60/40 ratios were purified similarly but were not washed with water. They were heated at about 80C under vacuum on a rotary evaporator to remove small amounts of volatile, crystalline material.

Enamel preparation.

Solutions or mixtures of L-C polyol, HMMM and p-TSA in a 75/25/0.25 weight ratio were cast on cold-rolled panels and baked at 175C for the specified time. Dry film thicknesses were 20 to 25 mm.

Characterization and testing.

1R spectra were recorded using a Perkin-Elmer 137 NaCl-prism spectrophotometer. A DuPont model 990 thermal analyzer was used for differential scanning calorimetry (DSC) at heating rates of 10/min. After the crystalline-mesophase transition temperature ($T_m$) was reached, the temperature was held for 1 min. before the scan was resumed. Capillary melting points were used to confirm the thermal data. $M_n$ and $M_w$ were determined by gel-permeation chromatography (GPC) with a Waters model 520 pump equipped with a model R401 refractive index detector, a model M730 data analyzer, and Ultrastragel 100 A, 500 A, 1000 A and 10000 A columns. Mass analysis was performed. A Leitz Labolux microscope equipped with a polarizing filter was used for optical micrographs at 500x magnification; L-C polyols were cast on glass slides and were dried and observed at 25C, and enamels were baked at 175C for 20 minutes on the glass slides.

Hydroxyl numbers were determined by the pyromellitic dianhydride/imidazole method. See: Demarest, B.O.; Harper, L. E. Journal of Coating Technology 1983, 55(701), 65-77. Impact resistance and pencil hardness were tested according to ASTM-D 2793 and ASTM-D 3363, respectively. Solvent resistance was tested by spotting films with methyl ethyl ketone. Potentiometric titration in DMF indicated that a substantial

fraction of phenolic groups are present in the oligomers, but it has not yet been feasible to reproducibly obtain quantitative results because precipitate formed during titration.

This preparation yields PHBA-modified oligomers, apparently with side reactions. The odor of phenol was barely detectable in the products, indicating that little phenol had been formed. p-TSA catalyst plays a crucial role. When p-TSA was not used in the 30/70 PHBA/diol reaction only 75% of theoretical distillate was collected, and the product smelled strongly of phenol. Solvent also plays an important role by helping control temperature and by facilitating removal of water. If desired, the products can be purified as described to remove small amounts of unreacted PHBA and possibly of phenol.

Modification of the PA/AA/NPG diol with salicylic and m-hydroxybenzoic acids apparently did not proceed as smoothly as the modification with PHBA. No liquid crystals could be detected in the products by polarizing microscopy.

Potentiometric titration and infrared spectra (peak at 3400 $cm^{-1}$) indicate that phenolic end groups predominate in the product oligomers.

Molecular weights determined by GPC are provided in Table 7. Also provided are rough estimates of the average number of PHBA units per number average molecule. These estimates were obtained by multiplying product $M_n$ by the weight fraction of PHBA charged and dividing the result by 120, the molar mass of PHBA minus water.

Table 7

| Gel Permeation Chromatography of Polyols | | | | | |
|---|---|---|---|---|---|
| PHBA/diol wt. | ratio mol | $M_n$ | $M_w$ | $M_w/M_n$ | avg PHBA residue/molecule |
| 0/100 | -- | 1200 | 2000 | 1.7 | -- |
| 20/80 | 2.1/1 | 1400 | 2400 | 1.7 | 2.3 |
| 30/70 | 3.6/1 | 1100 | 1900 | 1.7 | 2.8 |
| 40/60 | 5.8/1 | 970 | 1600 | 1.6 | 3.2 |
| 50/50 | 8.8/1 | 870 | 1400 | 1.7 | 3.6 |
| 60/40* | 13/1 | 830 | 1400 | 1.7 | 4.1 |

*Filtered to remove a small fraction of THF-insoluble material.

The L-C character of PHBA-containing oligomers was demonstrated by polarizing microscopy as indicated in Table 8.

DSC data in Table 8 indicate that $T_g$ increases with increasing PHBA/diol ratios except for the 60/40 PHBA/diol ratio.

Table

| Differential Scanning Calorimetry and Polarizing Microscopy of Polyols | | | | | | |
|---|---|---|---|---|---|---|
| PHBA/diol ratio | 0/100 | 20/80 | 30/70 | 40/60 | 50/50 | 60/40 |
| $T_g$(C)<br>Appearance, 500x | -10<br>clear | 7<br>a few spots | 14<br>L-C | 19<br>L-C | 27<br>L-C | 14<br>L-C |

Enamel Coatings Properties.

Clear coatings were formed by cross-linking the PHBA-modified oligomers with a standard melamine resin. Baking at 175C was necessary to obtain optimal properties. The cured films were nearly transparent and glossy except for films made from 60/40 PHBA ratio L-C polyol. Adhesion was excellent.

The outstanding feature of enamels made from 40/60 to 50/50 PHBA/diol ratio L-C polyols is that they are both very hard and very impact resistant as shown in Table 9.

Table 9

| Impact Resistance and Pencil Hardness of Baked Enamels | | | | | | |
|---|---|---|---|---|---|---|
| PHBA/diol ratio | 0/100 | 20/80 | 30/70 | 40/60 | 50/50 | 60/40 |
| Baking Time (min) at 175C | | | | | | |
| 20 | *(HB) | p(H) | p(H) | p(3H) | p(4H) | f(5H) |
| 40 | *(HB) | p(H) | p(H) | p(3H) | p(4H) | f(5H) |
| 60 | *(HB) | f(H) | p(2H) | p(4H) | f(5H) | f(6H) |

p: passes 80 in-lb reverse impact test;
f: fails;
*: appears to pass but cracks after standing several days.

The enamels described in Table 9 with pencil hardness of 3H to 6H had excellent solvent (methyl ethyl ketone) resistance.

The salycilic acid modified oligomers did not cure at 175C. The MHBA modified oligomers cured at 175C to give hard films, but all failed the 80 in-lb impact resistance test.

Polarizing micrographs showed clear evidence of the presence of birefringent phases in enamel films made from polyols modified by 30 percent or more of PHBA. L-C regions were not visible in cured films made from the PA/AA/NPG polyol or from the MPHA-modified enamels.

The results of the above experiments indicate that mesogenic groups substantially enhance a polymer resin's coating quality. Grafting oligomeric segments derived from PHBA or TPA/PHBA onto coating resins yields resins that contain liquid crystalline (L-C) phases. These phases impart at least three benefits: "solution" viscosity is reduced by the formation of non-aqueous dispersions, dry-to-touch times are sharply reduced, and films are both hardened and toughened. Imparting L-C characteristics to a resin minimizes the hardness/impact resistance tradeoff necessary with non-modified coating resins.

Although the invention has been described with regard to its preferred embodiments, it should be understood that various changes and modifications as would be obvious to one having the ordinary skill in this art may be made without departing from the scope of the invention which is set forth in the claims appended hereto.

The various features of this invention which are believed new are set forth in the following claims.

## Claims

**1.** A polymeric vehicle which when applied to a substrate provides a coating binder having a Tg not greater than 60 °C., a pencil hardness of at least H, and a reverse impact resistance of at least 30 inch-lbs (3.4J) at a binder thickness of 1 mil (25µm), said polymeric vehicle comprising:

(a) from 100 to 35 weight percent, based upon the weight of the polymeric vehicle, of a modified polymer, said modified polymer being a polyester polymer covalently bound to at least one mesogenic group selected from the group consisting of radicals of the Formula I, II, III, IV and V:

I. 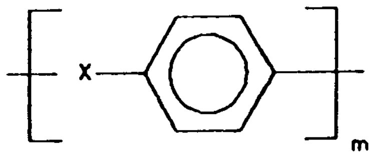

II. 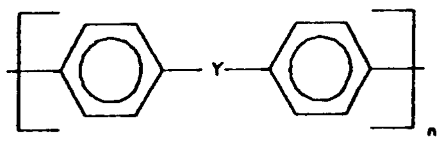

III. 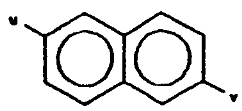 or 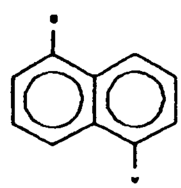

IV. Combinations of I, II, and 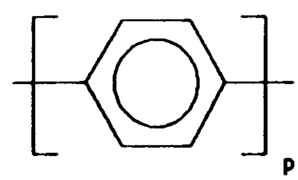

V. Combinations of III and 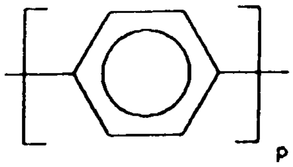

wherein

X= 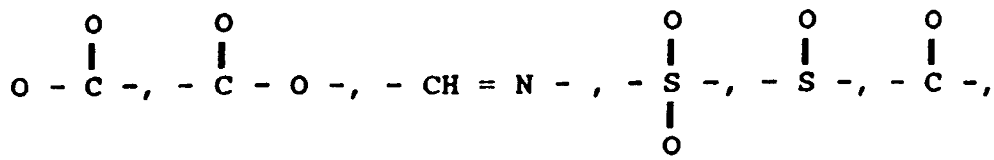

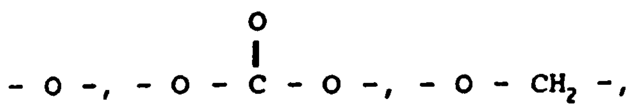

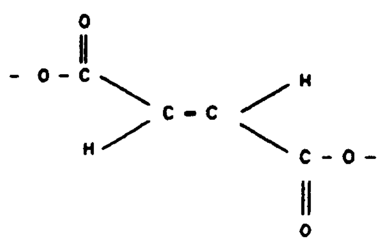

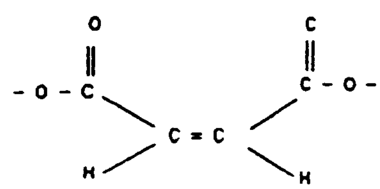

Y = X or 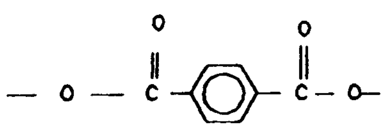 , or 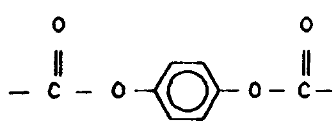

v = 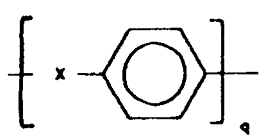

u = X
m = an integer from 2 to 8;
n = 1 or 2;
p = an integer from 1 to 4;
q = an integer from 1 to 3; and

(b) from 0 to 65 weight percent based upon the weight of the polymeric vehicle, of a composition selected from the group consisting of cross-linker resin, unmodified polymer resin, and mixtures thereof and wherein the modified polymer is modified to contain 5 to 50 weight percent mesogenic groups.

**2.** A polymeric vehicle as recited in Claim 1 wherein the mesogenic groups are grafted onto the polyester polymer to provide the modified polymer.

**3.** A polymeric vehicle as recited in Claim 2 wherein the polyester polymer is provided with carboxylic functional groups by reacting the polyester polymer with a dicarboxylic acid or anhydride to provide the polymer with reactive cites for reaction with the mesogenic groups.

**4.** A polymeric vehicle as recited in anyone of Claims 1, 2 or 3 wherein the polyester polymer is an alkyd polymer.

**5.** A polymeric vehicle as recited in Claim 3 wherein the dicarboxylic acid or anhydride is selected from the group consisting of terephthalic acid, adipic acid, isophthalic acid, succinic acid, succinic anhydride, phthalic acid, phthalic anhydride, maleic acid, maleic anhydride and mixtures thereof.

**6.** A polymeric vehicle as recited in Claim 3 wherein the polyester is an alkyd polymer and wherein the dicarboxylic acid or anhydride is selected from the group consisting of terephtalic acid, adipic acid, isophtalic acid, succinic acid, succinic anhydride, phthalic acid, phthalic anhydride, maleic acid, maleic anhydride and mixtures thereof.

**7.** A polymeric vehicle as recited in Claim 1 wherein the mesogenic group grafted onto the polyester has the formula

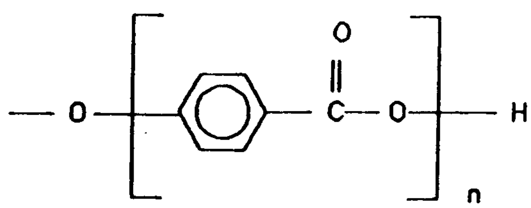

where n = 2 to 8.

**8.** A polymeric vehicle as recited in Claim 1, 2 or 3 wherein one or more of mesogenic groups is terminated with -H,-CN,

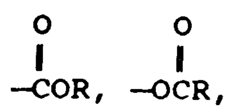

and -OR, wherein R is H, straight chain or branched alkyl having 1 to 12 carbon atoms and aryl having 6 to 12 carbon atoms.

**9.** A polymeric vehicle as recited in Claim 1 wherein the mesogenic group grafted onto the polyester polymer has the formula

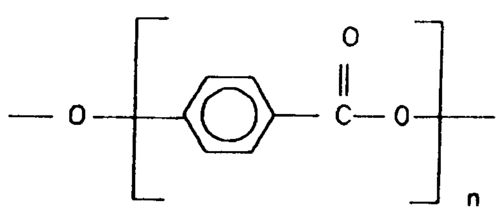

wherein n = 2 to 8.

**10.** A polymeric vehicle as recited in Claim 7 or 9 wherein the modified polymer has graft segments having a number average degree of polymerization in the range of 2.0 to 6.0.

**11.** A polymeric vehicle as recited in Claim 1 wherein the modified polymer is a polyol which has the formula

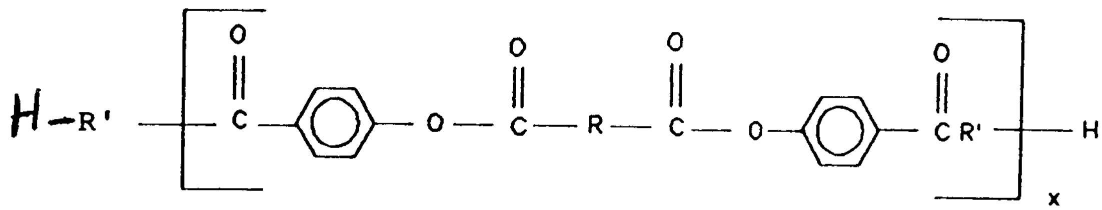

wherein,
$x$ = 1 to 10
R =

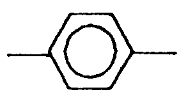
;

R' = $O(CH_2)_nO$, $O[(CH_2)_nO]_m$,

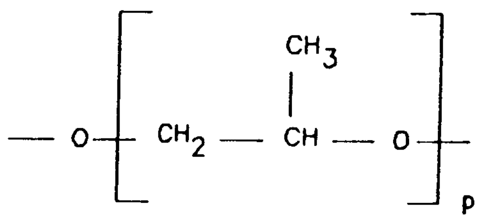

$\{O[(CH_2)_5COO]_pR''''\}_2$, and
$O[R''OOCR'''COO]_pR''O$;
R'' and R'''' = an aliphatic or cycloaliphatic radical having 12 carbon atoms or less;
R''' = an aromatic radical having 10 carbon atoms or less, a cycloaliphatic radical having 12 carbon atoms or less, or an aliphatic radical having 36 carbon atoms or less;
$n$ = 5 to 16;
$m$ = 2 to 200; and
$p$ = 1 to 20.

**12.** A polymeric vehicle as recited in Claim 1 wherein the mesogenic group has Formula I.

**13.** A polymeric vehicle as recited in Claim 1 wherein the mesogenic group has Formula II.

**14.** A polymeric vehicle as recited in Claim 1 wherein the mesogenic group has Formula III.

**15.** A polymeric vehicle as recited in Claim 1 wherein the mesogenic group has Formula IV.

**16.** A polymeric vehicle as recited in Claim 1 wherein the mesogenic group has Formula V.

**17.** A polymeric vehicle as recited in Claims 1, 2, 3, 11, 12, 13, 14, 15 or 16 wherein the polymeric vehicle includes a cross-linker resin and the cross-linker resin is selected from the group consisting of aminoplast resins, polyisocyanate resins and mixtures thereof.

**18.** The polymeric vehicle of Claim 17 wherein the aminoplast resin is a melamine resin.

**19.** The polymeric vehicle of Claim 1 wherein the modified polymer is free from cross-linker resin and has a number average molecular weight of above 7,000.

**20.** The polymeric vehicle of Claim 1 wherein the polymeric vehicle includes a cross-linker resin and the modified polymer is a polyester polymer which has a number average molecular weight in a range of from 500 to 20,000.

**21.** The polymeric vehicle of Claim 1 wherein the polyester polymer is prepared by reacting a polyacid with a polyol.

**22.** The polymeric vehicle of Claim 21 wherein the polyacid is a dicarboxylic acid having a carbon chain length of from 4 to 36.

**23.** The polymeric vehicle of Claim 22 wherein the polyacid is selected from the group consisting of isophthalic acid, terephthalate acid, fumaric acid, $HOOC(CH_2)_n$ COOH, maleic acid, phthalic acid, hexahydrophthalic acid and trimellitic acid and anhydrides of maleic acid, phthalic acid, hexahydrophthalic acid and succinic acid and where n = 2 to 14.

**24.** A formulated coating comprising the polymeric vehicle as recited in Claim 16.

**25.** A polymeric vehicle in accord with Claim 1 wherein the mesogenic group is selected from the group consisting of:

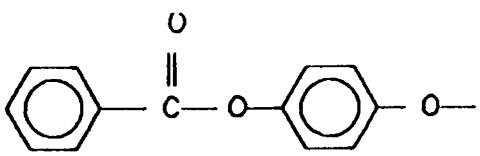

,

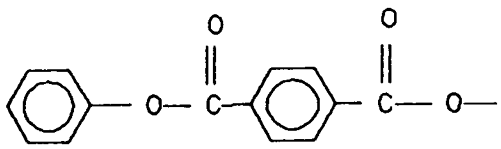

,

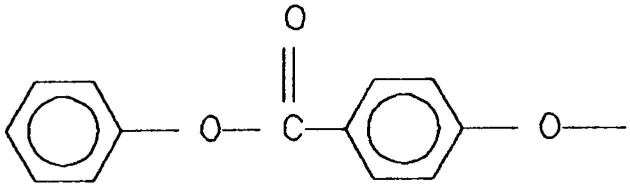

,

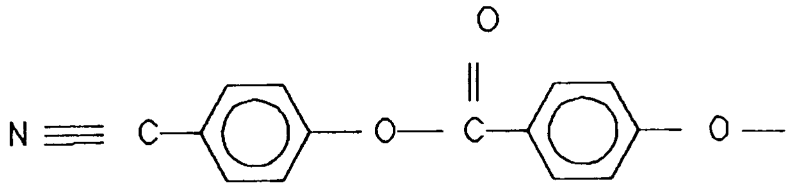

,

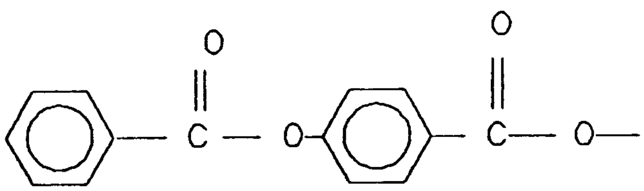

,

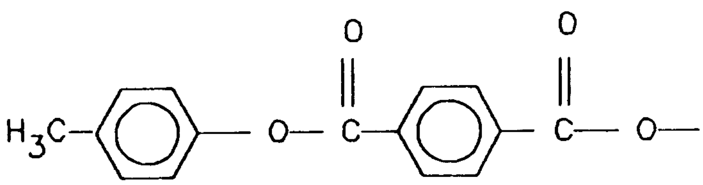

,

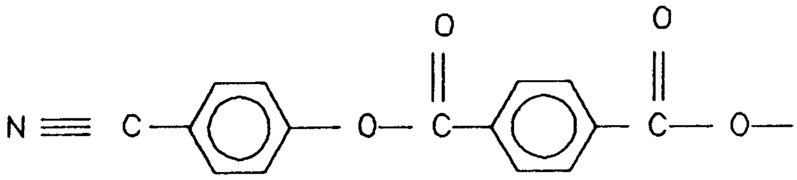

,

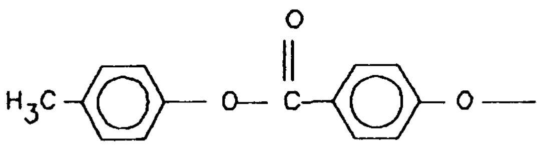

,

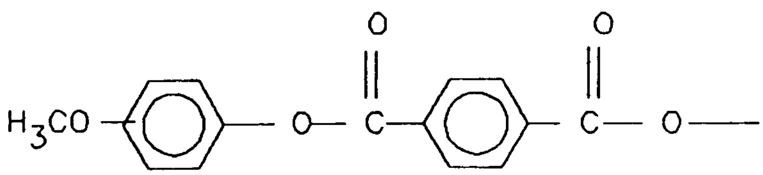

,

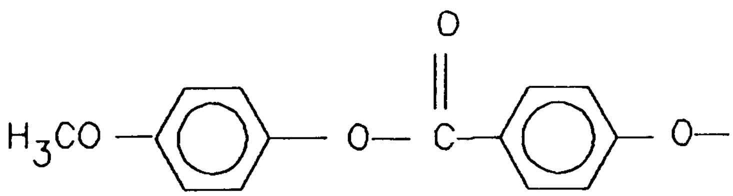

,

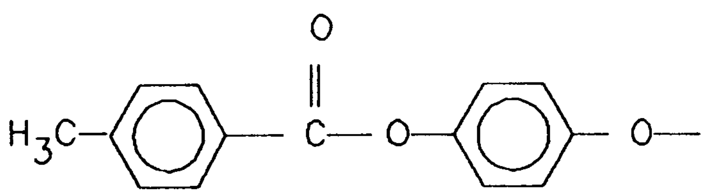

,

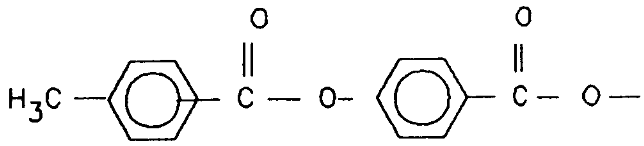 ,

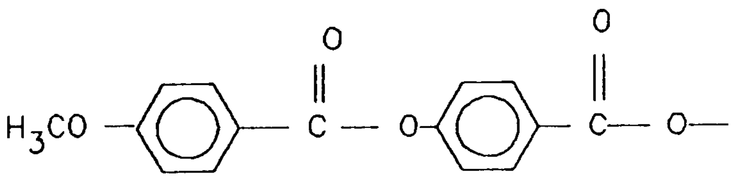 ,

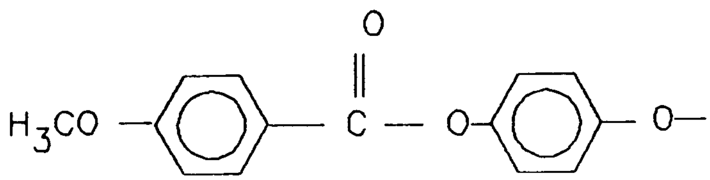 ,

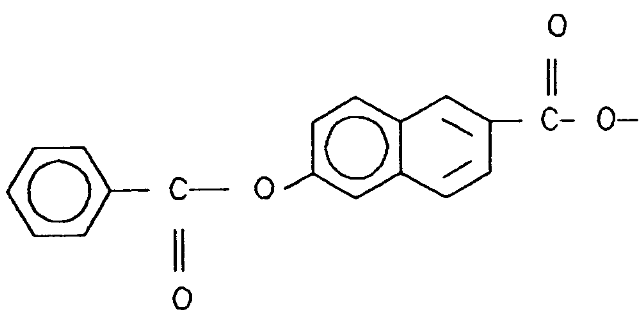 ,

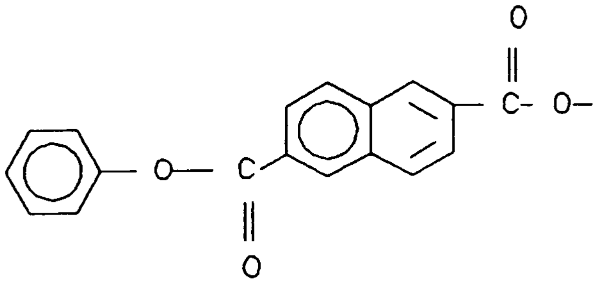

,

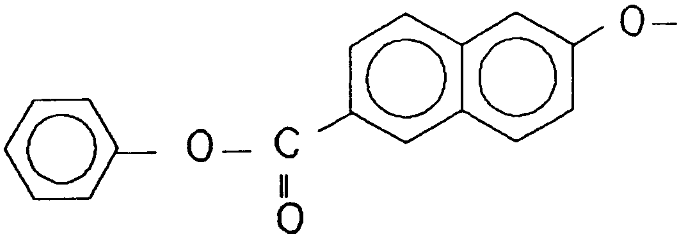

,

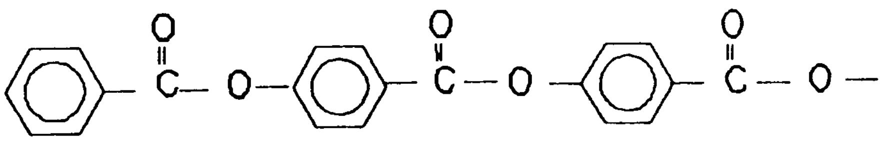

,

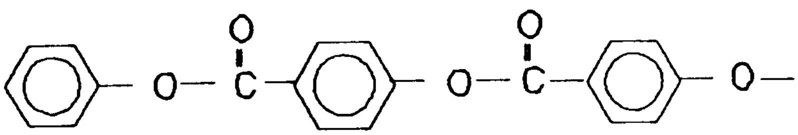

,

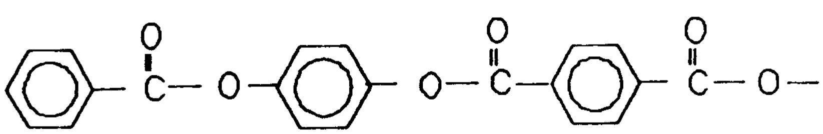

,

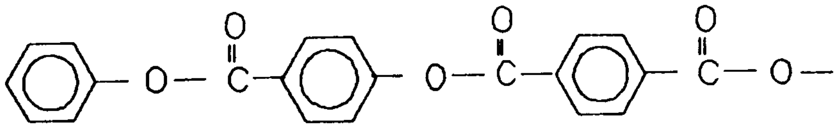

,

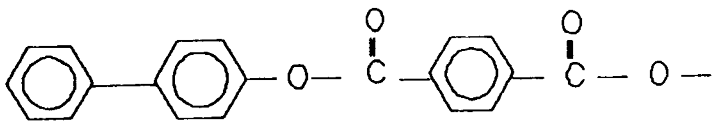

,

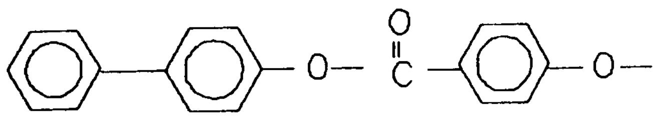

,

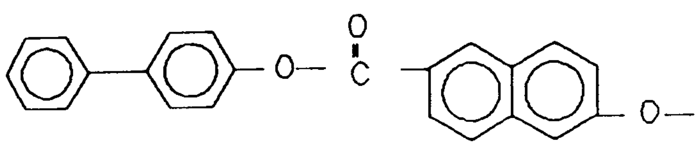

,

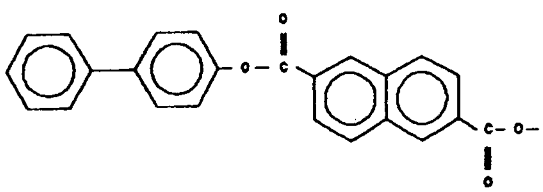

,

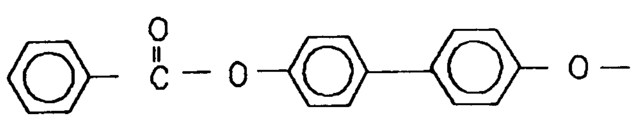

,

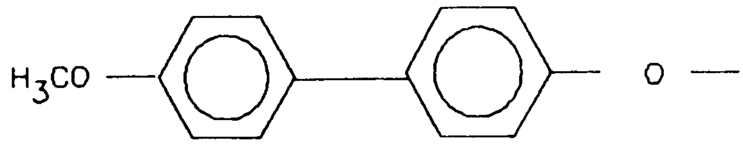

,

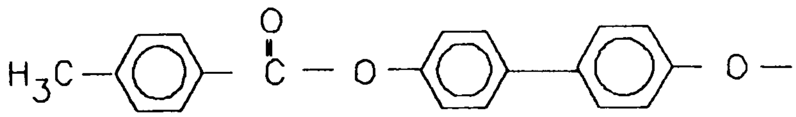

,

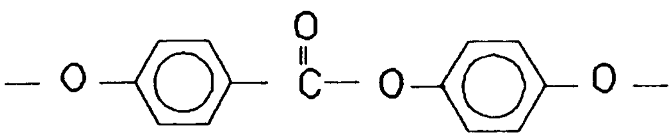

,

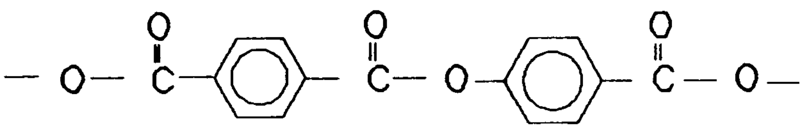

,

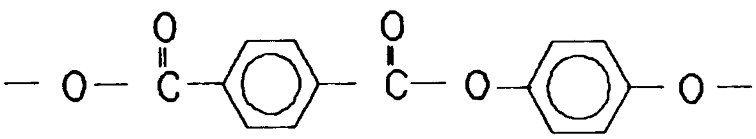

,

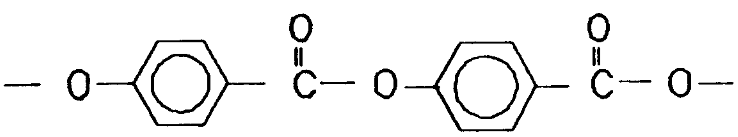

,

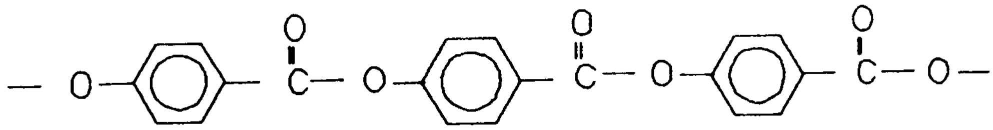
,

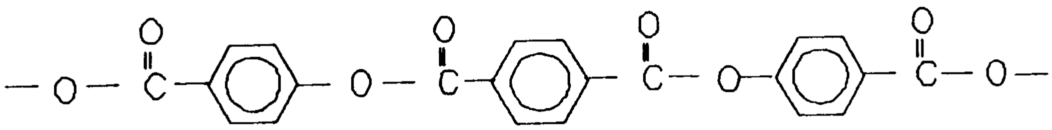
,

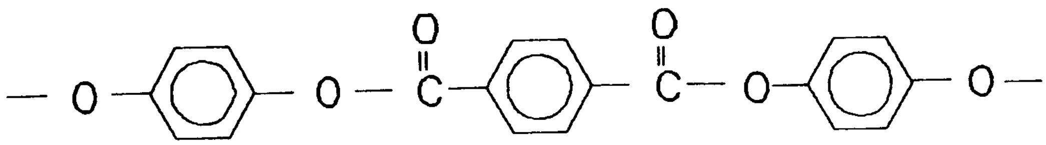
,

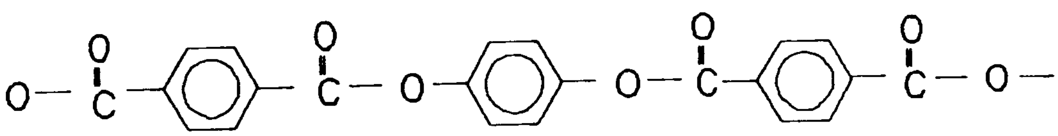
,

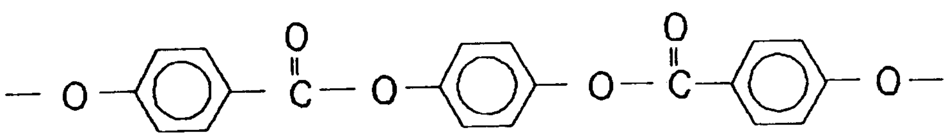
,

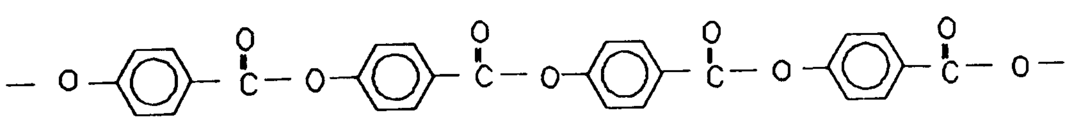
,

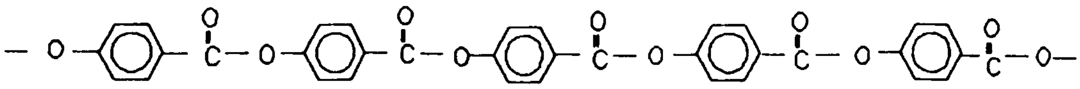

,

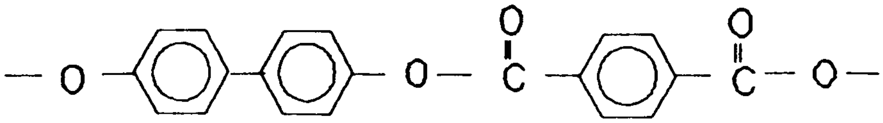

,

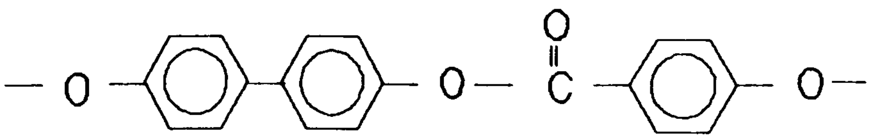

,

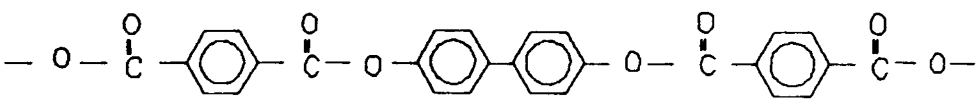

,

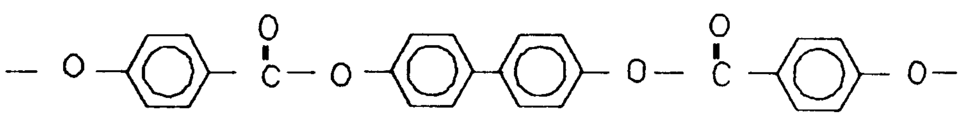

,

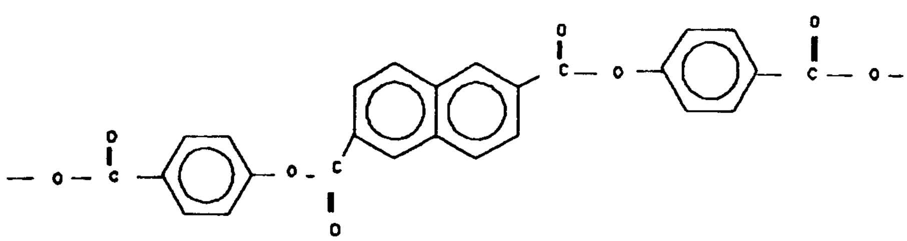

,

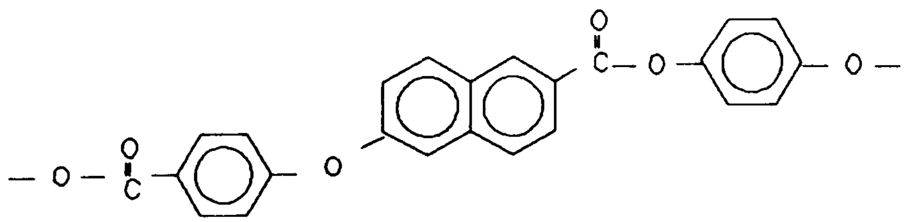

,

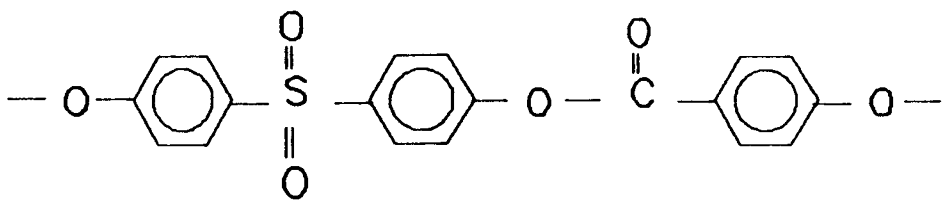

,

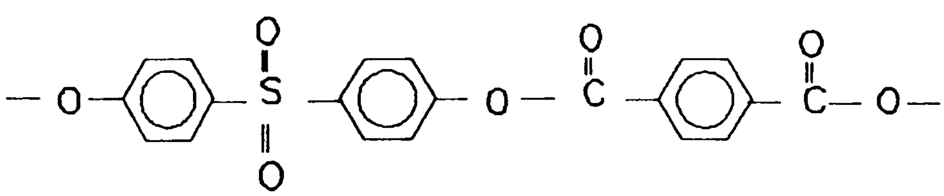

,

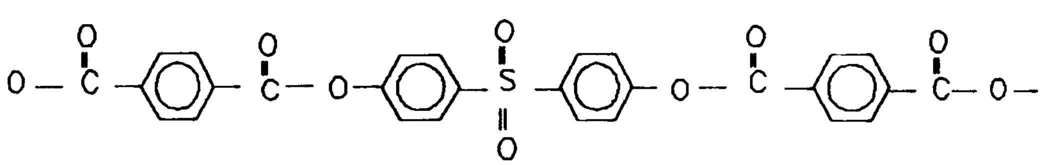

,

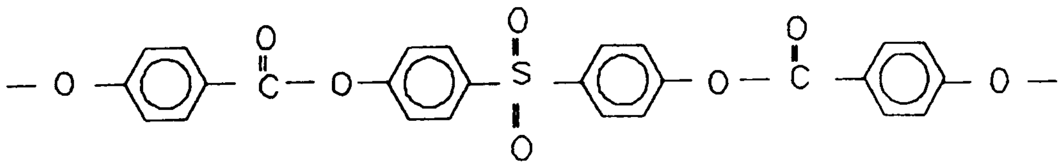

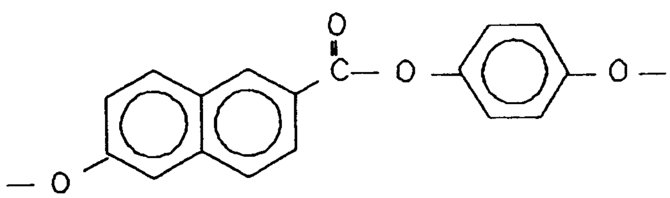

,

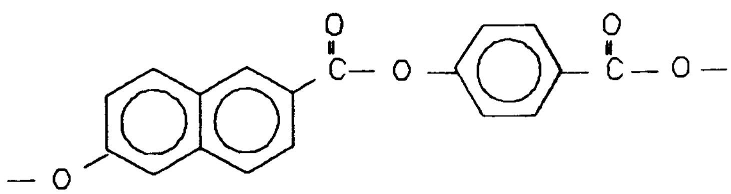

,

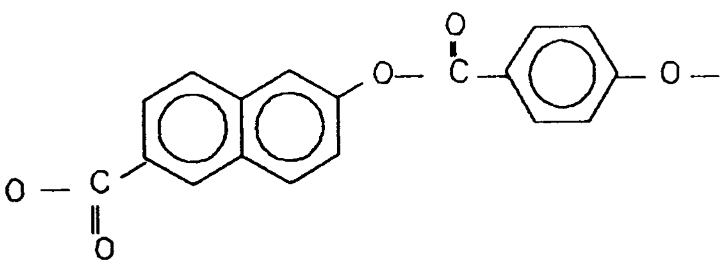

,

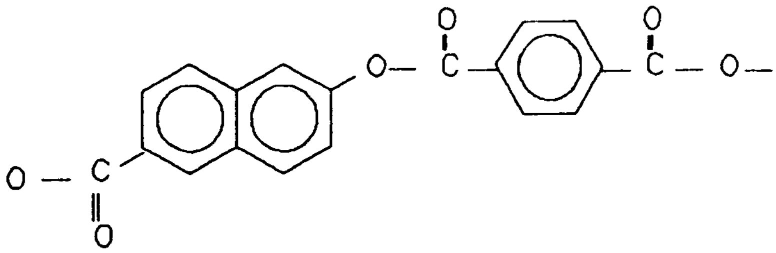

,

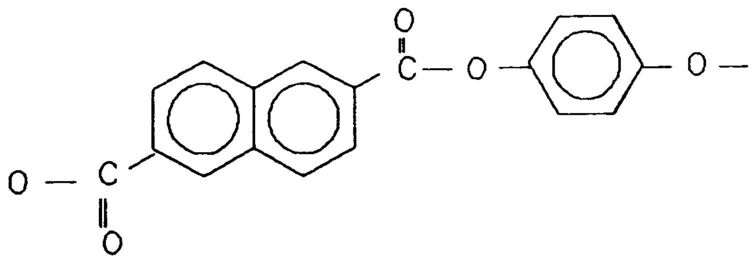

,

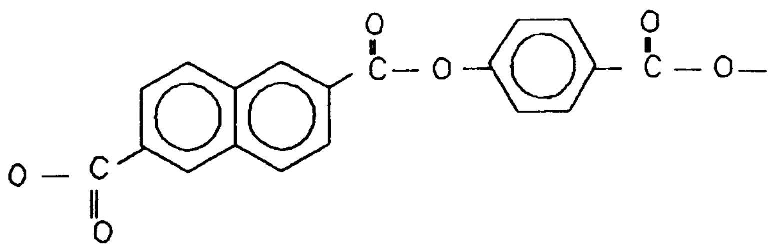

,

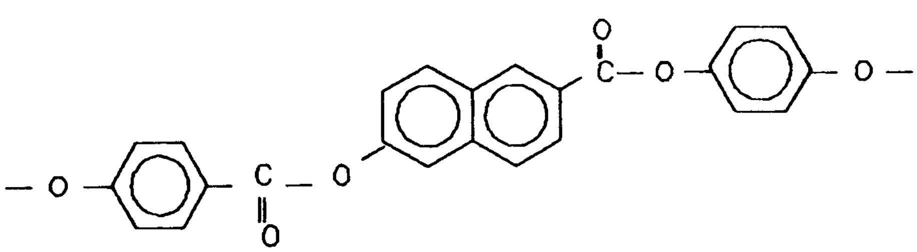

,

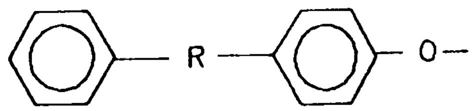

,

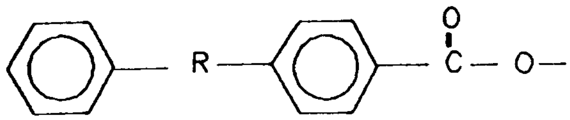

,

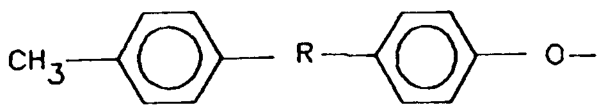

,

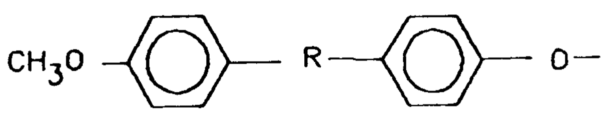

,

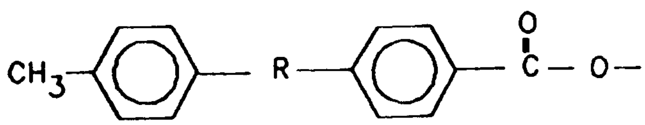

,

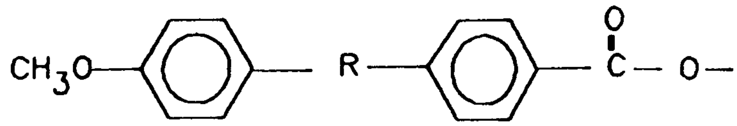

,

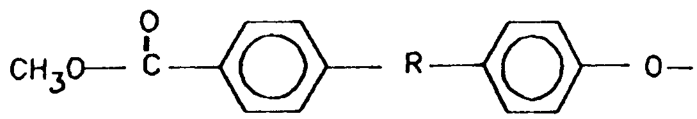

,

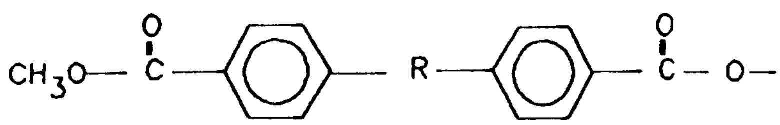

,

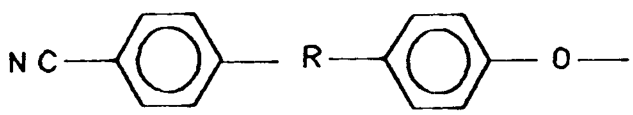

,

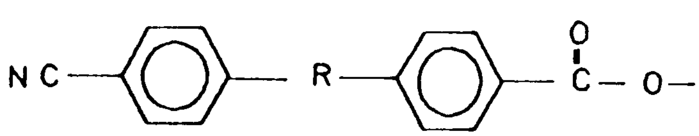

,

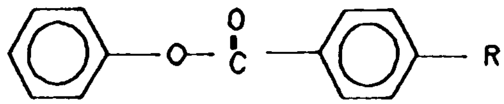 ,

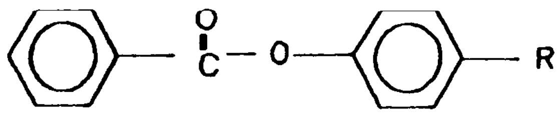 ,

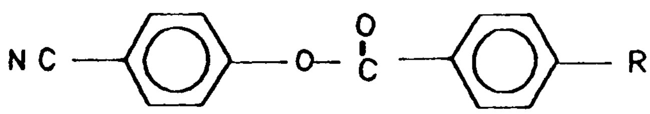 ,

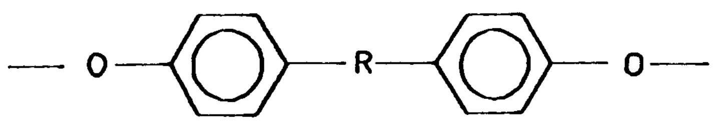 ,

and 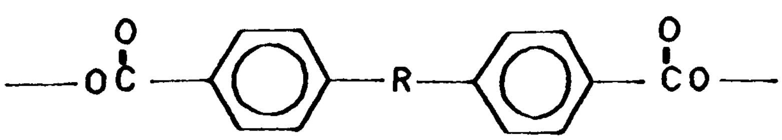 ,

wherein R = 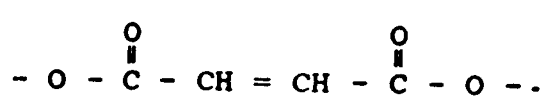

**26.** A polymeric vehicle for providing a coating binder having a Tg not greater than 60° C., a pencil hardness of at least H, and a reverse impact resistance of at least 30 inch-lbs. (3,4J) when the coating

binder has a thickness of 1 mil (25μm), said polymeric vehicle comprising:

(a) from 100 to 35 weight percent, based upon the weight of the polymeric vehicle, of a modified polymer, said modified polymer being a product of a reaction between p-hydroxybenzoic acid and a linear oligoester diol, in the presence of an acid catalyst, the ratios of p-hydroxybenzoic acid to diol being in the range 20/80 to 60/40.

said linear oligoester diol a reaction product of a heated mixture of phthalic acid, isophthalic acid, terephthalic acid, hexahydrophthalic anhydride, an aliphatic dicarboxylic acid having a carbon chain length of from 4 to 36 and aliphatic primary or secondary diol, having from 2 to 23 carbons; and

(b) from 0 to 65 weight percent based upon the weight of the polymeric vehicle of a cross-linker resin selected from the group consisting of polyisocyanate, a melamine and mixtures thereof.

**27.** A polymeric vehicle as recited in Claim 26 wherein the aliphatic dicarboxylic acid is adipic acid.

**28.** A polymeric vehicle as recited in Claim 27 wherein the diol is neopentyl glycol.

**29.** A formulated coating comprising the polymeric vehicle as recited in Claims 1, 2, 3, 11, 12 or 26.

**30.** A coating binder having a Tg not greater than 60° C., a pencil hardness of at least H, and a reverse impact resistance of at least 30 inch-lbs (3.4J) at a binder thickness of 1 mil (25μm), which is provided by application to a substrate of a polymeric vehicle in the presence of a solvent therefor, said polymeric vehicle being as claimed in claim 1.

**31.** The coating binder of Claim 30 wherein said coating binder includes cross-linking oxygen from air drying.

**32.** A coating binder as recited in Claim 31 wherein the polymeric vehicle includes a cross-linker resin and the cross-linker resin is selected from the group consisting of aminoplast resins, polyisocyanate resins and mixtures thereof.

**33.** A coating binder as recited in Claims 30, 31 or 32 wherein the mesogenic group has Formula I.

**34.** A coating binder as recited in Claims 30, 31 or 32 wherein the mesogenic group has Formula II.

**35.** A coating binder as recited in Claims 30, 31 or 32 wherein the mesogenic group has Formula III.

**36.** A coating binder as recited in Claims 30, 31 or 32 wherein the mesogenic group has Formula IV.

**37.** A coating binder as recited in Claims 30, 31 or 32 wherein the mesogenic group has Formula V.

**38.** A coating binder of Claim 30 or 31 wherein the modified polymer has a number average molecular weight of above 500.

**39.** The coating binder of Claim 30 or 31 wherein the modified polymer is a polyester polymer which has a number average molecular weight of from 500 to 20,000.

**40.** A coating binder as recited in Claim 30 wherein the mesogenic groups are grafted onto the polyester polymer to provide the modified polymer.

**41.** A coating binder as recited in Claim 33 wherein the mesogenic groups are grafted onto the polyester polymer to provide the modified polymer.

**42.** A coating binder as recited in Claim 34 wherein the mesogenic groups are grafted onto the polyester polymer to provide the modified polymer.

**43.** A coating binder as recited in Claim 35 wherein the mesogenic groups are grafted onto the polyester polymer to provide the modified polymer.

**44.** A coating binder as recited in Claim 36 wherein the mesogenic groups are grafted onto the polyester polymer to provide the modified polymer.

**45.** A coating binder as recited in Claim 37 wherein the mesogenic groups are grafted onto the polyester polymer to provide the modified polymer.

**46.** A process for preparing a coating binder as claimed in claim 30, which process comprises: mixing a modified polymer with a composition selected from the group consisting of cross-linker resin, unmodified polymer resin, and mixtures thereof to provide a polymeric vehicle, the polymeric vehicle comprising at least 35 weight percent, based upon the weight of the polymeric vehicle, of the modified polymer, said modified polymer being a polyester polymer covalently bound to at least one mesogenic group selected from the group consisting of radicals of the Formula I, II, III, IV and V:

I. 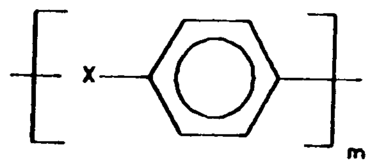

II. 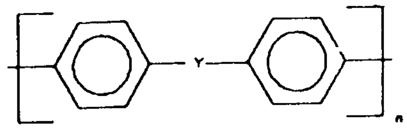

III. 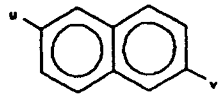 or 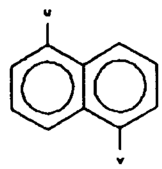

IV. Combinations of I, II, and 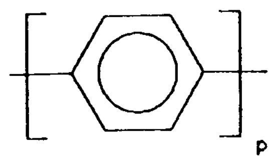

V. Combinations of III and 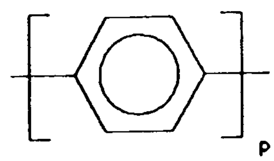

wherein

X= 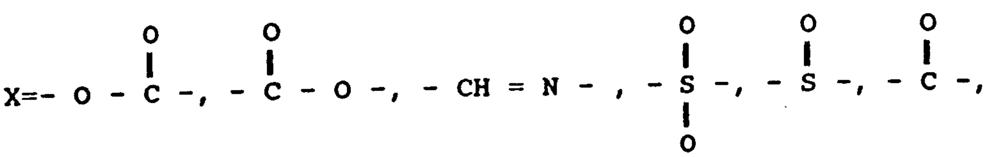

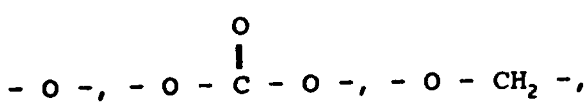

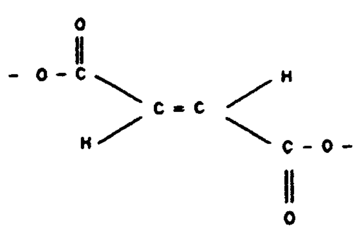 , 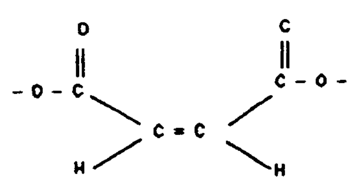

Y = X or 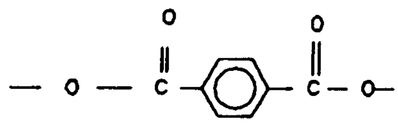 , or 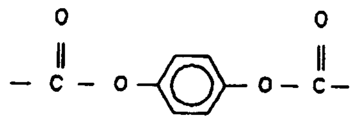

V = 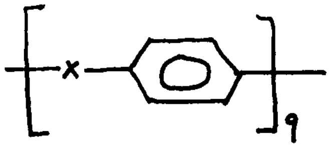

u = X

m = an integer from 2 to 8;

n = 1 or 2;

p = an integer from 1 to 4 ;

q = an integer from 1 to 3;

the polymeric vehicle comprising not more than 65 weight percent based upon the weight of the polymeric vehicle, of the composition and the modified polymer having from 5 to 50 weight percent mesogenic groups based upon the weight of the modified polymer.

**47.** The process of Claim 46 wherein the cross-linker resin is reacted with the polymeric vehicle.

**48.** The process of Claim 47, wherein the cross-linker resin and polymeric vehicle are baked.

**49.** A process of Claim 46 wherein the coating binder is formed with drying at ambient temperature.

**50.** A process of Claim 49 wherein the coating binder is dried in the presence of oxygen.

**51.** A process of Claim 46 wherein the modified polymer has a number average molecular weight of above 500.

**52.** A process of Claim 46 wherein the modified polyester polymer has a number average molecular weight in a range between 500 and 20,000 and is mixed with a cross-linker resin.

**53.** A process of Claim 46 wherein the polyester product is the reaction product of polyacids and polyols.

**54.** A process of Claim 46 which further includes mixing a polymer with the polymeric vehicle.

**55.** A process of Claim 46 which further includes mixing a second modified polymer with the polymeric vehicle.

**56.** A process of Claim 46 wherein the modified polymer is cross-linked with the cross-linker resin.

**57.** A process as recited in Claim 46 wherein the mesogenic groups are grafted onto the polyester polymer to provide the modified polymer.

**58.** A process as recited in Claim 46 or 57 wherein the mesogenic group has Formula I.

**59.** A process as recited in Claim 46 or 57 wherein the mesogenic group has Formula II.

**60.** A process as recited in Claim 46 or 57 wherein the mesogenic group has Formula III.

**61.** A process as recited in Claim 46 or 57 wherein the mesogenic group has Formula IV.

**62.** A process as recited in Claim 46 or 57 wherein the mesogenic group has Formula V.

**63.** A process for preparing a formulated coating composition which when applied to a substrate provides a coating binder as claimed in claim 30, the process comprising: mixing a modified polymer with a composition selected from the group consisting of cross-linker resin, unmodified polymer resin, and mixtures thereof, to provide a polymeric vehicle, the polymeric vehicle comprising at least 35 weight percent, based upon the weight of the polymeric vehicle, of the modified polymer, said modified polymer being selected from the group consisting of a polyester polymer covalently bound to at least one mesogenic group selected from the group consisting of radicals of the Formula I, II, III, IV and V:

I. 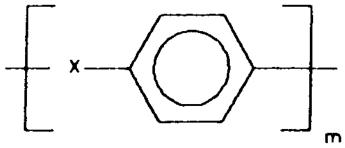

II. 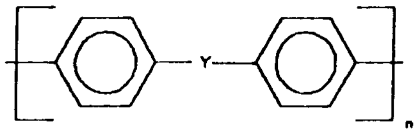

III. 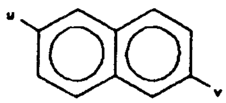 or 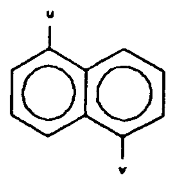

IV. Combinations of I, II, and 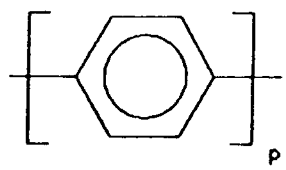

V. Combinations of III and 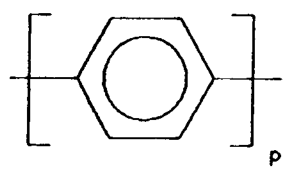

wherein

X= 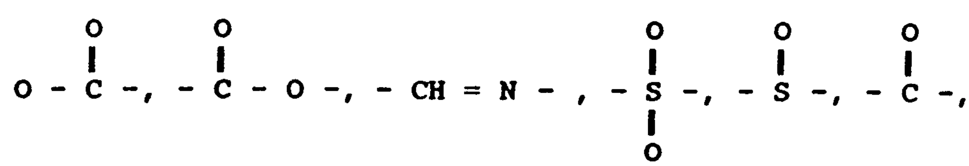

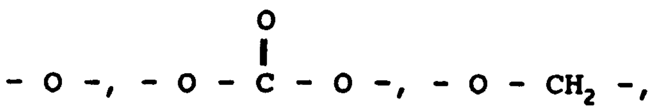

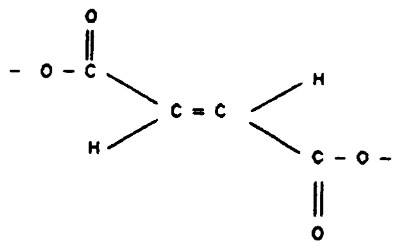

,

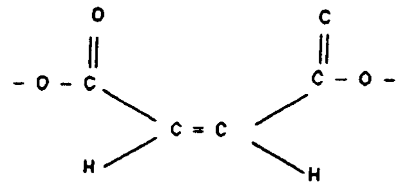

Y = X or

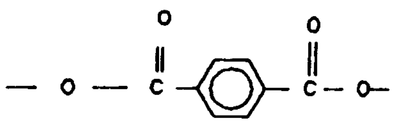

, or

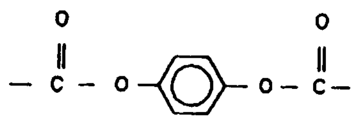

V =

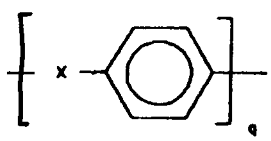

u = X

m = an integer from 2 to 8;

n = 1 or 2;

p = an integer from 1 to 4;

q = an integer from 1 to 3;

the polymeric vehicle comprising not more than 65 weight percent based upon the weight of the polymeric vehicle, of the composition and the modified polymer having from 5 to 50 weight percent mesogenic groups based upon the weight of the modified polymer.

**64.** The process of Claim 63 further comprising mixing the polymeric vehicle with a solvent and additives.

**65.** A process as recited in Claim 64 wherein the mesogenic groups are grafted onto the polyester polymer to provide the modified polymer.

**66.** A process as recited in Claim 63 further comprising mixing a solvent and pigment with the polymeric vehicle.

**67.** A process as recited in Claim 63 wherein the mesogenic groups are grafted onto the polyester polymer to provide the modified polymer.

**68.** A process as recited in Claim 63, 65, 66 or 67 wherein the mesogenic group has Formula I.

**69.** A process as recited in Claim 63, 65, 66 or 67 wherein the mesogenic group has Formula II.

**70.** A process as recited in Claim 63, 65, 66 or 67 wherein the mesogenic group has Formula III.

**71.** A process as recited in Claim 63, 65, 66 or 67 wherein the mesogenic group has Formula IV.

**72.** A process as recited in Claim 63, 65, 66 or 67 wherein the mesogenic group has Formula V.

**73.** A polymeric vehicle which when applied to a substrate provides a coating binder having a Tg not greater than 60 ° C., a pencil hardness of at least H, and a reverse impact resistance of at least 30 inch-lbs (2.4J) at a binder thickness of 1 mil (25μm) said polymeric vehicle comprising:

(a) from 100 to 35 weight percent, based upon the weight of the polymeric vehicle, of a modified polymer, said modified polymer being a polyester polymer covalently bound to at least one mesogenic group selected from the group consisting of:

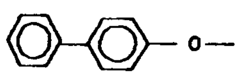 , 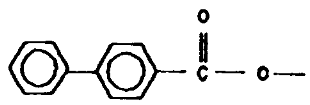 , 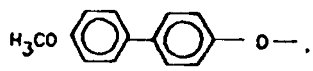 ,

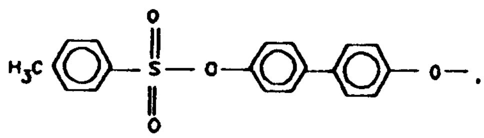 ,

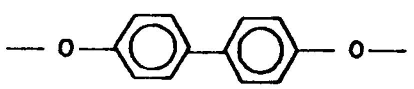 , 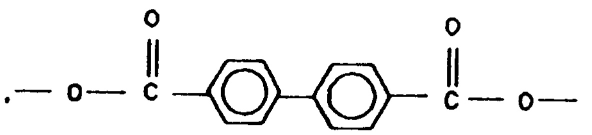 ,

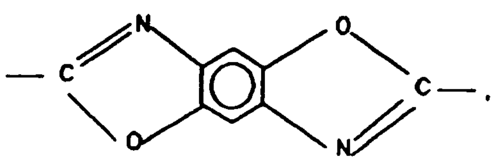 ,

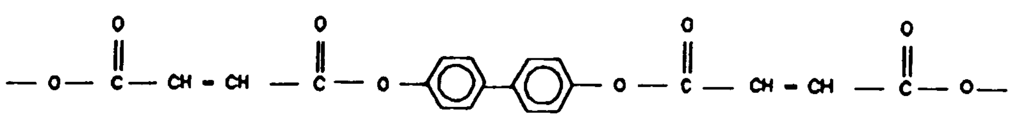

and 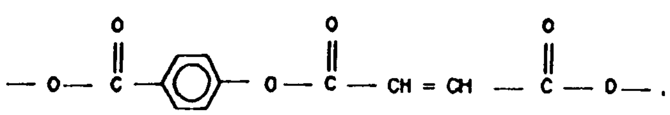 , and

(b) from 0 to 65 weight percent, based upon the weight of the polymeric vehicle, of a cross-linker resin and the modified polymer having 5 to 50 weight percent mesogenic groups.

**74.** A polyol which has the formula

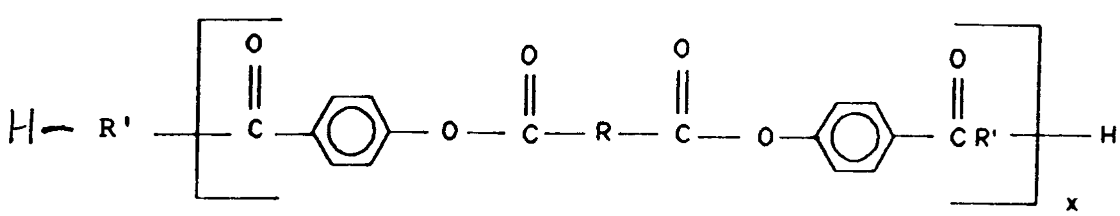

wherein,

x = 1 to 10

R =

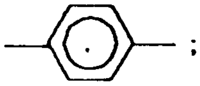

R' = $O(CH_2)_nO$, $O[(CH_2)_nO]_m$,

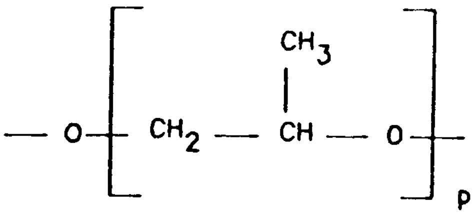

$\{O[(CH_2)_5COO]_pR''''\}_2$, and

$O[R''OOCR'''COO]_pR''O$;

R'' and R'''' = an aliphatic or cycloaliphatic radical having 12 carbon atoms or less;

R''' = an aromatic radical having 10 carbon atoms or less, a cycloaliphatic radical having 12 carbon atoms or less, or an aliphatic radical having 36 carbon atoms or less;

n = 5 to 16;

m = 2 to 200; and

p = 1 to 20.

**Patentansprüche**

1. Polymer-Bindemittel, das, wenn es auf ein Substrat aufgetragen wird, eine Beschichtung mit einer Glasübergangstemperatur (Tg) von nicht mehr als 60 °C, einer Bleistifthärte von mindestens H und einen Beschichtungshaft-Widerstand von mindestens 3,4 J (30 inch-lbs) bei einer Binderdicke von 25 µm (1 mil), wobei das Polymer-Bindemittel umfaßt:
   (a) 100 bis 35 Gew.-% eines modifizierten Polymers, bezogen auf das Gewicht des Polymer-Bindemittels, wobei das modifizierte Polymer ein Polyester-Polymer ist, das an mindestens eine mesogene Gruppe, die aus der aus den Resten der Formeln I, II, III, IV und V bestehenden Gruppe ausgewählt ist, gebunden ist:

I. 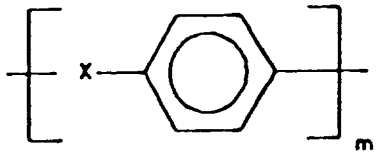

II. 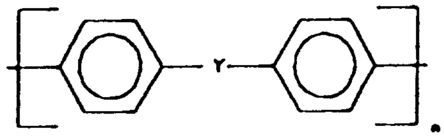

III. 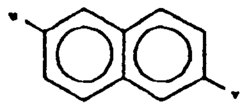 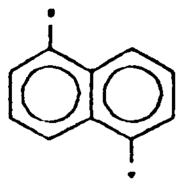

IV. Kombinationen von I, II und 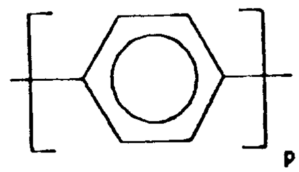

V. Kombinationen von III und 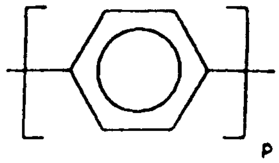

worin

X= 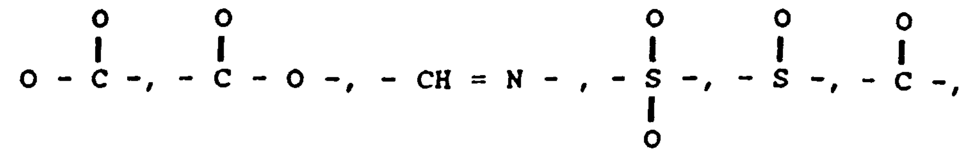

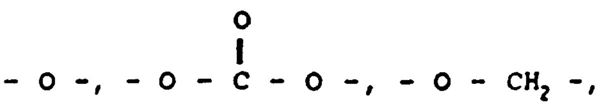

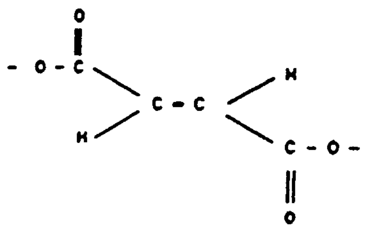 , 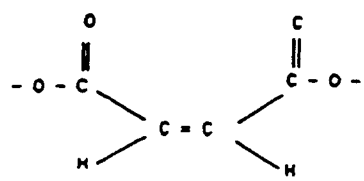

Y = X oder 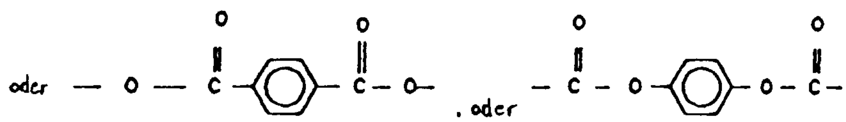

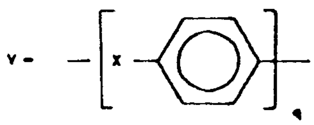

u = X

m = eine ganze Zahl von 2 bis 8;

n = 1 oder 2;

p = eine ganze Zahl von 1 bis 4;

q = eine ganze Zahl von 1 bis 3; und

(b) 0 bis 65 Gew.-% einer Zusammensetzung, bezogen auf das Gewicht des Polymer-Bindemittels, die aus der aus einem Vernetzungs-Harz, einem nicht-modifizierten Polymer-Harz und Gemischen davon bestehenden Gruppe ausgewählt ist und worin das modifizierte Polymer so modifiziert ist, daß 5 bis 50 Gew.-% mesogene Gruppen enthalten sind.

2. Polymer-Bindemittel nach Anspruch 1, worin die mesogenen Gruppen unter Bildung des modifizierten Polymers auf das Polyester-Polymer gepfropft sind.

3. Polymer-Bindemittel nach Anspruch 2, worin das Polyester-Polymer mit funktionellen Carboxylgruppen versehen wird, indem das Polyester-Polymer mit einer Dicarbonsäure oder einem Anhydrid umgesetzt wird, wobei das Polymer mit reaktiven Stellen zur Reaktion mit den mesogenen Gruppen versehen wird.

4. Polymer-Bindemittel nach einem der Ansprüche 1, 2 oder 3, worin das Polyester-Polymer ein Alkyd-Polymer ist.

5. Polymer-Bindemittel nach Anspruch 3, worin die Dicarbonsäure oder das Anhydrid aus der aus Terephthalsäure, Adipinsäure, Isophthalsäure, Bernsteinsäure, Bernsteinsäureanhydrid, Phthalsäure, Phthalsäureanhydrid, Maleinsäure, Maleinsäureanhydrid und Gemischen davon bestehenden Gruppe ausgewählt ist.

6. Polymer-Bindemittel nach Anspruch 3, worin der Polyester ein Alkyd-Polymer ist und worin die Dicarbonsäure oder das Anhydrid aus der aus Terephthalsäure, Adipinsäure, Isophthalsäure, Bernsteinsäure, Bernsteinsäureanhydrid, Phthalsäure, Phthalsäureanhydrid, Maleinsäure, Maleinsäureanhydrid und Gemischen davon bestehenden Gruppe ausgewählt ist.

7. Polymer-Bindemittel nach Anspruch 1, worin die auf den Polyester gepfropfte mesogene Gruppe die folgende Formel aufweist

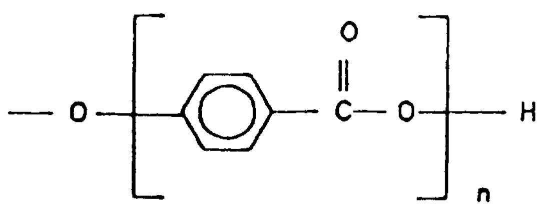

worin n = 2 bis 8.

8. Polymer-Bindemittel nach Anspruch 1, 2 oder 3, worin eine oder mehrere der mesogenen Gruppen mit -H, -CN, -COOR, -O-COR und -OR enden, worin R H, ein geradkettiger oder verzweigter Alkylrest mit 1 bis 12 Kohlenstoffatomen und Aryl mit 6 bis 12 Kohlenstoffatomen ist.

9. Polymer-Bindemittel nach Anspruch 1, worin die auf den Polyester gepfropfte mesogene Gruppe die folgende Formel

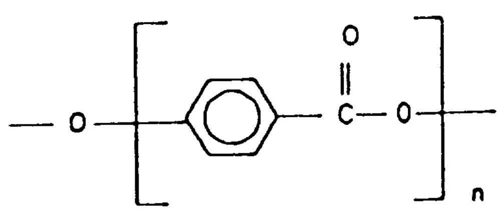

aufweist worin n = 2 bis 8.

10. Polymer-Bindemittel nach Anspruch 7 oder 9, worin das modifizierte Polymer Pfropf-Segmente mit einem anzahlgemittelten Polymerisationsgrad im Bereich von 2,0 bis 6,0 besitzt.

**11.** Polymer-Bindemittel nach Anspruch 1, worin das modifizierte Polymer ein Polyol mit der folgenden Formel ist

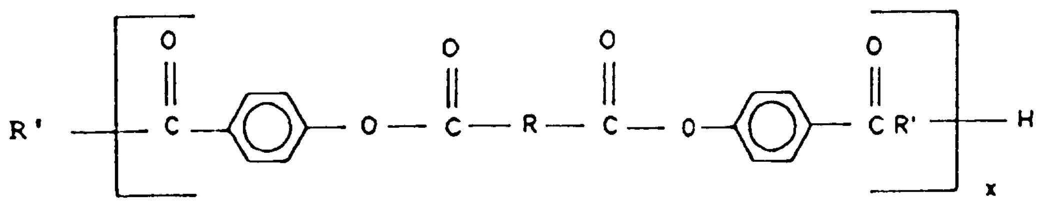

worin

x = 1 bis 10

R =

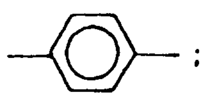

R' = $O(CH_2)_nO$, $O[(CH_2)_nO]_m$,

$$-O-[-CH_2-\overset{\displaystyle CH_3}{\overset{|}{CH}}-O-]_p-$$

$\{O[(CH_2)_5COO]_pR''''\}_2$, und

$O[R''OOCR'''COO]_pR''O$,

R'' und R'''' = ein aliphatischer oder cycloaliphatischer Rest mit 12 oder weniger Kohlenstoffatomen,

R''' = ein aromatischer Rest mit 10 oder weniger Kohlenstoffatomen, ein cycloaliphatischer Rest mit 12 oder weniger Kohlenstoffatomen oder ein aliphatischer Rest mit 36 oder weniger Kohlenstoffatomen,

n = 5 bis 16,

m = 2 bis 200, und

p = 1 bis 20.

**12.** Polymer-Bindemittel nach Anspruch 1, worin die mesogene Gruppe die Formel I aufweist.

**13.** Polymer-Bindemittel nach Anspruch 1, worin die mesogene Gruppe die Formel II aufweist.

**14.** Polymer-Bindemittel nach Anspruch 1, worin die mesogene Gruppe die Formel III aufweist.

**15.** Polymer-Bindemittel nach Anspruch 1, worin die mesogene Gruppe die Formel IV aufweist.

**16.** Polymer-Bindemittel nach Anspruch 1, worin die mesogene Gruppe die Formel V aufweist.

**17.** Polymer-Bindemittel nach Anspruch 1, 2, 3, 11, 12, 13, 14, 15 oder 16, worin das Polymer-Bindemittel ein Vernetzungs-Harz enthält und das Vernetzungs-Harz aus der aus Aminoplast-Harzen, Polyisocyanat-Harzen und Gemischen davon bestehenden Gruppe ausgewählt ist.

**18.** Polymer-Bindemittel nach Anspruch 17, worin das Aminoplast-Harz ein Melamin-Harz ist.

**19.** Polymer-Bindemittel nach Anspruch 1, worin das modifizierte Polymer kein Vernetzungs-Harz enthält und ein Molekulargewichts-Zahlenmittel von über 7000 besitzt.

**20.** Polymer-Bindemittel nach Anspruch 1, worin das Polymer-Bindemittel ein Vernetzungs-Harz enthält und das modifizierte Polymer ein Polyester-Polymer mit einem Molekulargewichts-Zahlenmittel im Bereich von 500 und 20000 ist.

**21.** Polymer-Bindemittel nach Anspruch 1, worin das Polyester-Polymer durch Umsetzen einer Polysäure mit einem Polyol hergestellt wird.

**22.** Polymer-Bindemittel nach Anspruch 21, worin die Polysäure eine Dicarbonsäure mit einer Kettenlänge von 4 bis 36 Kohlenstoffatomen ist.

**23.** Polymer-Bindemittel nach Anspruch 22, worin die Polysäure aus der Gruppe bestehend aus Isophthalsäure, Terephthalsäure, Fumarsäure, $HOOC(CH_2)_nCOOH$, Maleinsäure, Phthalsäure, Hexahydrophthalsäure und Trimellithsäure und Anhydriden von Maleinsäure, Phthalsäure, Hexahydrophthalsäure und Bernsteinsäure und für n = 2 bis 14 ausgewählt ist.

**24.** Formulierte Beschichtung, die das Polymer-Bindemittel nach Anspruch 16 enthält.

25. Polymer-Bindemittel nach Anspruch 1, worin die mesogene Gruppe aus der Gruppe bestehend aus

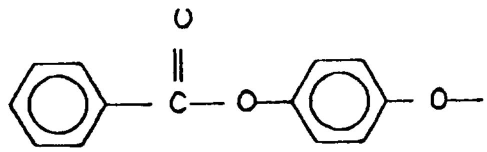

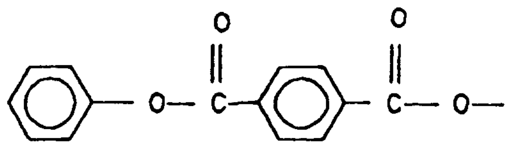

,

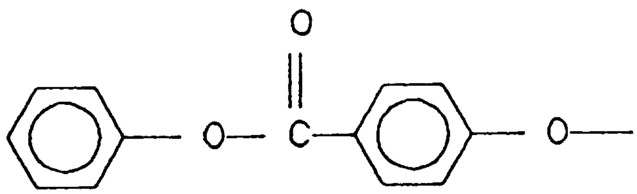

,

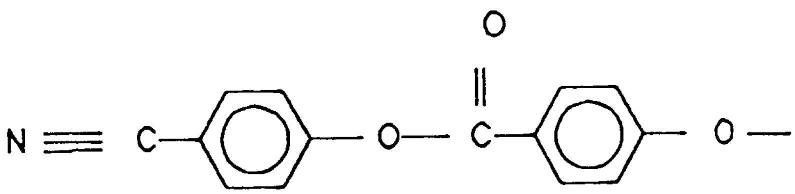

,

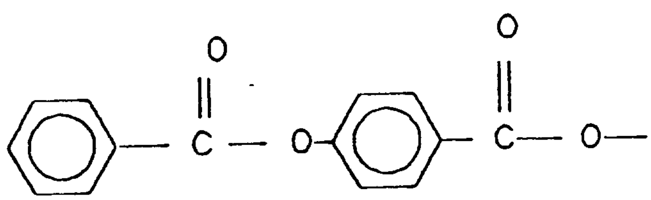

,

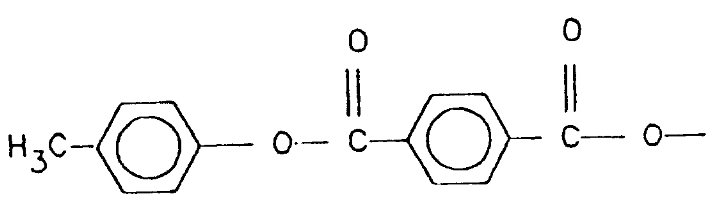

,

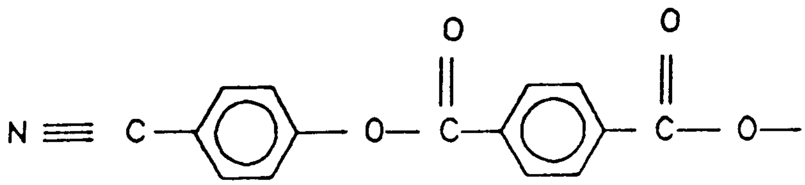

,

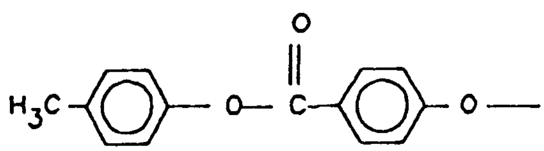

,

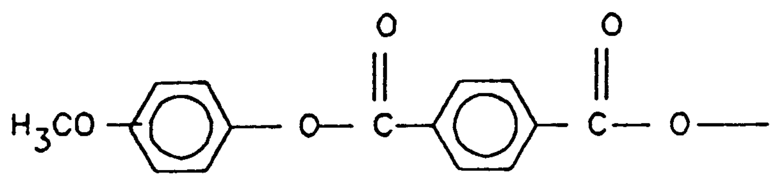

,

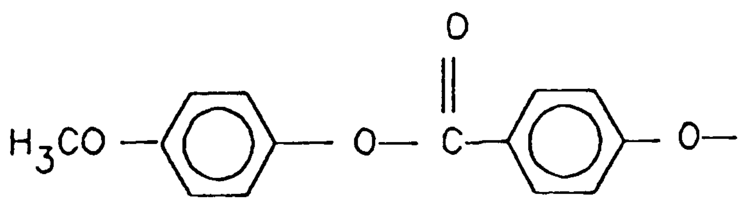

,

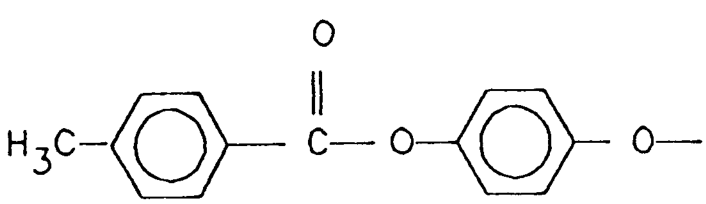

,

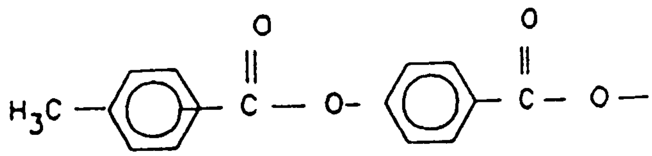

,

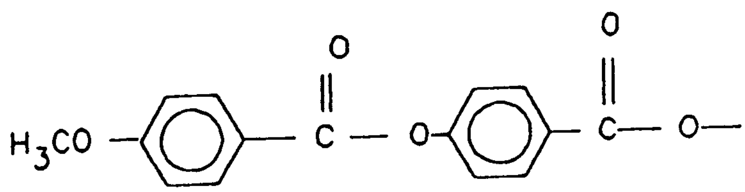

,

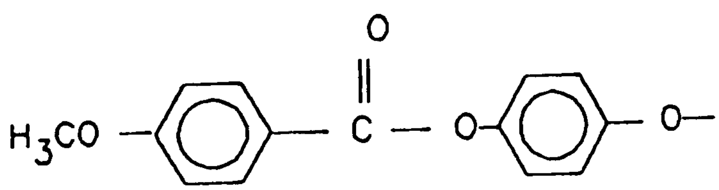

,

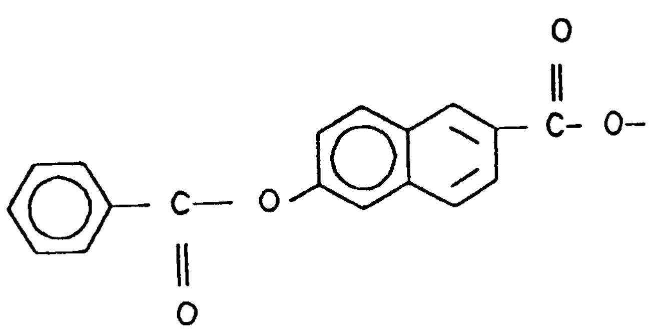

,

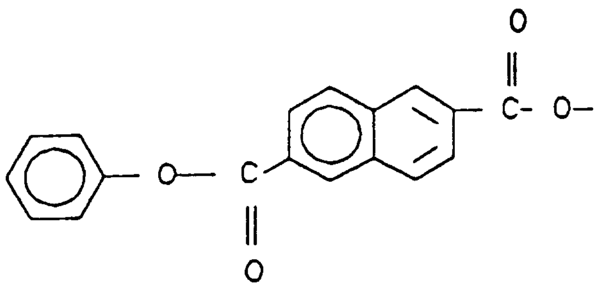

,

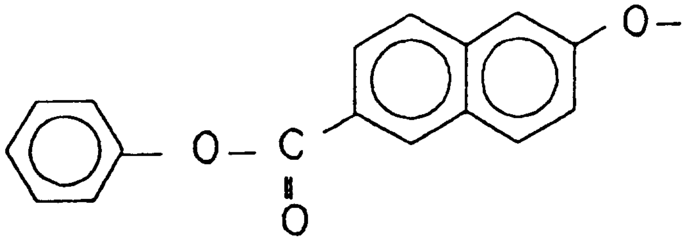

,

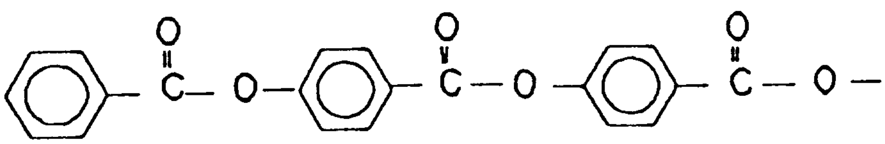

,

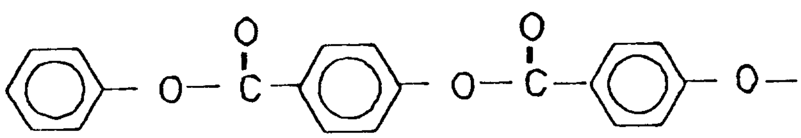

,

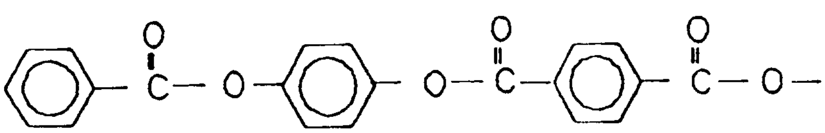

,

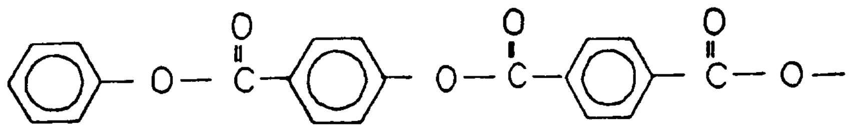

,

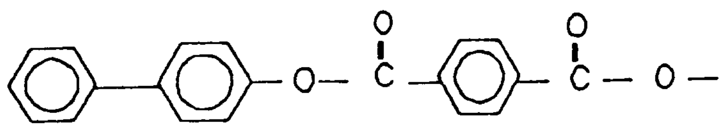

,

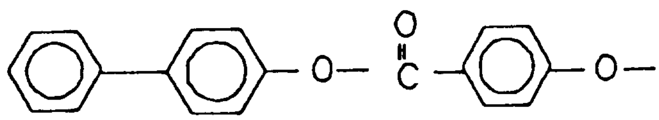

,

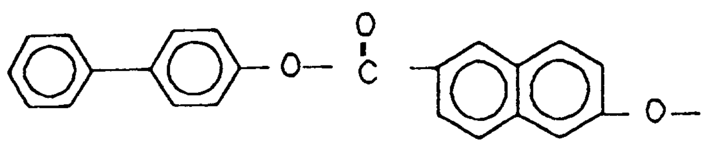

,

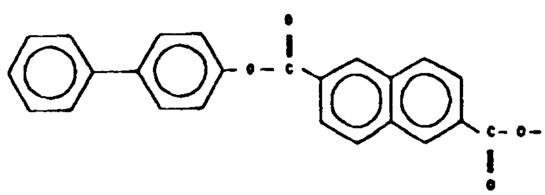

,

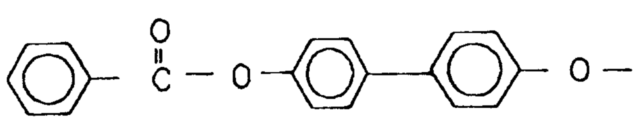

,

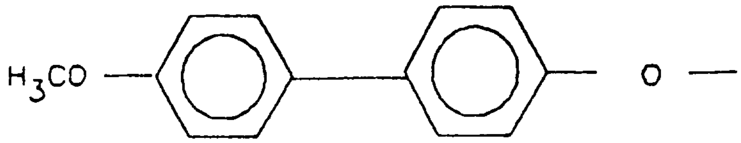

,

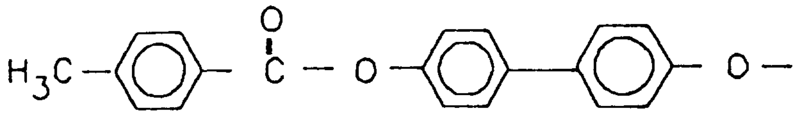

,

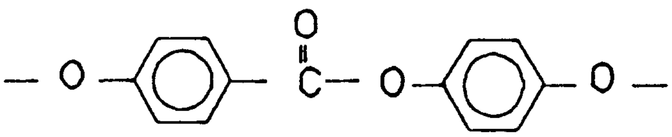

,

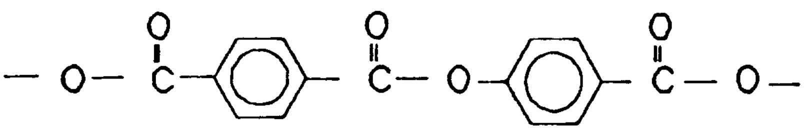

,

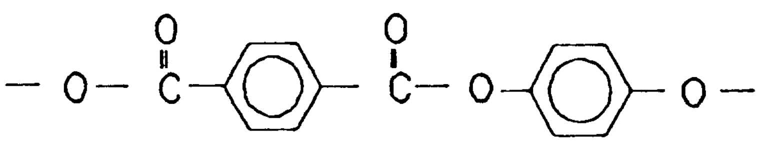

,

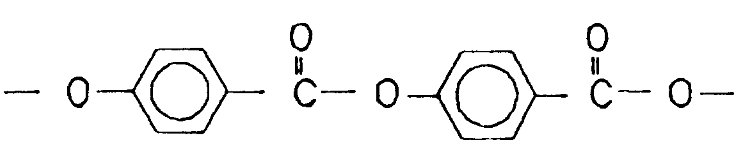

,

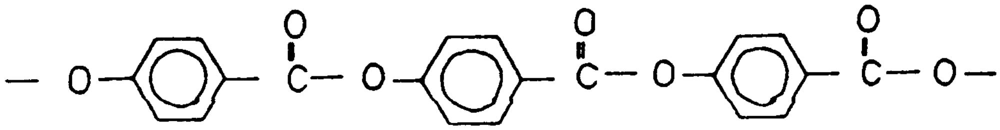,

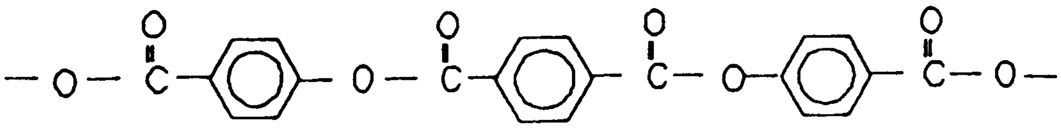,

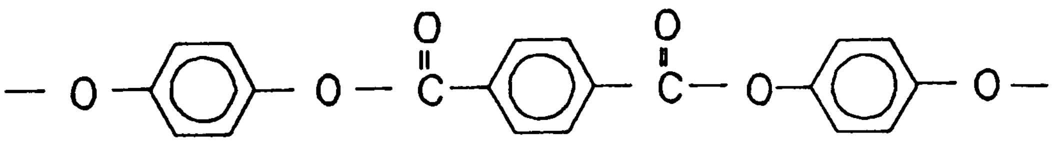,

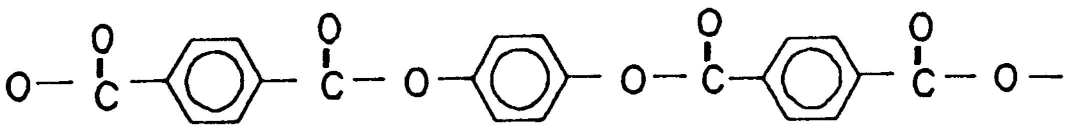,

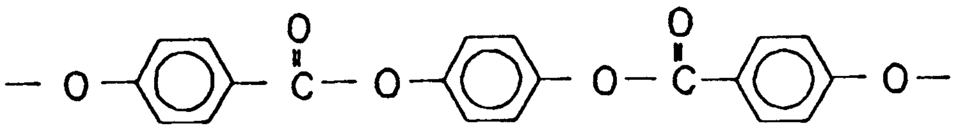,

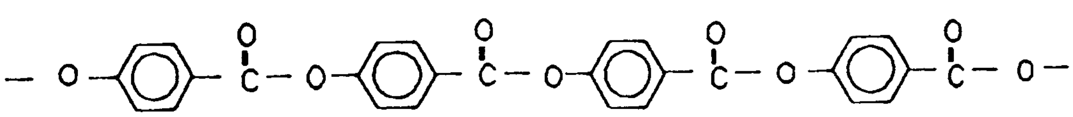,

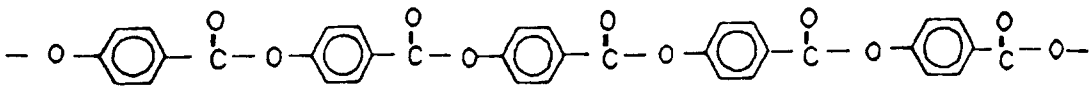,

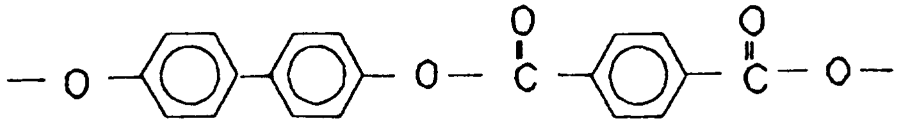,

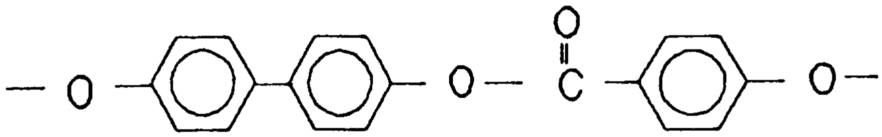,

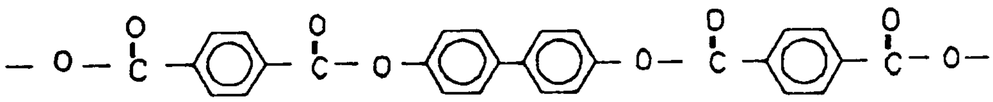,

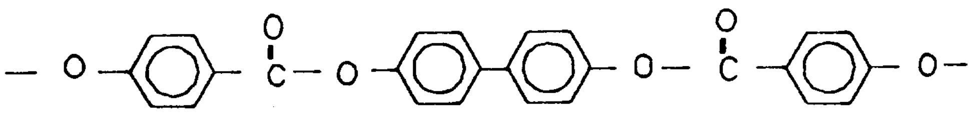,

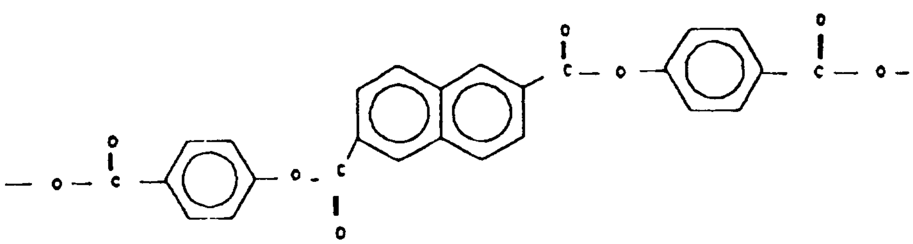,

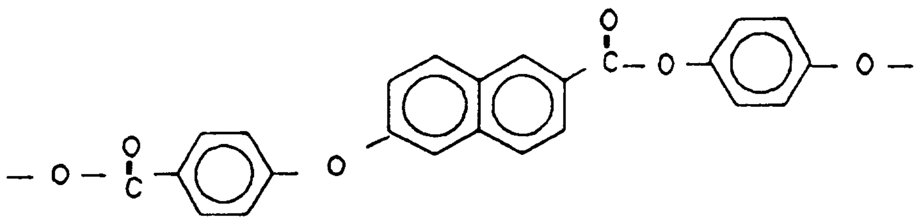

,

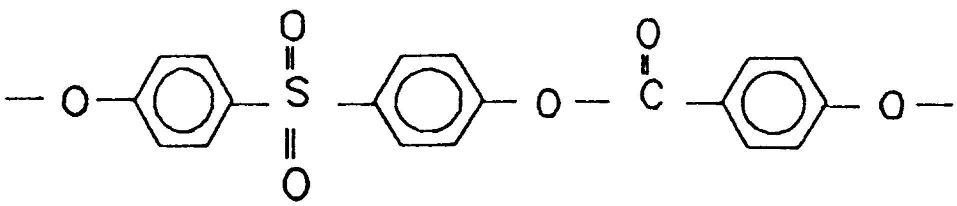

,

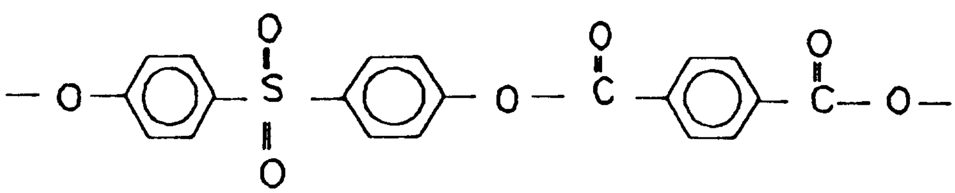

,

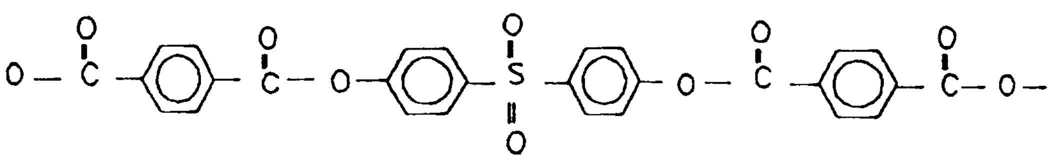

,

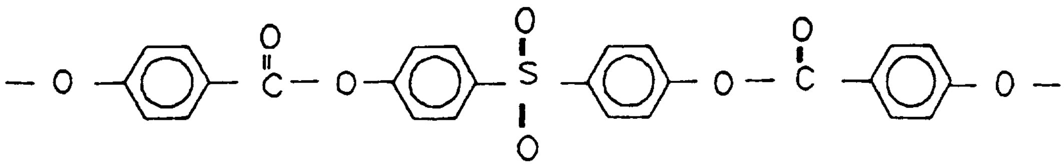

,

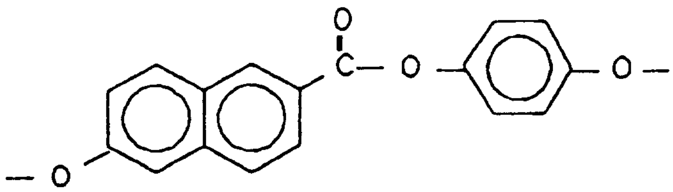

,

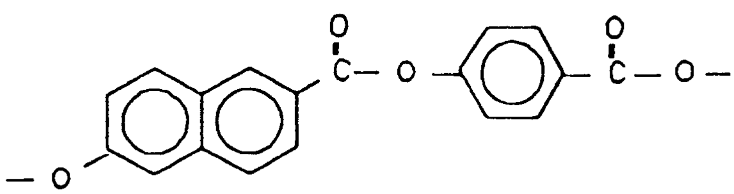

,

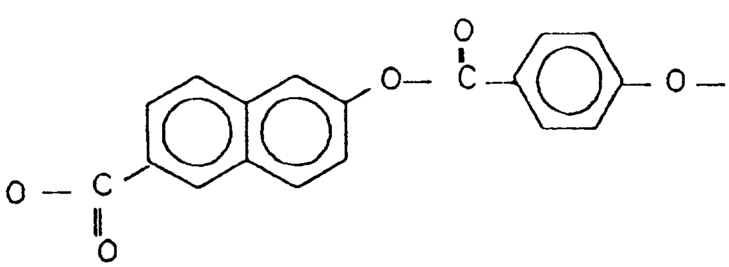

,

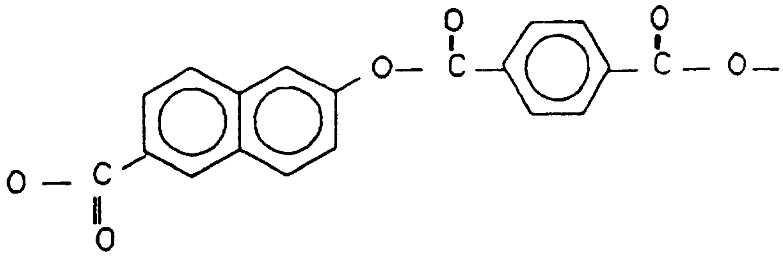

,

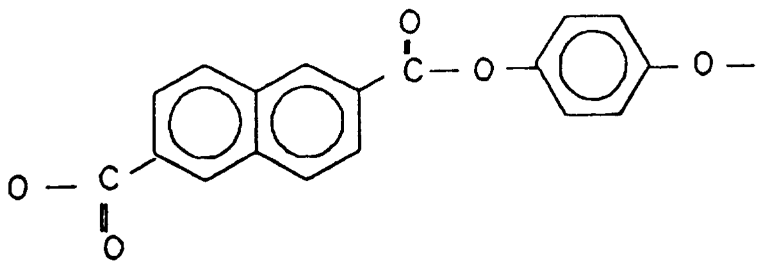

,

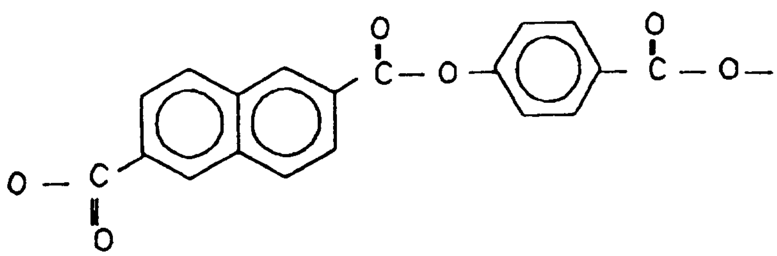

,

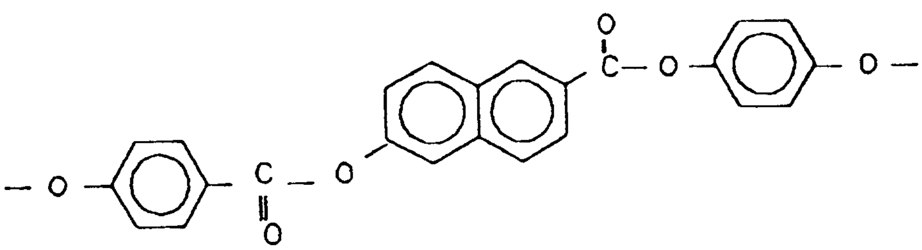

,

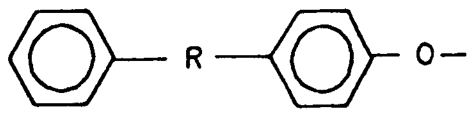

,

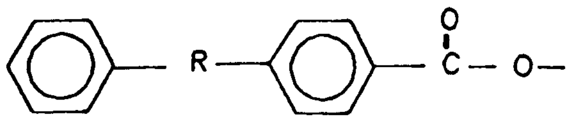

,

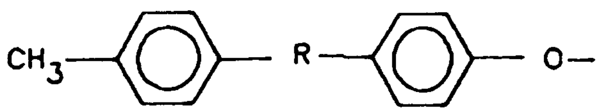

,

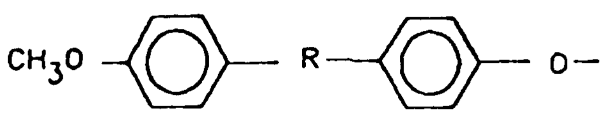

,

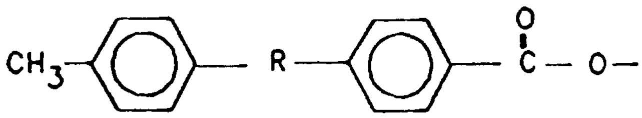

,

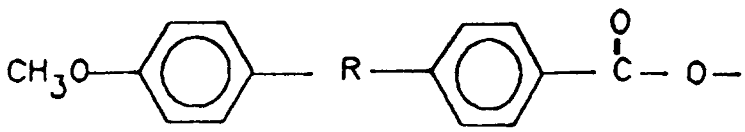

,

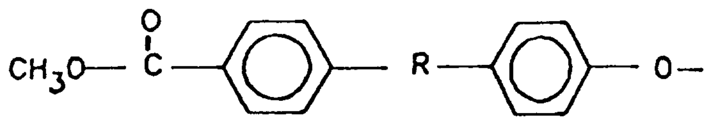

,

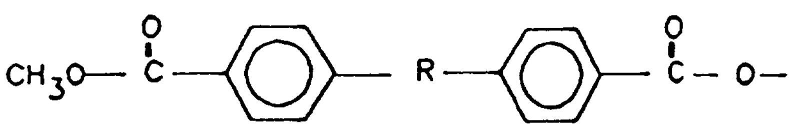

,

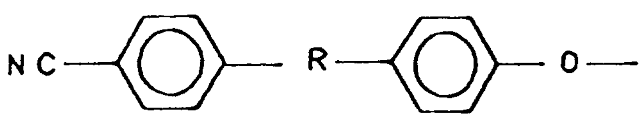

,

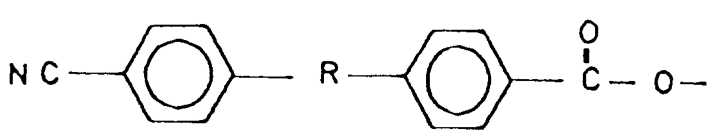

,

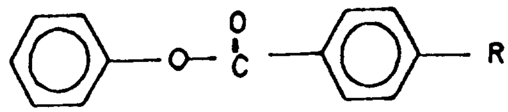 ,

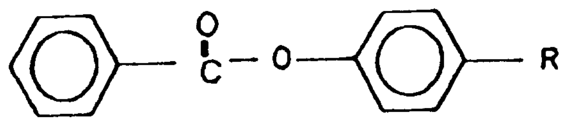 ,

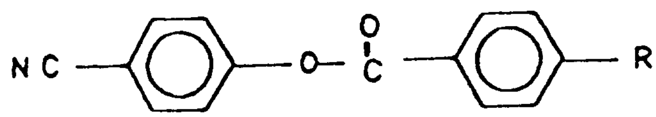 ,

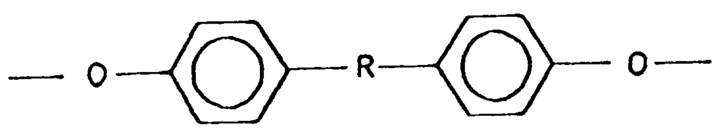 ,

und 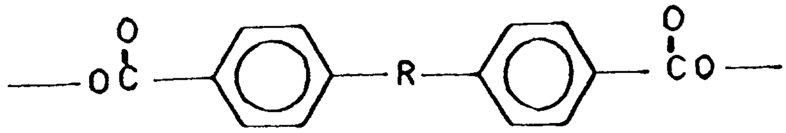 ,

worin R = -O-CO-CH=CH-CO-O- ist,
ausgewählt ist.

**26.** Polymer-Bindemittel zum Liefern eines Beschichtungs-Binders mit einer Glasübergangstemperatur (Tg) von nicht mehr als 60 °C, einer Bleistiftstärke von mindestens H, einem Beschichtungshaft-Widerstand von mindestens 3,4 J (30 inch-lbs), wenn der Beschichtungs-Binder eine Dicke von 25 µm (1 mil) aufweist, wobei das Polymer-Bindemittel umfaßt:

(a) 100 bis 35 Gew.-% eines modifizierten Polymers, bezogen auf das Gewicht des Polymer-Bindemittels, wobei das Polymer ein Produkt aus der Reaktion zwischen p-Hydroxybenzoesäure und

einem linearen Oligoesterdiol in Anwesenheit eines sauren Katalysators ist, wobei das Verhältnis der p-Hydroxysäure zu dem Diol jeweils im Bereich von 20/80 bis 60/40 liegt,

wobei das lineare Oligoesterdiol ein Reaktionsprodukt eines erhitzten Gemisches von Phthalsäure, Isophthalsäure, Terephthalsäure, Hexahydrophthalsäureanhydrid, einer aliphatischen Dicarbonsäure mit einer Kettenlänge von 4 bis 36 Kohlenstoffatomen und einem primären oder sekundären aliphatischen Diol mit 2 bis 23 Kohlenstoffatome ist, und

(b) 0 bis 65 Gew.-%, bezogen auf das Gewicht des Polymer-Bindemittels, eines aus der aus Polyisocyanat, Melamin und Gemischen davon bestehenden Gruppe ausgewählten Vernetzungs-Harzes.

**27.** Polymer-Bindemittel nach Anspruch 26, worin die aliphatische Dicarbonsäure Adipinsäure ist.

**28.** Polymer-Bindemittel nach Anspruch 27, worin das Diol Neopentylglycol ist.

**29.** Formulierte Beschichtung, die das Polymer-Bindemittel nach Anspruch 1, 2, 3, 11, 12 oder 26 enthält.

**30.** Beschichtungs-Binder mit einer Glasübergangstemperatur (Tg) von nicht mehr als 60 °C, einer Bleistift-Härte von mindestens H und einem Beschichtungshaft-Widerstand von mindestens 3,4 J (30 inch-lbs) bei einer Binderdicke von 25 µm (1 mil), der durch Aufbringen eines Polymer-Bindemittels auf ein Substrat in Anwesenheit eines Lösungsmittels dafür zur Verfügung gestellt wird, wobei das Polymer-Bindemittel wie in Anspruch 1 ist.

**31.** Beschichtungs-Binder nach Anspruch 30, worin der Beschichtungs-Binder vom Lufttrocknen vernetzten Sauerstoff enthält.

**32.** Beschichtungs-Binder nach Anspruch 31, worin das Polymer-Bindemittel ein Vernetzungs-Harz enthält, das aus der aus Aminoplast-Harzen, Polyisocyanat-Harzen und Gemischen davon bestehenden Gruppe ausgewählt ist.

**33.** Beschichtungs-Binder nach Anspruch 30, 31 oder 32, worin die mesogene Gruppe die Formel I aufweist.

**34.** Beschichtungs-Binder nach Anspruch 30, 31 oder 32, worin die mesogene Gruppe die Formel II aufweist.

**35.** Beschichtungs-Binder nach Anspruch 30, 31 oder 32, worin die mesogene Gruppe die Formel III aufweist.

**36.** Beschichtungs-Binder nach Anspruch 30, 31 oder 32, worin die mesogene Gruppe die Formel IV aufweist.

**37.** Beschichtungs-Binder nach Anspruch 30, 31 oder 32, worin die mesogene Gruppe die Formel V aufweist.

**38.** Beschichtungs-Binder nach Anspruch 30 oder 31 worin das modifizierte Polymer ein Molekulargewichts-Zahlenmittel von über 500 aufweist.

**39.** Beschichtungs-Binder nach Anspruch 30 oder 31, worin das modifizierte Polymer ein Polyester-Polymer mit einem Molekulargewichts-Zahlenmittel von 500 bis 20000 aufweist.

**40.** Beschichtungs-Binder nach Anspruch 30, worin die mesogenen Gruppen zur Bildung des modifizierten Polymers auf das Polyester-Polymer gepfropft werden.

**41.** Beschichtungs-Binder nach Anspruch 33, worin die mesogenen Gruppen zur Bildung des modifizierten Polymers auf das Polyester-Polymer gepfropft werden.

**42.** Beschichtungs-Binder nach Anspruch 34, worin die mesogenen Gruppen zur Bildung des modifizierten Polymers auf das Polyester-Polymer gepfropft werden.

**43.** Beschichtungs-Binder nach Anspruch 35, worin die mesogenen Gruppen zur Bildung des modifizierten Polymers auf das Polyester-Polymer gepfropft werden.

**44.** Beschichtungs-Binder nach Anspruch 36, worin die mesogenen Gruppen zur Bildung des modifizierten Polymers auf das Polyester-Polymer gepfropft werden.

**45.** Beschichtungs-Binder nach Anspruch 37, worin die mesogenen Gruppen zur Bildung des modifizierten Polymers auf das Polyester-Polymer gepfropft werden.

**46.** Verfahren zur Herstellung eines Beschichtungs-Binders nach Anspruch 30 umfassend:

Mischen eines modifizierten Polymers mit einer aus der aus Vernetzungs-Harz, nicht-modifiziertem Polymer-Harz und Gemischen davon bestehenden Gruppe ausgewählten Zusammensetzung unter Bildung des Polymer-Bindemittels, das mindestens 35 Gew.-% des modifizierten Polymers, bezogen auf das Gewicht des Polymer-Bindemittels, enthält, wobei das modifizierte Polymer ein Polyester-Polymer ist, das an mindestens eine mesogene Gruppe kovalent gebunden ist, die aus der aus den Resten der Formeln I, II, III, IV, und V bestehenden Gruppe ausgewählt ist:

I.

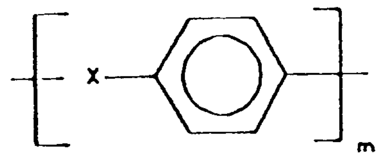

II. 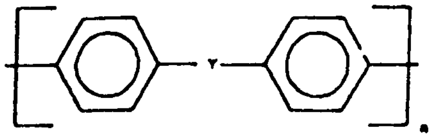

III. 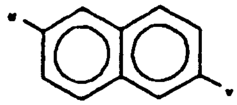 , 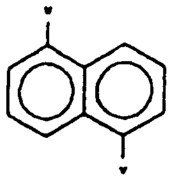

IV. Kombinationen von I, II und 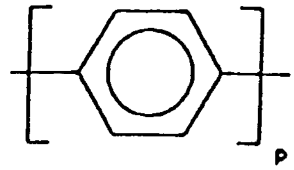

V. Kombinationen von III und 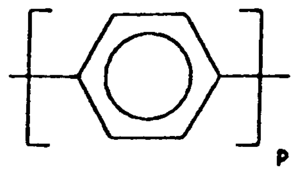

worin

X= 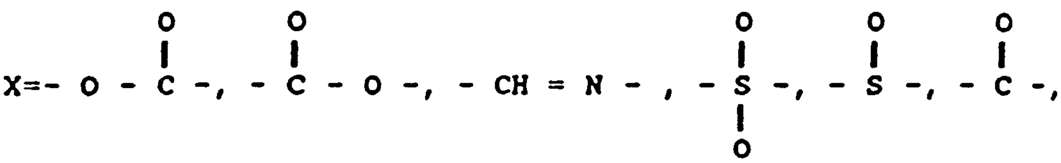

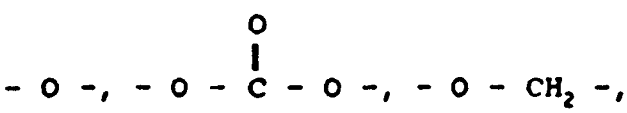

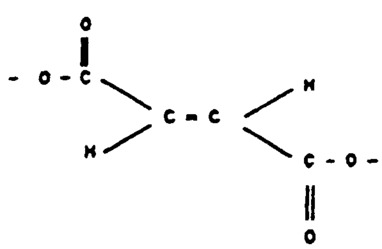 , 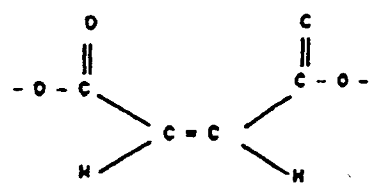

Y = X oder 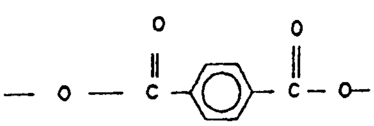 , oder 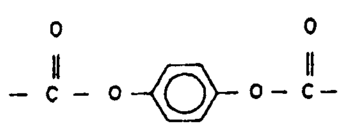

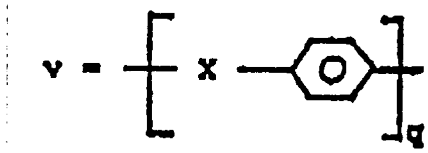

u = X,

m = eine ganze Zahl von 2 bis 8,

n = 1 oder 2,

p = eine ganze Zahl von 1 bis 4,

q = eine ganze Zahl von 1 bis 3, und

wobei das Polymer-Bindemittel nicht mehr als 65 Gew.-% von der Zusammensetzung und dem modifizierten Polymer, bezogen auf das Gewicht des Polymer-Bindemittels, enthält, wobei das modifizierte Polymer 5 bis 50 Gew.-% mesogene Gruppen, bezogen auf das Gewicht des modifizierten Polymers, aufweist.

**47.** Verfahren nach Anspruch 46, worin das Vernetzungs-Harz mit dem Polymer-Bindemittel umgesetzt wird.

**48.** Verfahren nach Anspruch 47, worin das Vernetzungs-Harz und das Polymer-Bindemittel gebacken wird.

**49.** Verfahren nach Anspruch 46, worin der Beschichtungs-Binder durch Trocknen bei Raumtemperatur gebildet wird.

**50.** Verfahren nach Anspruch 49, worin der Beschichtungs-Binder in Anwesenheit von Sauerstoff getrocknet wird.

**51.** Verfahren nach Anspruch 46, worin das modifizierte Polymer ein Molekulargewichts-Zahlenmittel von über 500 besitzt.

**52.** Verfahren nach Anspruch 46, worin das modifizierte Polyester-Polymer ein Molekulargewichts-Zahlenmittel im Bereich zwischen 500 und 20000 besitzt und mit einem Vernetzungs-Harz vermischt ist.

**53.** Verfahren nach Anspruch 46, worin das Polyester-Produkt das Reaktionsprodukt von Polysäuren und Polyolen ist.

**54.** Verfahren nach Anspruch 46, das weiter Mischen eines Polymers mit dem Polymer-Bindemittel umfaßt.

**55.** Verfahren nach Anspruch 46, das weiter Mischen eines zweiten modifizierten Polymers mit dem Polymer-Bindemittel umfaßt.

**56.** Verfahren nach Anspruch 46, worin das modifizierte Polymer mit dem Vernetzungs-Harz vernetzt wird.

**57.** Verfahren nach Anspruch 46, worin die mesogenen Gruppen zur Bildung des modifizierten Polymers auf das Polyester-Polymer gepfropft werden.

**58.** Verfahren nach Anspruch 46 oder 57, worin die mesogene Gruppe die Formel I aufweist.

**59.** Verfahren nach Anspruch 46 oder 57, worin die mesogene Gruppe die Formel II aufweist.

**60.** Verfahren nach Anspruch 46 oder 57, worin die mesogene Gruppe die Formel III aufweist.

**61.** Verfahren nach Anspruch 46 oder 57, worin die mesogene Gruppe die Formel IV aufweist.

**62.** Verfahren nach Anspruch 46 oder 57, worin die mesogene Gruppe die Formel V aufweist.

**63.** Verfahren zur Herstellung einer formulierten Beschichtungs-Zusammensetzung, die, wenn sie auf ein Substrat aufgetragen wird, einen Beschichtungs-Binder nach Anspruch 30 liefert, wobei das Verfahren umfaßt:

Mischen eines modifizierten Polymers mit einer aus der aus Vernetzungs-Harz, nicht-modifiziertem Polymer-Harz und Gemischen davon bestehenden Gruppe ausgewählten Zusammensetzung unter Bildung des Polymer-Bindemittels, das mindestens 35 Gew.-% des modifizierten Polymers, bezogen auf das Gewicht des Polymer-Bindemittels, enthält, wobei das modifizierte Polymer aus der Gruppe ausgewählt ist, bestehend aus einem Polyester-Polymer, das an mindestens eine mesogene Gruppe, die aus der aus den Resten der Formeln I, II, III, IV, und V bestehenden Gruppe ausgewählt ist, kovalent gebunden ist:

I. 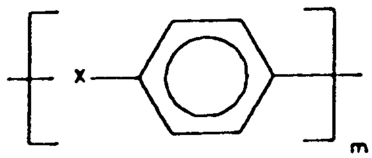

II. 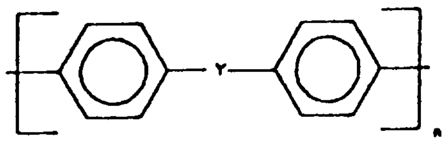

III. 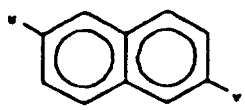 or 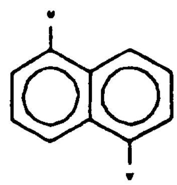

IV. Kombinationen von I, II und 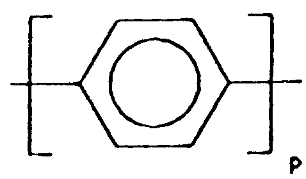

V. Kombinationen von III und 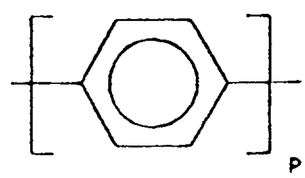

worin

X= 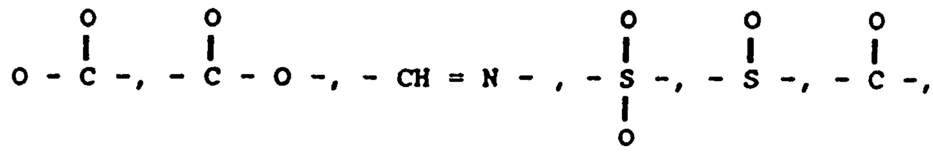

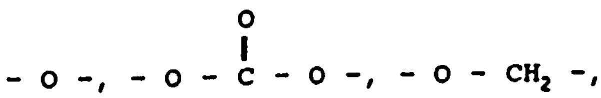

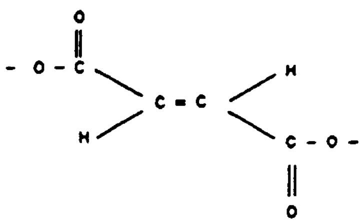 . 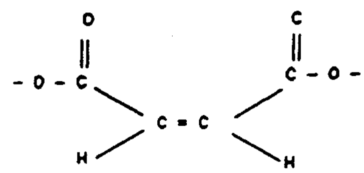

Y = X oder 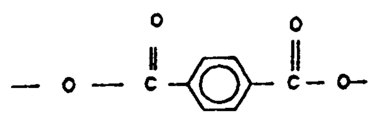 , oder 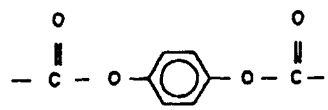

V = 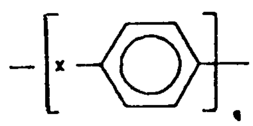

u = X;
m = eine ganze Zahl von 2 bis 8;
n = 1 oder 2;
p = eine ganze Zahl von 1 bis 4;
q = eine ganze Zahl von 1 bis 3; und

wobei das Polymer-Bindemittel nicht mehr als 65 Gew.-% von der Zusammensetzung und dem modifizierten Polymer, bezogen auf das Gewicht des Polymer-Bindemittels, enthält, wobei das modifizierte Polymer 5 bis 50 Gew.-% mesogene Gruppen, bezogen auf das Gewicht des modifizierten Polymers, aufweist.

**64.** Verfahren nach Anspruch 63, welches weiter Mischen des Polymer-Bindemittels mit einem Lösungsmittel und Additiven umfaßt.

**65.** Verfahren nach Anspruch 64, worin die mesogenen Gruppen zur Bildung des modifizierten Polymers auf das Polyester-Polymer gepfropft werden.

**66.** Verfahren nach Anspruch 63, welches weiter Mischen eines Lösungsmittels und eines Pigments mit dem Polymer-Bindemittel umfaßt.

**67.** Verfahren nach Anspruch 63, worin die mesogenen Gruppen zur Bildung des modifizierten Polymers auf das Polyester-Polymer gepfropft werden.

**68.** Verfahren nach Anspruch 63, 65, 66 oder 67, worin die mesogene Guppe die Formel I aufweist.

**69.** Verfahren nach Anspruch 63, 65, 66 oder 67, worin die mesogene Guppe die Formel II aufweist.

**70.** Verfahren nach Anspruch 63, 65, 66 oder 67, worin die mesogene Guppe die Formel III aufweist.

**71.** Verfahren nach Anspruch 63, 65, 66 oder 67, worin die mesogene Guppe die Formel IV aufweist.

**72.** Verfahren nach Anspruch 63, 65, 66 oder 67, worin die mesogene Guppe die Formel V aufweist.

**73.** Polymer-Bindemittel, das, wenn es auf ein Substrat aufgetragen wird, einen Beschichtungs-Binder liefert, der eine Glasübergangstemperatur (Tg) von nicht mehr als 60 °C, eine Bleistift-Härte von mindestens H und einen Beschichtungshaft-Widerstand von mindestens 3,4 J (30 inch-lbs) bei einer Binderdicke von 25 µm (1 mil) aufweist, wobei das Polymer-Bindemittel umfaßt:

(a) 100 bis 35 Gew.-% eines modifizierten Polymers, bezogen auf das Gewicht des Polymer-Bindemittels, wobei das modifizierte Polymer ein Polyester-Polymer ist, das mindestens an eine mesogene Gruppe gebunden ist, die aus der Gruppe ausgewählt ist, bestehend aus:

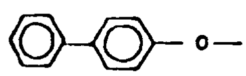 , 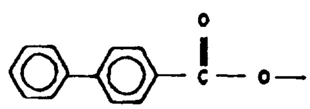 , 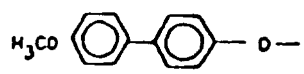 ,

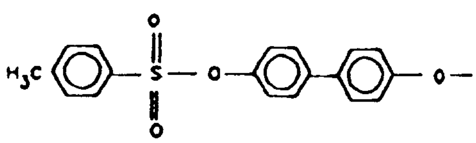 ,

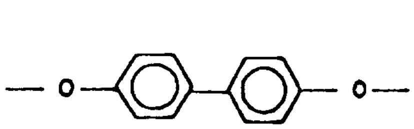 , 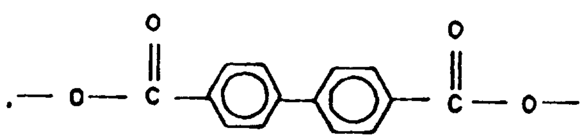 ,

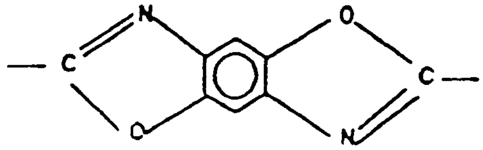 ,

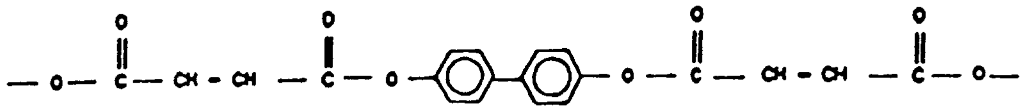

und 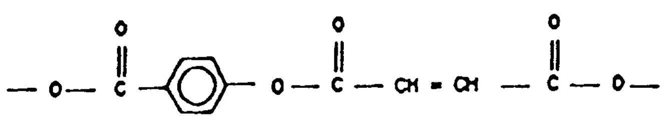 . und

(b) 0 bis 65 Gew.-% eines Vernetzungs-Harzes und des modifizierten Polymers, bezogen auf das Gewicht des Polymer-Bindemittels, wobei das modifizierte Polymer 5 bis 50 % mesogene Gruppen enthält.

**74.** Polyol, das die folgende Formel aufweist

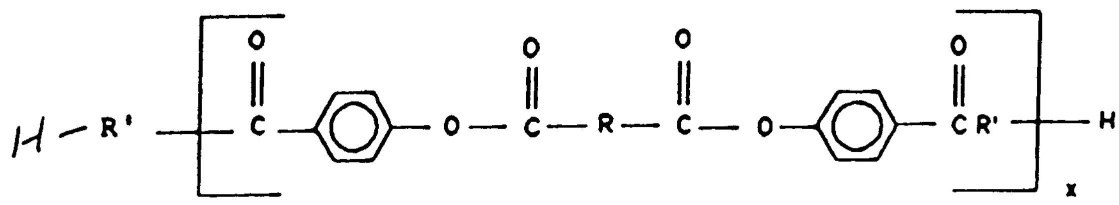

worin

X = 1 bis 10,

R =

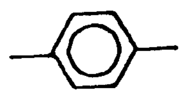 ;

R' = $O(CH_2)_nO$, $O[(CH_2)_nO]_m$,

$$-\ O\ -[-CH_2\ -\ \overset{CH_3}{CH}\ -\ O\ -]_p-$$

$\{O[(CH_2)_5COO]_pR''''\}_2$, und

$O[R''OOCR'''COO]_pR''O$,

R'' und R'''' = ein aliphatischer oder cycloaliphatischer Rest mit 12 oder weniger Kohlenstoffatomen,

R''' = ein aromatischer Rest mit 10 oder weniger Kohlenstoffatomen, ein cycloaliphatischer Rest mit 12 oder weniger Kohlenstoffatomen oder ein aliphatischer Rest mit 36 oder weniger Kohlenstoffatomen,

n = 5 bis 16,

m = 2 bis 200, und

p = 1 bis 20.

## Revendications

**1.** Véhicule polymère qui, lorsqu'il est appliqué à un substrat, procure un liant de revêtement ayant une Tg non supérieure à 60 °C, une dureté à la rayure d'au moins H et une résistance au détachement brusque d'au moins 3,4 J à une épaisseur de liant de 25 µm, ce véhicule polymère comprenant :

(a) de 100 à 35 % en poids, par rapport au poids du véhicule polymère, d'un polymère modifié, ce polymère modifié étant un polymère polyester lié de manière covalente à au moins un groupe mésogène choisi parmi le groupe comprenant des radicaux des formules I, II, III, IV et V :

I. 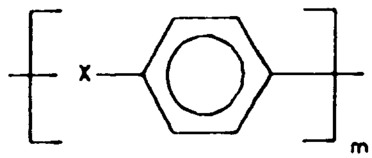

II. 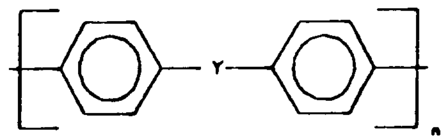

III. 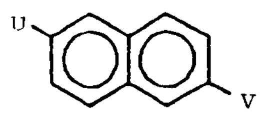 ou 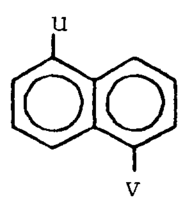

IV. des combinaisons de I, II et 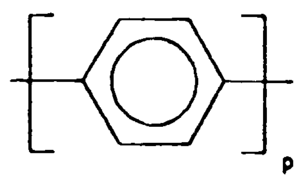

V. des combinaisons de III et 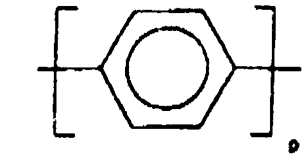

dans lesquelles

X= 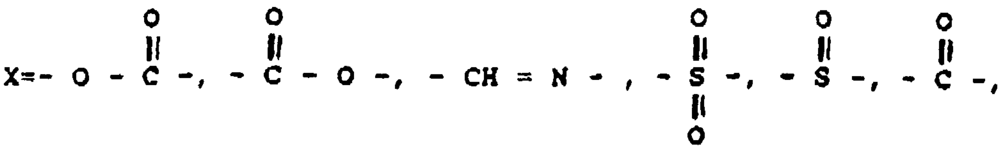

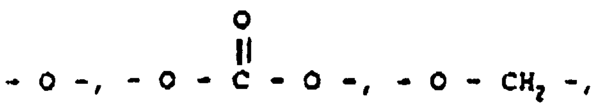

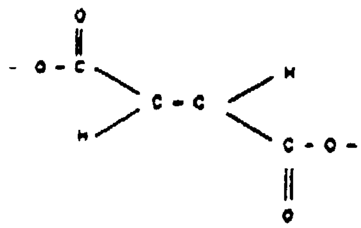

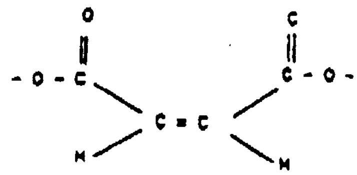

Y = X ou 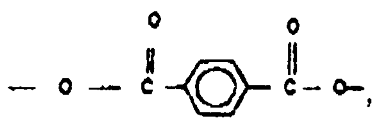, ou 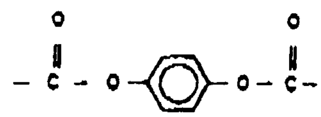

Y= 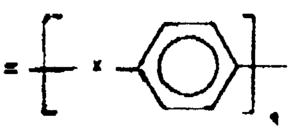

u = X

m = un nombre entier de 2 à 8,

n = 1 ou 2

p = un nombre entier de 1 à 4,

q = un nombre entier de 1 à 3, et

(b) de 0 à 65 % en poids, par rapport au poids du véhicule polymère, d'une composition choisie parmi le groupe comprenant une résine de réticulation, une résine polymère non modifiée et leurs mélanges, le polymère modifié étant modifié pour contenir 5 à 50 % en poids de groupes mésogènes.

2. Véhicule polymère suivant la revendication 1, caractérisé en ce que les groupes mésogènes sont greffés sur le polymère polyester pour former le polymère modifié.

3. Véhicule polymère suivant la revendication 2, caractérisé en ce que le polymère polyester est pourvu de groupes fonctionnels carboxyliques par réaction du polymère polyester avec un anhydride ou acide dicarboxylique pour pourvoir le polymère de sites réactifs pour le réaction avec les groupes mésogènes.

4. Véhicule polymère suivant l'une quelconque des revendications 1, 2 et 3, caractérisé en ce que le polymère polyester est un polymère alkyde.

5. Véhicule polymère suivant la revendication 3, caractérisé en ce que l'anhydride ou acide dicarboxylique est choisi parmi le groupe comprenant de l'acide téréphtalique, de l'acide adipique, de l'acide isophtalique, de l'acide succinique, de l'anhydride succinique, de l'acide phtalique, de l'anhydride phtalique, de l'acide maléique, de l'anhydride maléique et leurs mélanges.

6. Véhicule polymère suivant la revendication 3, caractérisé en ce que le polyester est un polymère alkyde et en ce que l'anhydride ou acide dicarboxylique est choisi parmi le groupe comprenant de l'acide téréphtalique, de l'acide adipique, de l'acide isophtalique, de l'acide succinique, de l'anhydride succinique, de l'acide phtalique, de l'anhydride phtalique, de l'acide maléique, de l'anhydride maléique et leurs mélanges.

7. Véhicule polymère suivant la revendication 1, caractérisé en ce que le groupe mésogène greffé sur le polyester présente la formule

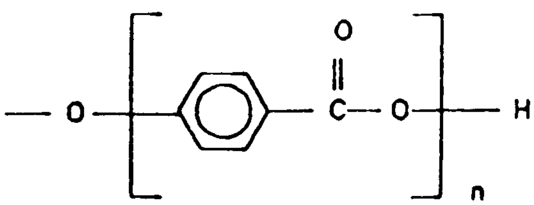

où n = 2 à 8.

8. Véhicule polymère suivant l'une des revendications 1, 2 et 3, caractérisé en ce qu'un ou plusieurs des groupes mésogènes est terminé par -H, -CN,

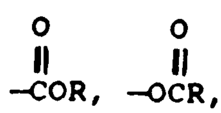

et -OR, où R représente H, un alkyle à chaîne linéaire ou ramifiée comportant 1 à 12 atomes de carbone et un aryle comportant 6 à 12 atomes de carbone.

9. Véhicule polymère suivant la revendication 1, caractérisé en ce que le groupe mésogène greffé sur le polymère polyester présente la formule

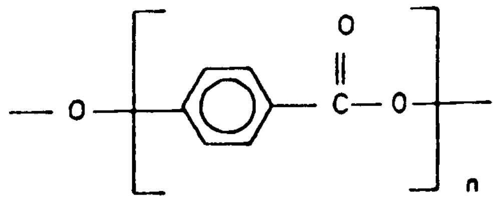

dans laquelle n = 2 à 8.

**10.** Véhicule polymère suivant l'une des revendications 7 et 9, caractérisé en ce que le polymère modifié présente des segments greffés ayant un degré de polymérisation moyen de l'ordre de 2,0 à 6,0.

**11.** Véhicule polymère suivant la revendication 1, caractérisé en ce que le polymère modifié est un polyol qui présente la formule

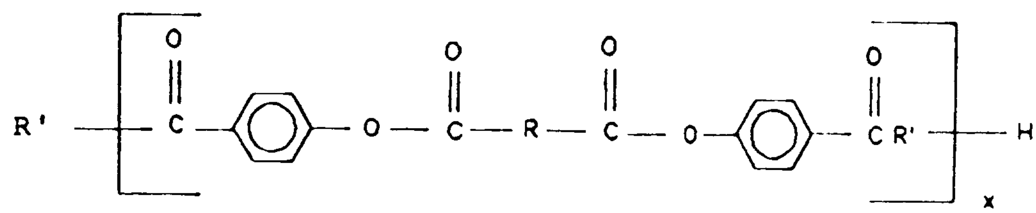

dans laquelle
x = 1 à 10
R =

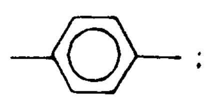

R' = $O(CH_2)_nO$, $O[(CH_2)_nO]_m$,

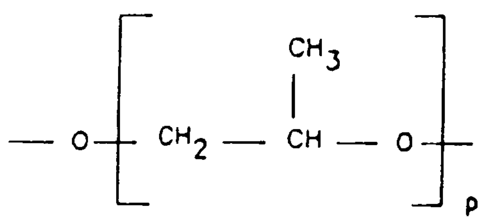

$\{O[(CH_2)_5COO]_pR''''\}_2$, et
$O[R''OOCR'''COO]_pR''O$ ,
R'' et R'''' = un radical aliphatique ou cycloaliphatique comportant 12 atomes de carbone ou moins,
R''' = un radical aromatique comportant 10 atomes de carbone ou moins, un radical cycloaliphatique comportant 12 atomes de carbone ou moins, ou un radical aliphatique comportant 36 atomes de carbone ou moins,
n = 5 à 16,
m = 2 à 200, et
p = 1 à 20.

**12.** Véhicule polymère suivant la revendication 1, caractérisé en ce que le groupe mésogène présente la formule I.

**13.** Véhicule polymère suivant la revendication 1, caractérisé en ce que le groupe mésogène présente la formule II.

**14.** Véhicule polymère suivant la revendication 1, caractérisé en ce que le groupe mésogène présente la formule III.

**15.** Véhicule polymère suivant la revendication 1, caractérisé en ce que le groupe mésogène présente la formule IV.

**16.** Véhicule polymère suivant la revendication 1, caractérisé en ce que le groupe mésogène présente la formule V.

**17.** Véhicule polymère suivant l'une des revendications 1, 2, 3, 11, 12, 13, 14, 15 et 16, caractérisé en ce que le véhicule polymère comprend une résine de réticulation et en ce que la résine de réticulation est choisie parmi le groupe comprenant des résines aminoplastes, des résines de polyisocyanate et leurs mélanges.

**18.** Véhicule polymère suivant la revendication 17, caractérisé en ce que la résine aminoplaste est une résine de mélamine.

**19.** Véhicule polymère suivant la revendication 1, caractérisé en ce que le polymère modifié est exempt de résine de réticulation et présente un poids moléculaire moyen supérieur à 7.000.

**20.** Véhicule polymère suivant la revendication 1, caractérisé en ce que le véhicule polymère comprend une résine de réticulation et en ce que le polymère modifié est un polymère polyester qui présente un poids moléculaire moyen de l'ordre de 500 à 20.000.

**21.** Véhicule polymère suivant la revendication 1, caractérisé en ce que le polymère polyester est préparé par réaction d'un polyacide avec un polyol.

**22.** Véhicule polymère suivant la revendication 21, caractérisé en ce que le polyacide est un acide dicarboxylique comportant une longueur de chaîne carbonée de 4 à 36.

**23.** Véhicule polymère suivant la revendication 22, caractérisé en ce que le polyacide est choisi parmi le groupe comprenant de l'acide isophtalique, de l'acide téréphtalique, de l'acide fumarique, $HOCC(CH_2)_nCOOH$, de l'acide maléique, de l'acide phtalique, de l'acide hexahydrophtalique et de l'acide trimellique et des anhydrides d'acide maléique, d'acide phtalique, d'acide hexahydrophtalique et d'acide succinique et en ce que n = 2 à 14.

**24.** Revêtement formulé, comprenant le véhicule polymère suivant la revendication 16.

**25.** Véhicule polymère suivant la revendication 1, caractérisé en ce que le groupe mésogène est choisi parmi le groupe comprenant :

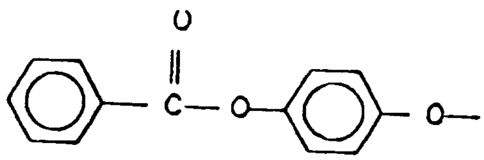

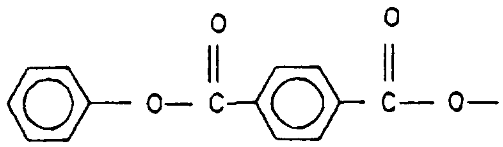 ,

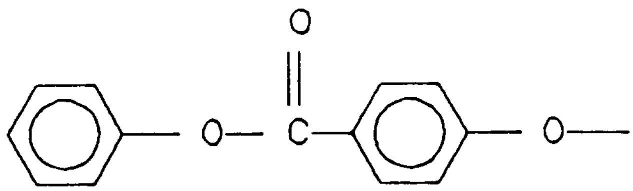 ,

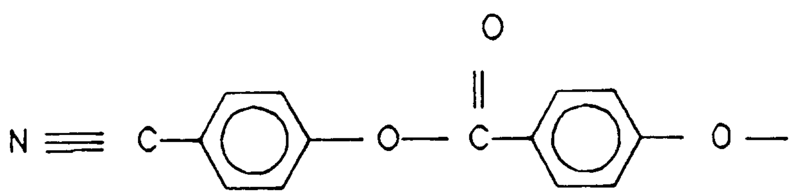 ,

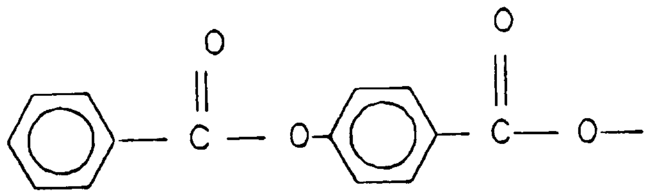

,

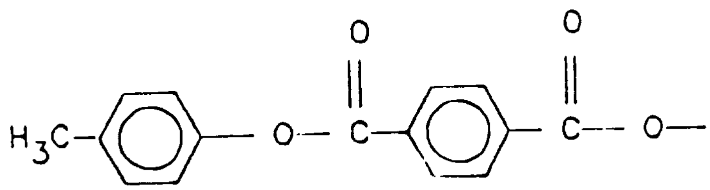

,

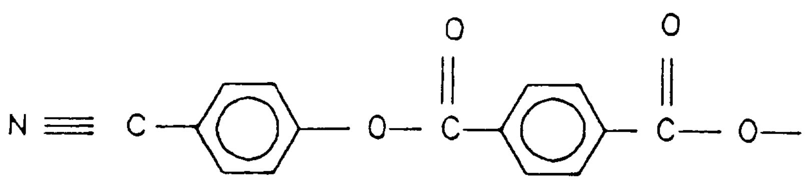

,

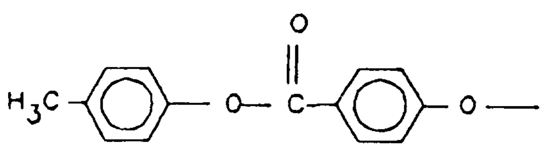

,

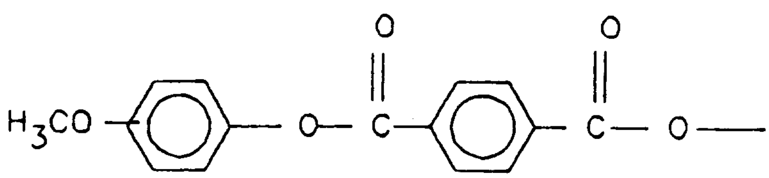

,

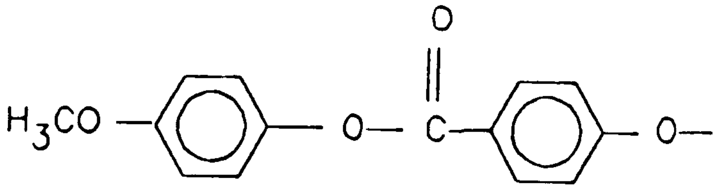

,

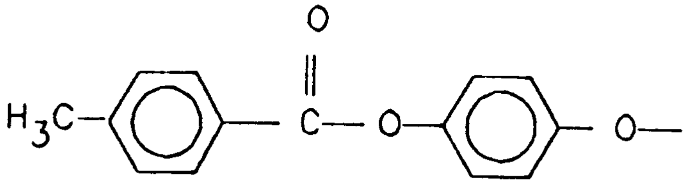

,

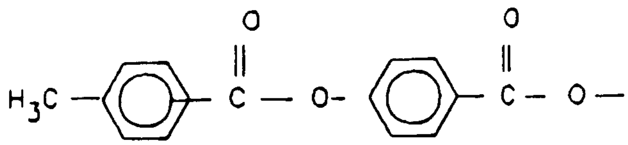

,

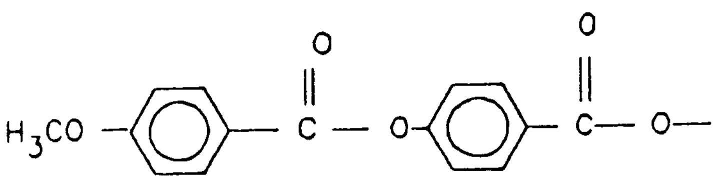

,

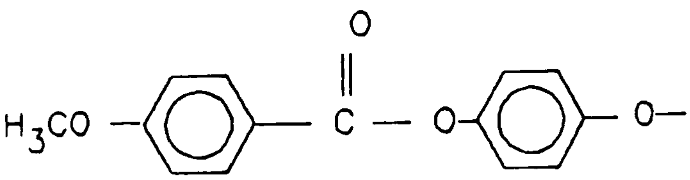

,

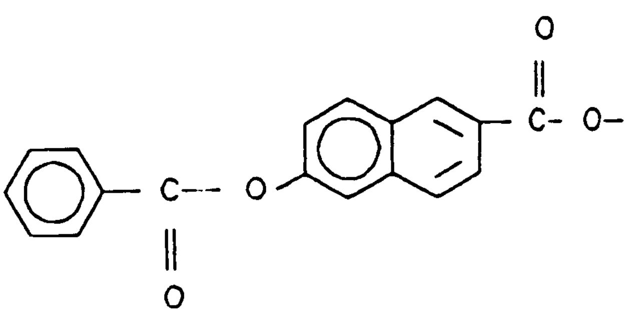

,

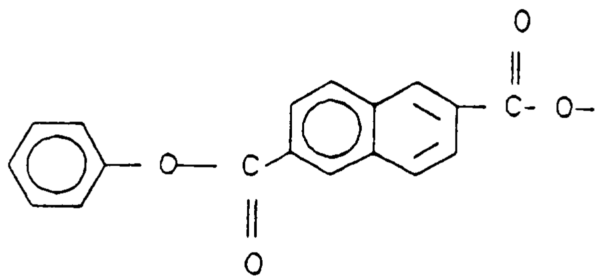

,

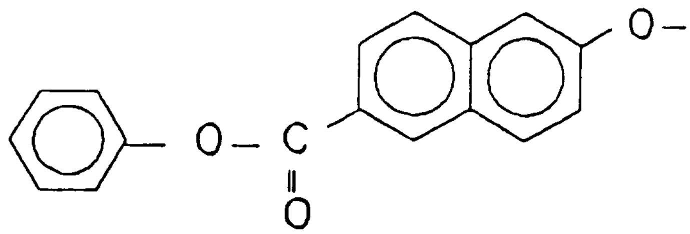

,

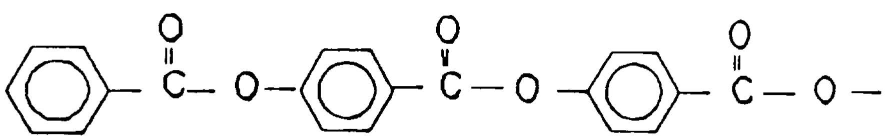

,

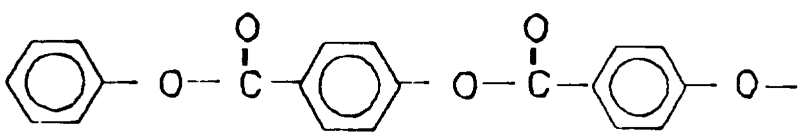

,

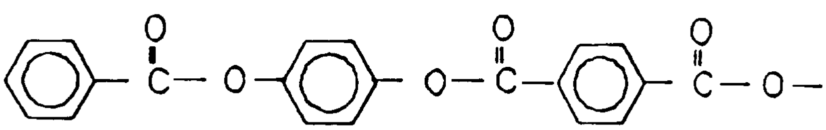

,

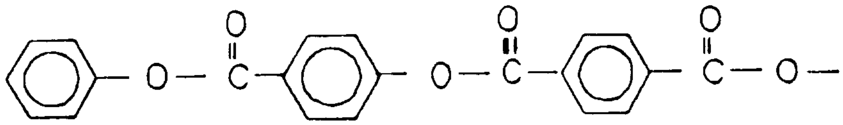 ,

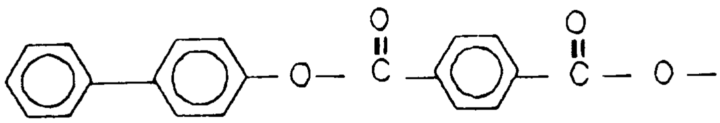 ,

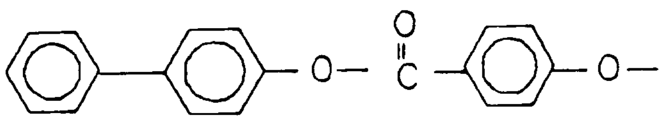 ,

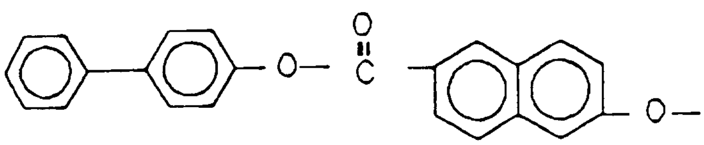 ,

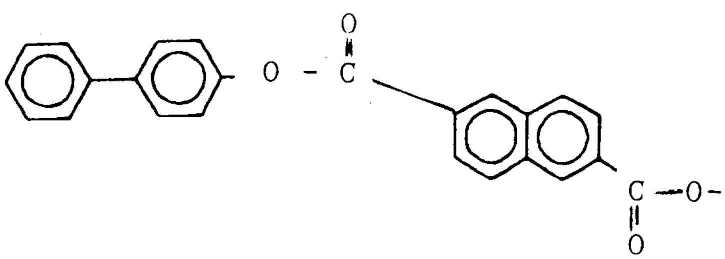 ,

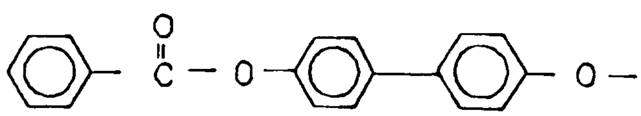 ,

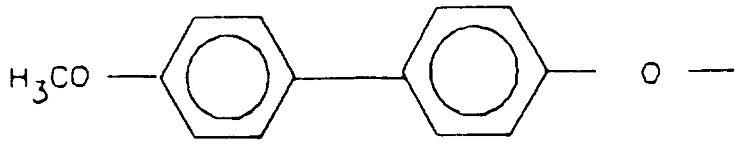
,

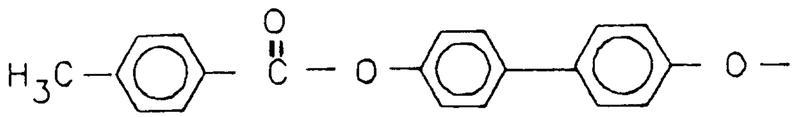
,

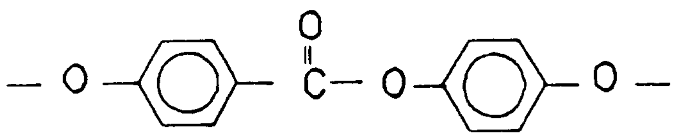
,

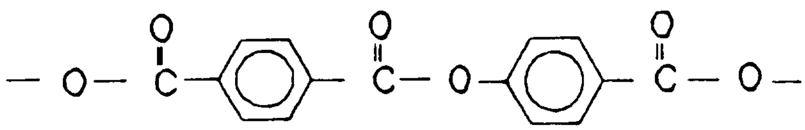
,

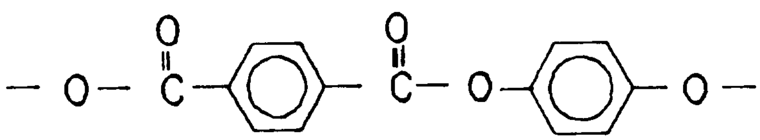
,

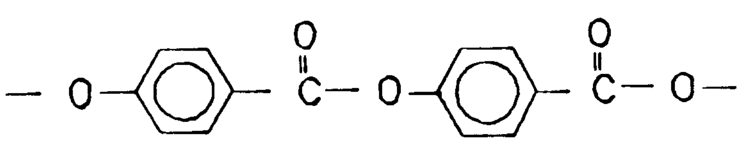
,

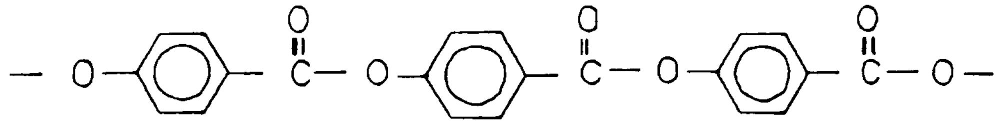

,

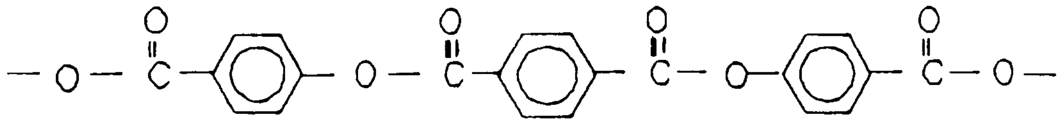

,

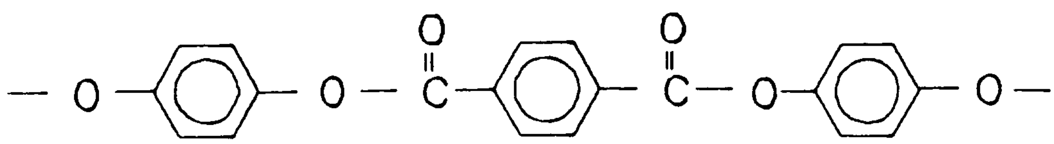

,

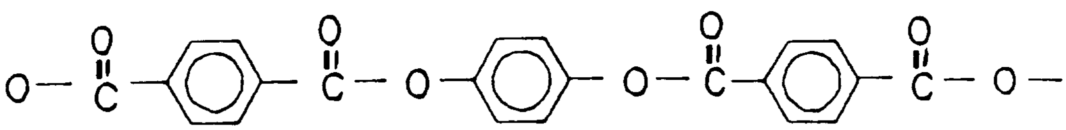

,

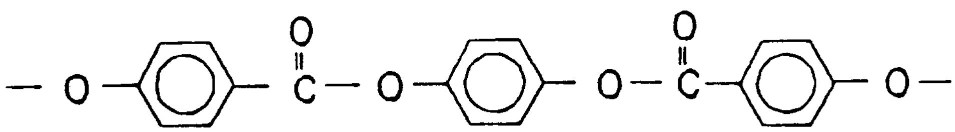

,

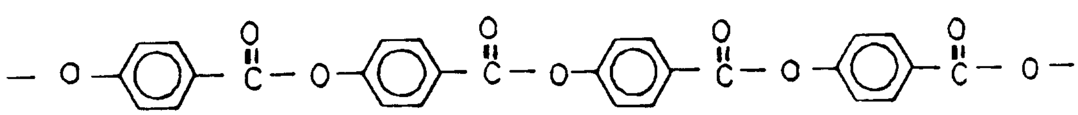

,

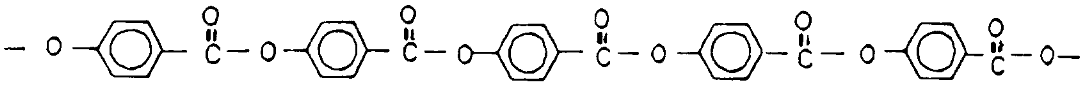

)

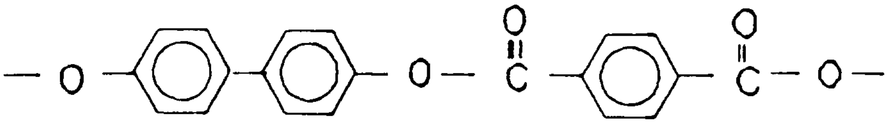

,

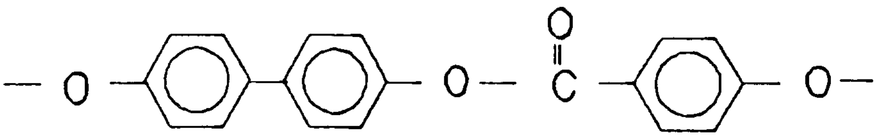

,

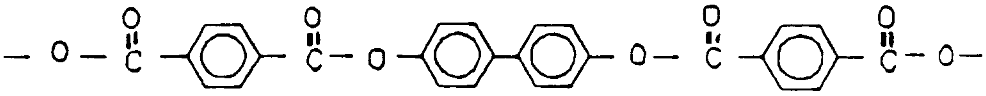

,

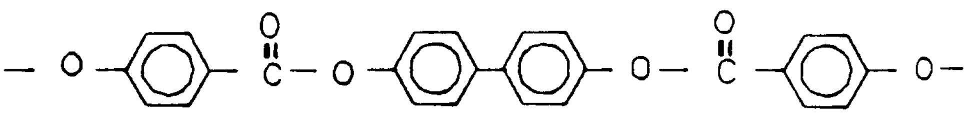

,

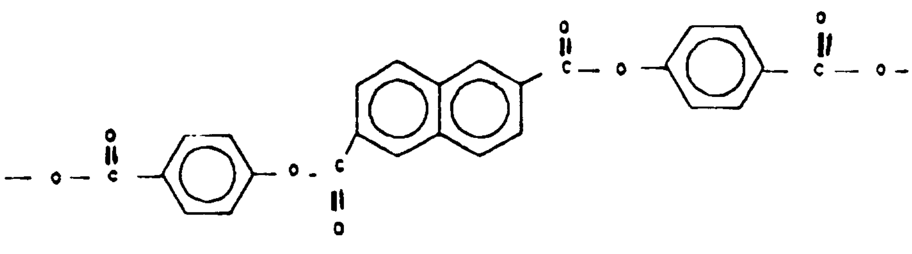

,

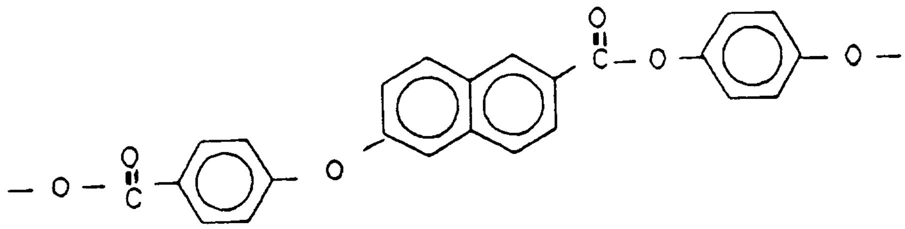

,

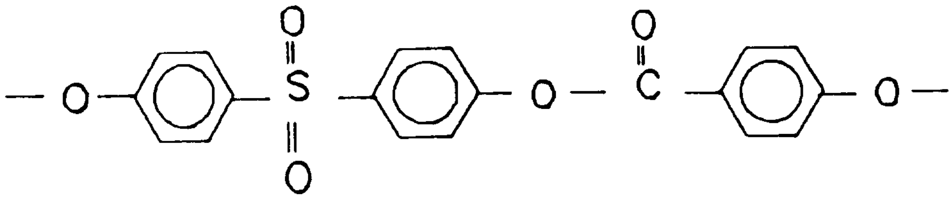

,

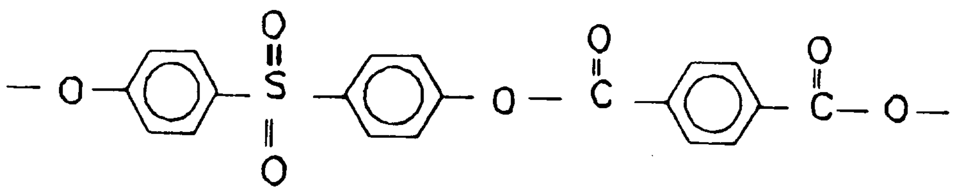

,

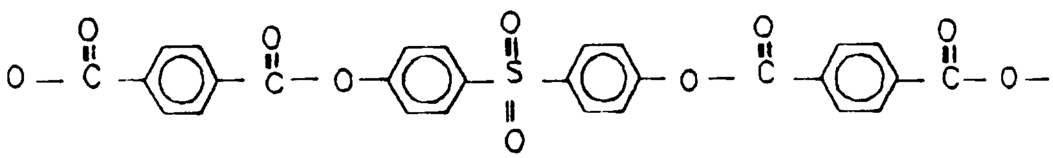

,

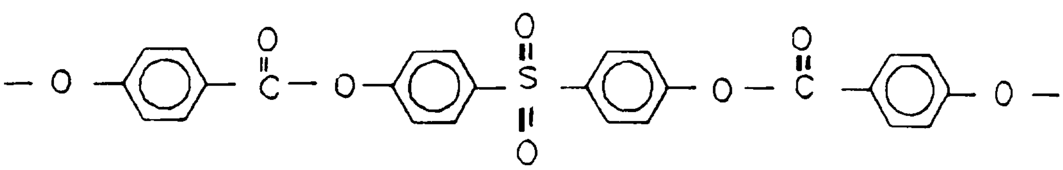

,

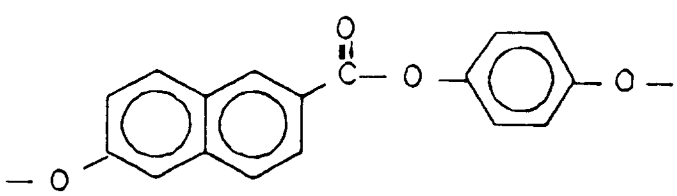

,

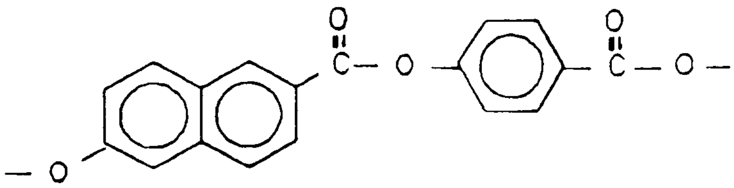

,

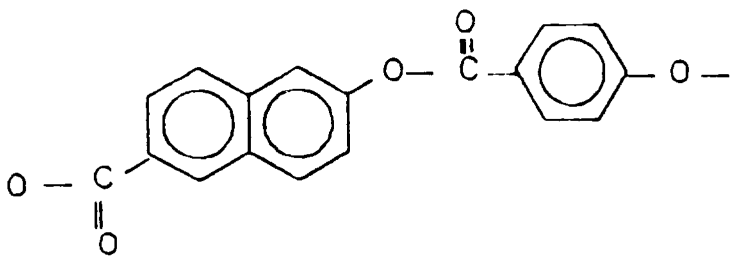

,

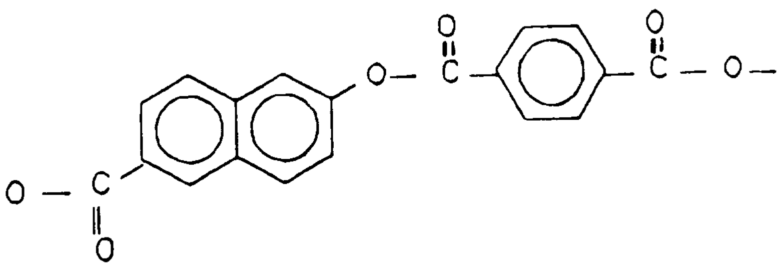

,

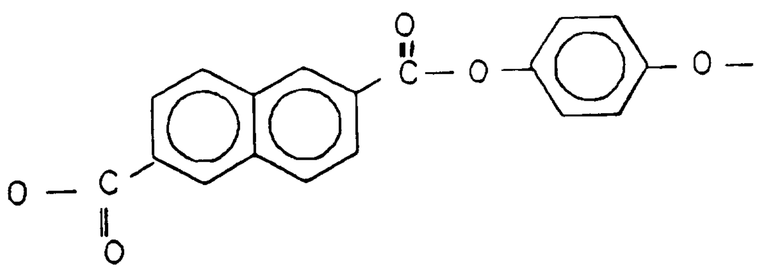

,

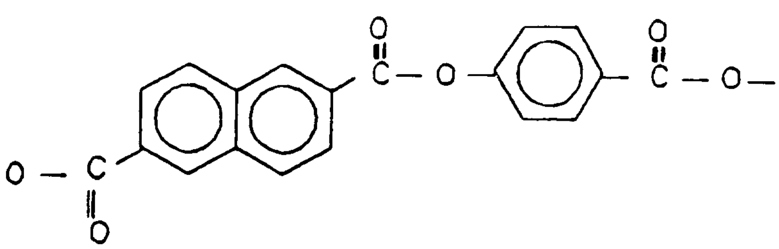

,

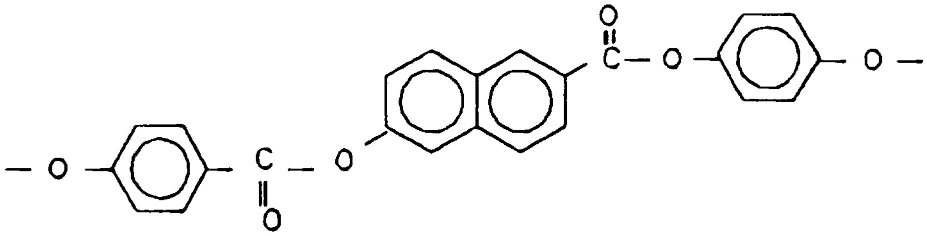

,

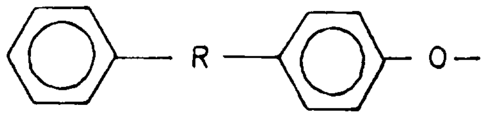

,

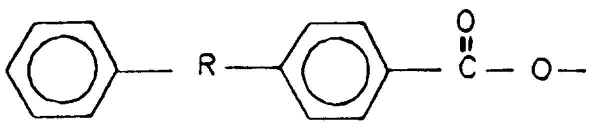

,

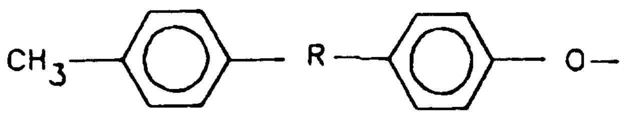

,

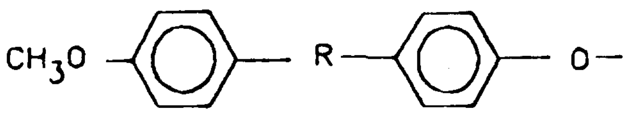

,

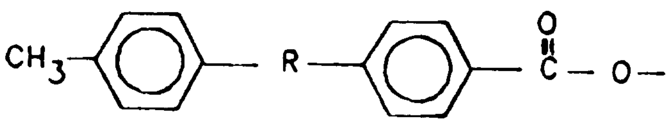

,

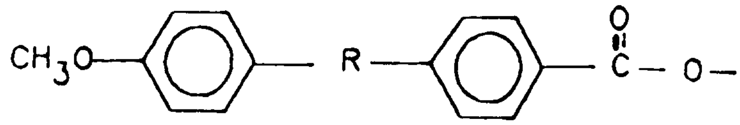

,

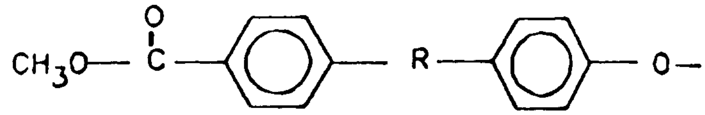

,

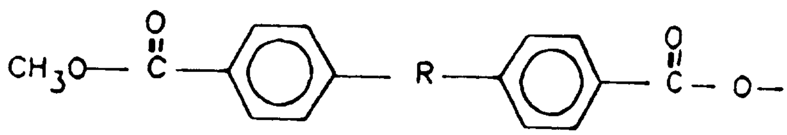

,

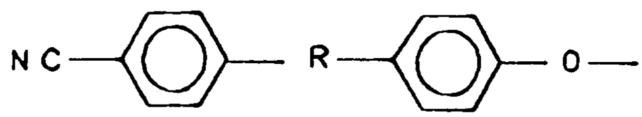

,

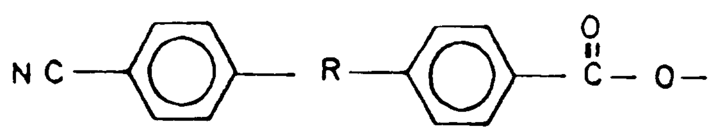

,

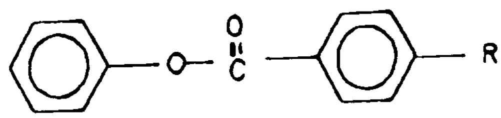

,

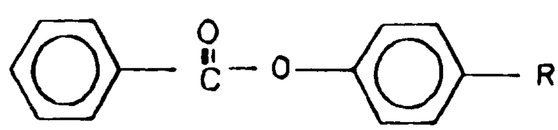

,

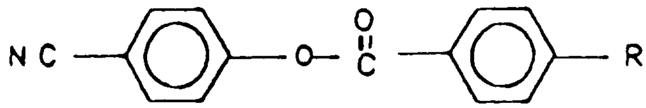

,

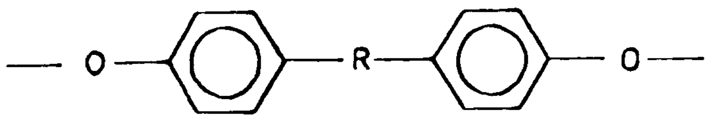

,

et 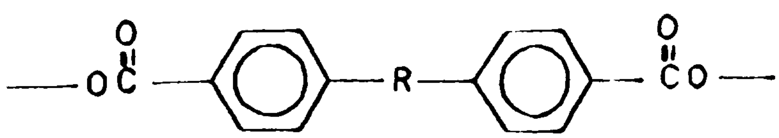

,

où R = 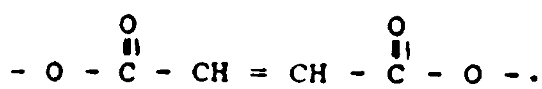

**26.** Véhicule polymère destiné à la formation d'un liant de revêtement présentant une Tg non supérieure à 60 ° C, une dureté à la rayure d'au moins H et une résistance au détachement brusque d'au moins 3,4 J lorsque le liant de revêtement présente une épaisseur de 25 µm, ce véhicule polymère comprenant :

(a) de 100 à 35 % en poids, par rapport au poids du véhicule polymère, d'un polymère modifié, ce polymère modifié étant un produit d'une réaction entre de l'acide p-hydroxybenzoïque et un oligoester-diol linéaire, en présence d'un catalyseur acide, les rapports entre l'acide p-hydroxybenzoïque et le diol étant de l'ordre de 20/80 à 60/40,

ledit oligoester-diol linéaire étant un produit de la réaction d'un mélange chauffé d'acide phtalique, d'acide isophtalique, d'acide téréphtalique, d'anhydride hexahydrophtalique, d'un acide dicarboxylique aliphatique présentant une longueur de chaîne carbonée de 4 à 36 et d'un diol primaire ou secondaire aliphatique, comportant de 2 à 23 carbones, et

(b) de 0 à 65 % en poids, par rapport au poids du véhicule polymère, d'une résine de réticulation choisie parmi le groupe comprenant du polyisocyanate, une mélamine et leurs mélanges.

**27.** Véhicule polymère suivant la revendication 26, caractérisé en ce que l'acide dicarboxylique aliphatique est de l'acide adipique.

**28.** Véhicule polymère suivant la revendication 27, caractérisé en ce que le diol est du néopentylglycol.

**29.** Revêtement formulé comprenant le véhicule polymère suivant l'une des revendications 1, 2, 3, 11, 12 et 26.

**30.** Liant de revêtement présentant une Tg non supérieure à 60 ° C, une dureté à la rayure d'au moins H, et une résistance au détachement brusque d'au moins 3,4 J à une épaisseur de liant de 25 µm, ce liant étant formé par application à un substrat d'un véhicule polymère en présence d'un solvant de ce dernier, le véhicule polymère étant tel que revendiqué dans la revendication 1.

**31.** Liant de revêtement suivant la revendication 30, caractérisé en ce que le liant de revêtement comprend de l'oxygène réticulant, provenant d'un séchage à l'air.

**32.** Liant de revêtement suivant la revendication 31, caractérisé en ce que le véhicule polymère comprend une résine de réticulation et en ce que la résine de réticulation est choisie parmi le groupe comprenant des résines aminoplastes, des résines de polyisocyanate et leurs mélanges.

**33.** Liant de revêtement suivant l'une des revendications 30, 31 et 32, caractérisé en ce que le groupe mésogène présente la formule I.

**34.** Liant de revêtement suivant l'une des revendications 30, 31 et 32, caractérisé en ce que le groupe mésogène présente la formule II.

**35.** Liant de revêtement suivant l'une des revendications 30, 31 et 32, caractérisé en ce que le groupe mésogène présente la formule III.

**36.** Liant de revêtement suivant l'une des revendications 30, 31 et 32, caractérisé en ce que le groupe mésogène présente la formule IV.

**37.** Liant de revêtement suivant l'une des revendications 30, 31 et 32, caractérisé en ce que le groupe mésogène présente la formule V.

**38.** Liant de revêtement suivant l'une des revendications 30 et 31, caractérisé en ce que le polymère modifié présente un poids moléculaire moyen supérieur à 500.

**39.** Liant de revêtement suivant l'une des revendications 30 et 31, caractérisé en ce que le polymère modifié est un polymère polyester qui présente une poids moléculaire moyen de 500 à 20.000.

**40.** Liant de revêtement suivant la revendication 30, caractérisé en ce que les groupes mésogènes sont greffés sur le polymère polyester pour former le polymère modifié.

**41.** Liant de revêtement suivant la revendication 33, caractérisé en ce que les groupes mésogènes sont greffés sur le polymère polyester pour former le polymère modifié.

**42.** Liant de revêtement suivant la revendication 34, caractérisé en ce que les groupes mésogènes sont greffés sur le polymère polyester pour former le polymère modifié.

**43.** Liant de revêtement suivant la revendication 35, caractérisé en ce que les groupes mésogènes sont greffés sur le polymère polyester pour former le polymère modifié.

**44.** Liant de revêtement suivant la revendication 36, caractérisé en ce que les groupes mésogènes sont greffés sur le polymère polyester pour former le polymère modifié.

**45.** Liant de revêtement suivant la revendication 37, caractérisé en ce que les groupes mésogènes sont greffés sur le polymère polyester pour former le polymère modifié.

**46.** Procédé de préparation d'un liant de revêtement suivant la revendication 30, ce procédé comprenant : une mélange d'un polymère modifié présentant une composition choisie parmi le groupe comprenant une résine de réticulation, une résine de polymère non modifié et leurs mélanges, pour former un véhicule polymère, le véhicule polymère comprenant au moins 35 % en poids, par rapport au poids du véhicule polymère, du polymère modifié, le polymère modifié étant un polymère polyester lié par covalence à au moins un groupe mésogène choisi parmi le groupe comprenant des radicaux des formules I, II, III, IV et V :

I. 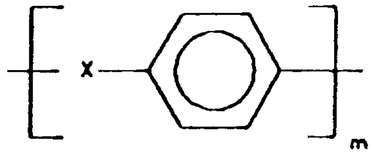

II. 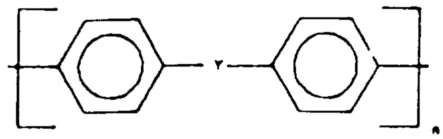

III. 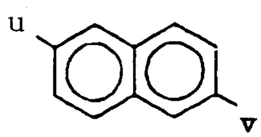 ou 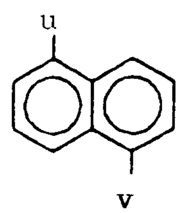

IV. des combinaisons de I, II et 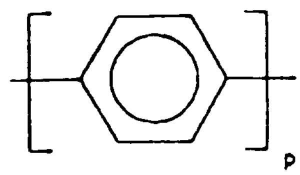

V. des combinaisons de III et 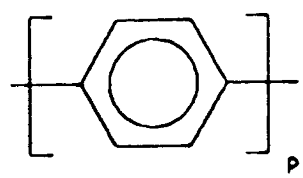

dans lesquelles

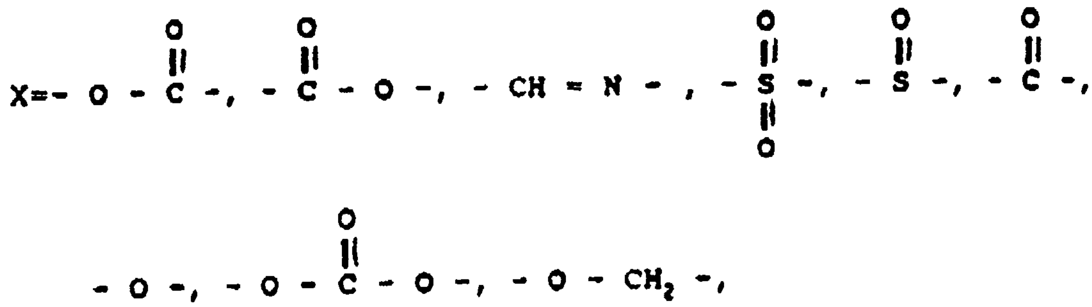

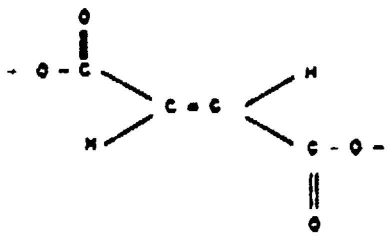

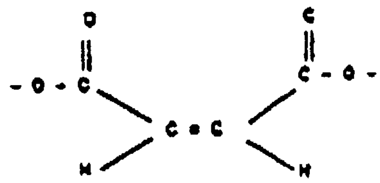

Y = X ou 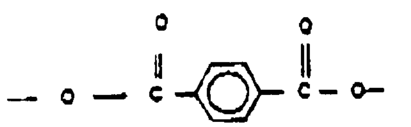 ou 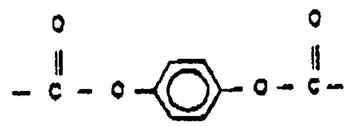

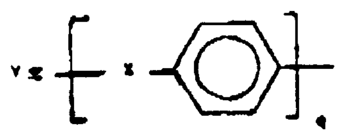

u = X, m = un nombre entier de 2 à 8, n = 1 ou 2, p = un nombre entier de 1 à 4, q = un nombre entier de 1 à 3,

le véhicule polymère ne comprenant pas plus de 65 % en poids, par rapport au poids du véhicule polymère, de la composition et le polymère modifié ayant de 5 à 50 % en poids de groupes mésogènes, par rapport au poids du polymère modifié.

**47.** Procédé suivant la revendication 46, caractérisé en ce que la résine de réticulation est amenée à réagir avec le véhicule polymère.

**48.** Procédé suivant la revendication 47, caractérisé en ce que la résine de réticulation et le véhicule polymère sont cuits.

**49.** Procédé suivant la revendication 46, caractérisé en ce que le liant de revêtement est formé par séchage à la température ambiante.

**50.** Procédé suivant la revendication 49, caractérisé en ce que le liant de revêtement est séché en présence d'oxygène.

**51.** Procédé suivant la revendication 46, caractérisé en ce que le polymère modifié présente un poids moléculaire moyen supérieur à 500.

**52.** Procédé suivant la revendication 46, caractérisé en ce que le polymère polyester modifié présente un poids moléculaire moyen d'un ordre compris entre 500 et 20.000 et en ce qu'il est mélangé à une résine de réticulation.

**53.** Procédé suivant la revendication 46, caractérisé en ce que le produit polyester est le produit de la réaction de polyacides et de polyols.

**54.** Procédé suivant la revendication 46, caractérisé en ce qu'il comprend en outre un mélange d'un polymère avec le véhicule polymère.

**55.** Procédé suivant la revendication 46, caractérisé en ce qu'il comprend en outre un mélange d'un deuxième polymère modifié avec le véhicule polymère.

**56.** Procédé suivant la revendication 46, caractérisé en ce que le polymère modifié est réticulé avec la résine de réticulation.

**57.** Procédé suivant la revendication 46, caractérisé en ce que les groupes mésogènes sont greffés sur le polymère polyester de façon à former le polymère modifié.

**58.** Procédé suivant l'une des revendications 46 et 57, caractérisé en ce que le groupe mésogène présente la formule I.

**59.** Procédé suivant l'une des revendications 46 et 57, caractérisé en ce que le groupe mésogène présente la formule II.

**60.** Procédé suivant l'une des revendications 46 et 57, caractérisé en ce que le groupe mésogène présente la formule III.

**61.** Procédé suivant l'une des revendications 46 et 57, caractérisé en ce que le groupe mésogène présente la formule IV.

**62.** Procédé suivant l'une des revendications 46 et 57, caractérisé en ce que le groupe mésogène présente la formule V.

**63.** Procédé de préparation d'une composition de revêtement formulée qui, lorsqu'elle est appliquée à un substrat, procure un liant de revêtement suivant la revendication 30, ce procédé comprenant :

un mélange d'un polymère modifié avec une composition choisie parmi le groupe comprenant une résine de réticulation, une résine polymère non modifiée et leurs mélanges, pour former un véhicule polymère, le véhicule polymère comprenant au moins 35 % en poids, par rapport au poids du véhicule polymère, du polymère modifié, ce polymère modifié étant choisi parmi le groupe comprenant un polymère polyester lié de manière covalente à au moins un groupe mésogène choisi parmi le groupe comprenant des radicaux des formules I, II, III, IV et V :

I. 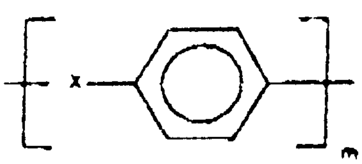

II. 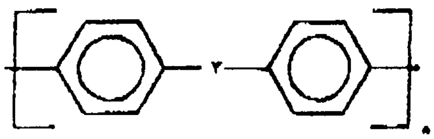

III. 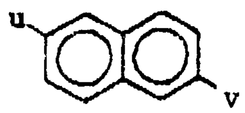 ou 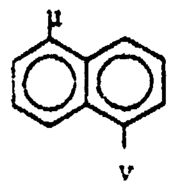

IV. combinaisons de I, II et 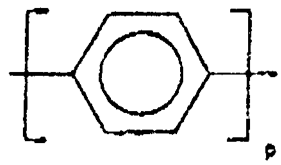

V. combinaisons de III et 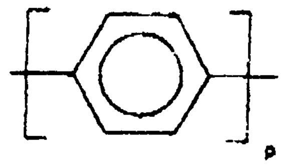

où

X= 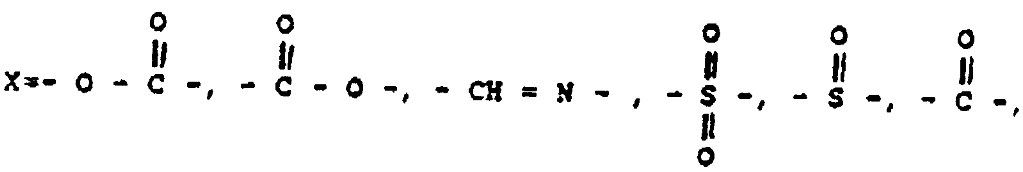

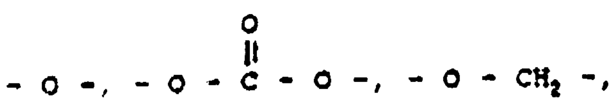

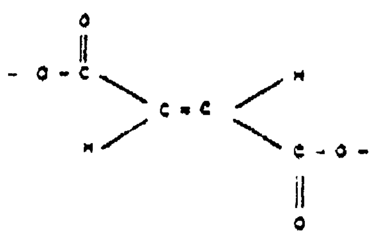 , 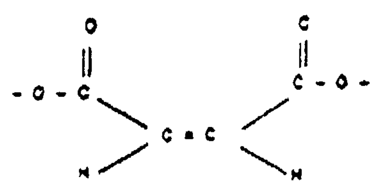

Y = X ou 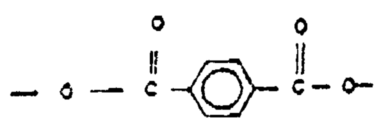 ou 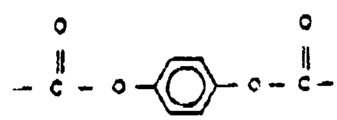

V = 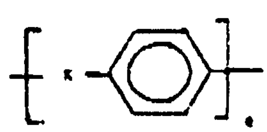

u = X,

m = un nombre entier de 2 à 8,

n = 1 ou 2,

p = un nombre entier de 1 à 4,

q = un nombre entier de 1 à 3,

le véhicule polymère ne comprenant pas plus de 65 % en poids, par rapport au poids du véhicule polymère, de la composition et le polymère modifié ayant de 5 à 50 % de groupes mésogènes par rapport au poids du polymère modifié.

**64.** Procédé suivant la revendication 63, comprenant en outre un mélange du véhicule polymère avec un solvant et des additifs.

**65.** Procédé suivant la revendication 64, caractérisé en ce que les groupes mésogènes sont greffés sur le polymère polyester pour former le polymère modifié.

**66.** Procédé suivant la revendication 63, caractérisé en ce qu'il comprend en outre un mélange d'un solvant et d'un pigment avec le véhicule polymère.

**67.** Procédé suivant la revendication 63, caractérisé en ce que les groupes mésogènes sont greffés sur le polymère polyester pour former le polymère modifié.

**68.** Procédé selon l'une des revendications 63, 65, 66 et 67, caractérisé en ce que le groupe mésogène présente la formule I.

**69.** Procédé selon l'une des revendications 63, 65, 66 et 67, caractérisé en ce que le groupe mésogène présente la formule II.

**70.** Procédé selon l'une des revendications 63, 65, 66 et 67, caractérisé en ce que le groupe mésogène présente la formule III.

**71.** Procédé selon l'une des revendications 63, 65, 66 et 67, caractérisé en ce que le groupe mésogène présente la formule IV.

**72.** Procédé selon l'une des revendications 63, 65, 66 et 67, caractérisé en ce que le groupe mésogène présente la formule V.

**73.** Véhicule polymère, qui, lorsqu'il est appliqué à un substrat, procure un liant de revêtement présentant une Tg non supérieure à 60 °C, une dureté à la rayure d'au moins H et une résistance au détachement brusque d'au moins 2,4 J à une épaisseur de liant de 25 µm, ce véhicule polymère comprenant :

(a) de 100 à 35 % en poids, par rapport au poids du véhicule polymère, d'un polymère modifié, ce polymère modifié étant un polymère polyester lié de manière covalente à au moins un groupe mésogène choisi parmi le groupe comprenant :

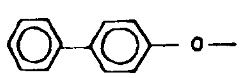 . 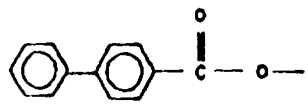 . 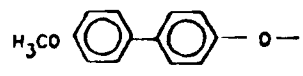 .

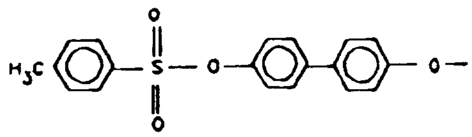 .

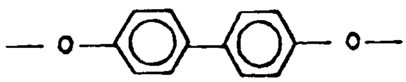 . 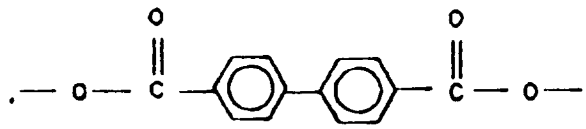 .

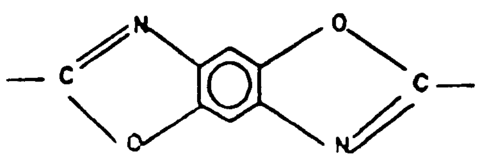 .

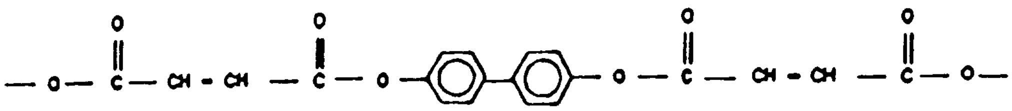

et 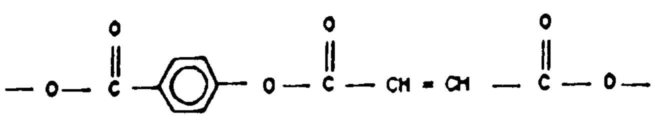 . et

(b) de 0 à 65 % en poids, par rapport au poids du véhicule polymère, d'une résine de réticulation, le polymère modifié ayant 5 à 50 % en poids de groupes mésogènes.

**74.** Polyol présentant la formule

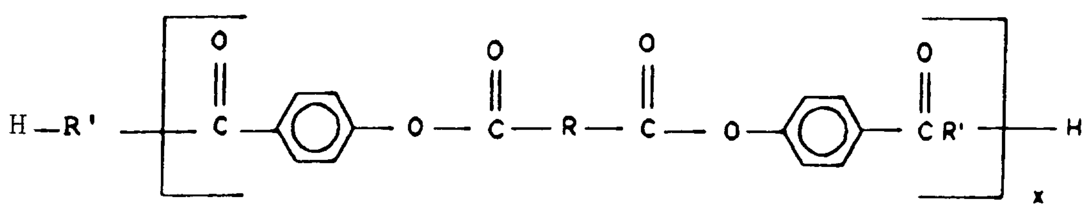

dans laquelle

x = 1 à 10

R =

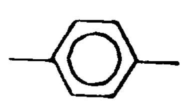 ;

R' = $O(CH_2)_nO$, $O[(CH_2)_nO]_m$ ,

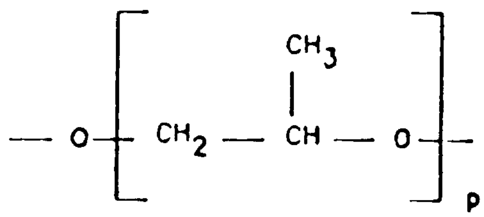

$\{O[(CH_2)_5COO]_pR''''\}_2$ , et

$O[R''OOCR'''COO]_pR''O$ ,

R'' et R'''' = un radical aliphatique ou cycloaliphatique présentant 12 atomes de carbone ou moins,

R''' = un radical aromatique présentant 10 atomes de carbone ou moins, un radical cycloaliphatique présentant 12 atomes de carbone ou moins, ou un radical aliphatique présentant 36 atomes de carbone ou moins,

n = 5 à 16,

m = 2 à 20, et

p = 1 à 20.

FIG. 1.

SYNTHESIS OF PHBA-MODIFIED ALKYDS G1 G4

1.

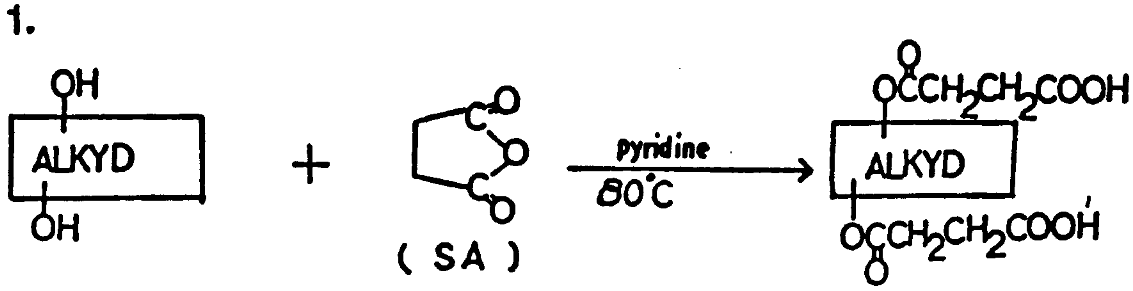


( SA )

2.

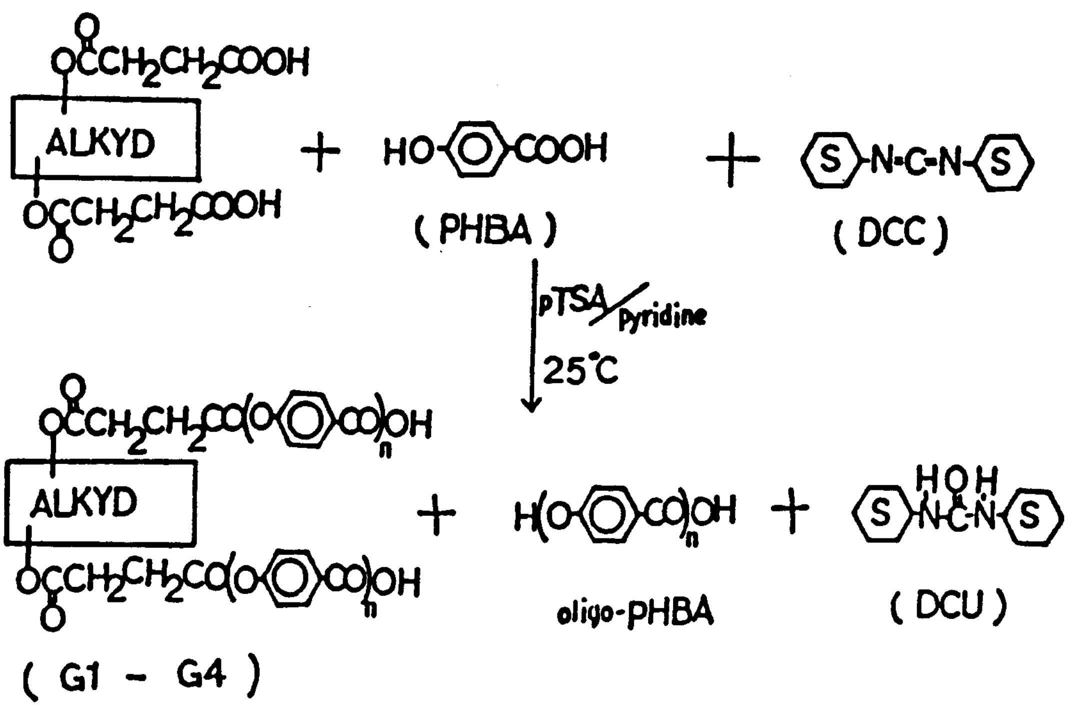


( PHBA )

( DCC )

( G1 - G4 )

oligo-PHBA

( DCU )

FIG. 2.

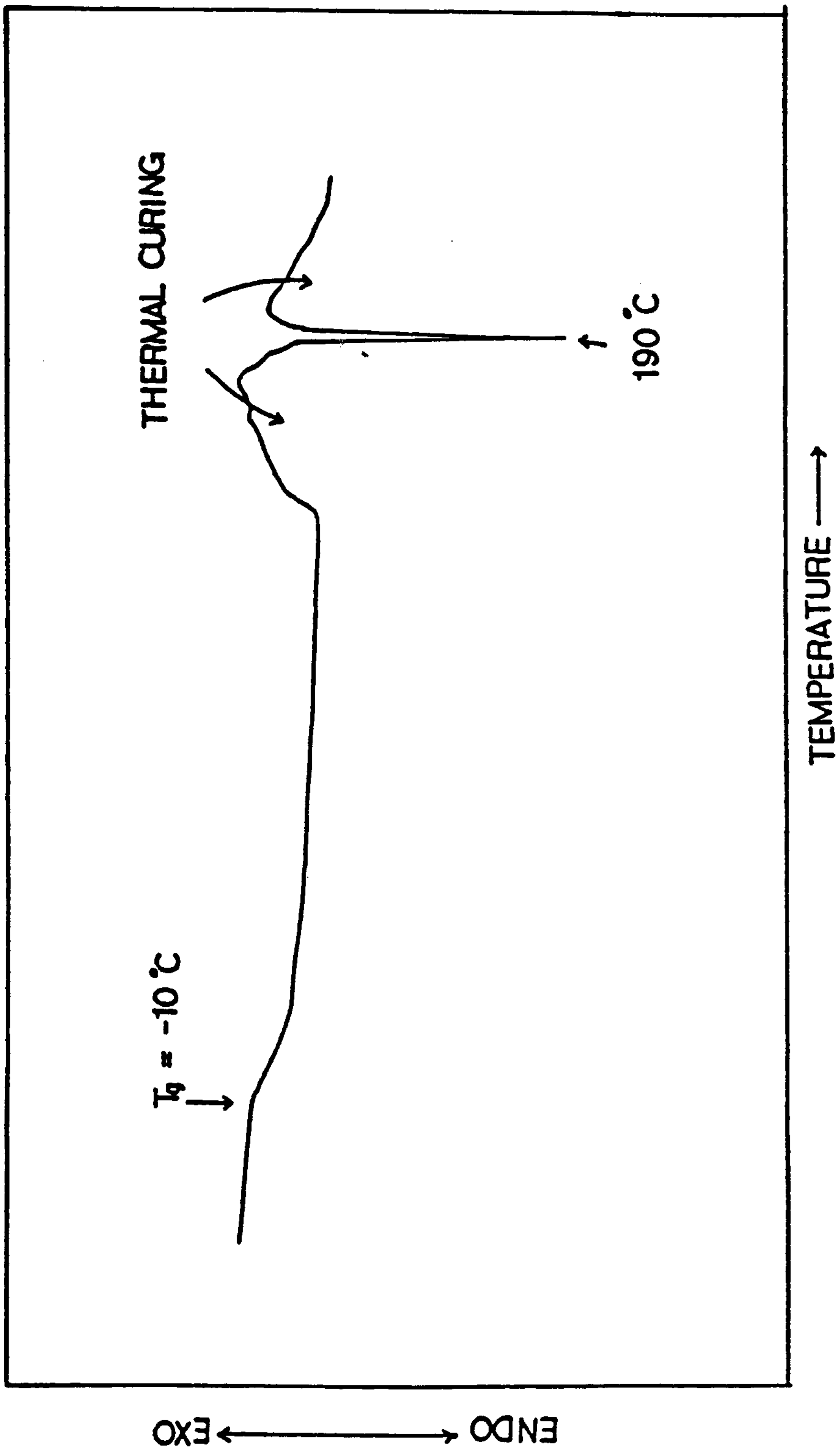


DSC Thermogram of Alkyd G4

FIG.3.

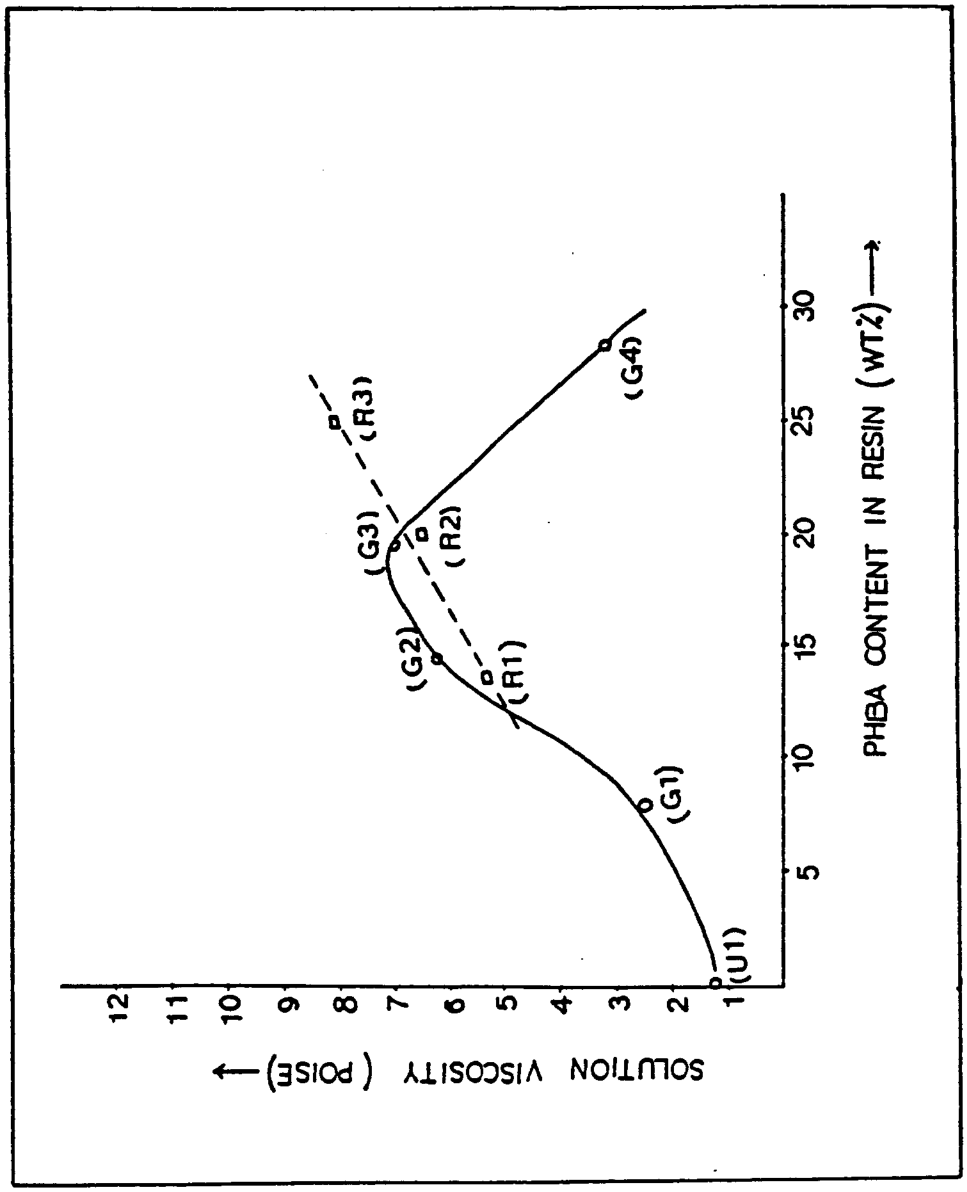


Solution Viscosity vs. PHBA Content Of Alkyds

G1 - G4 ( —•— ) and R1 - R3 (---□---).

FIG. 4.

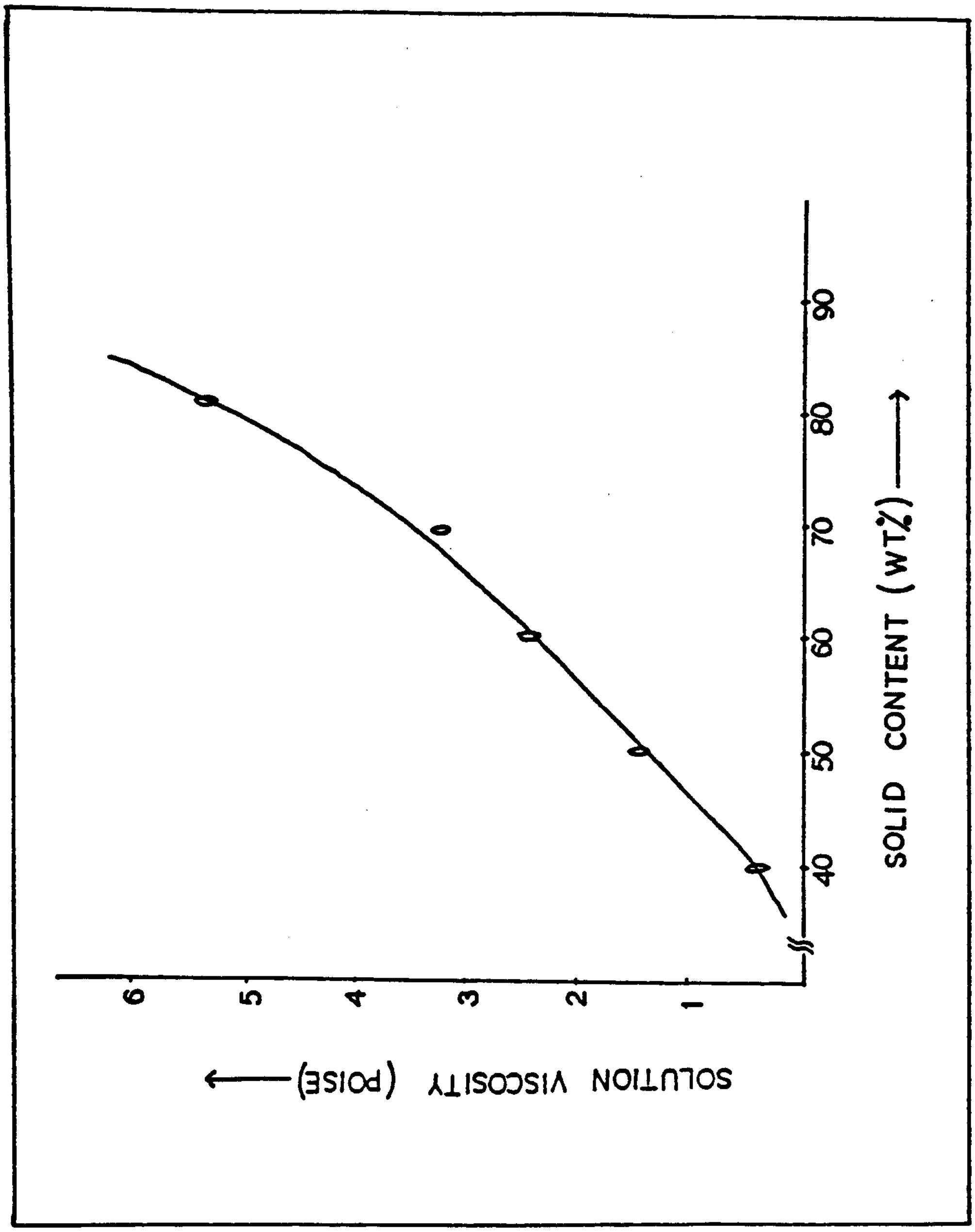


Solution Viscosity vs. Solid Content of a4

FIG. 5/5

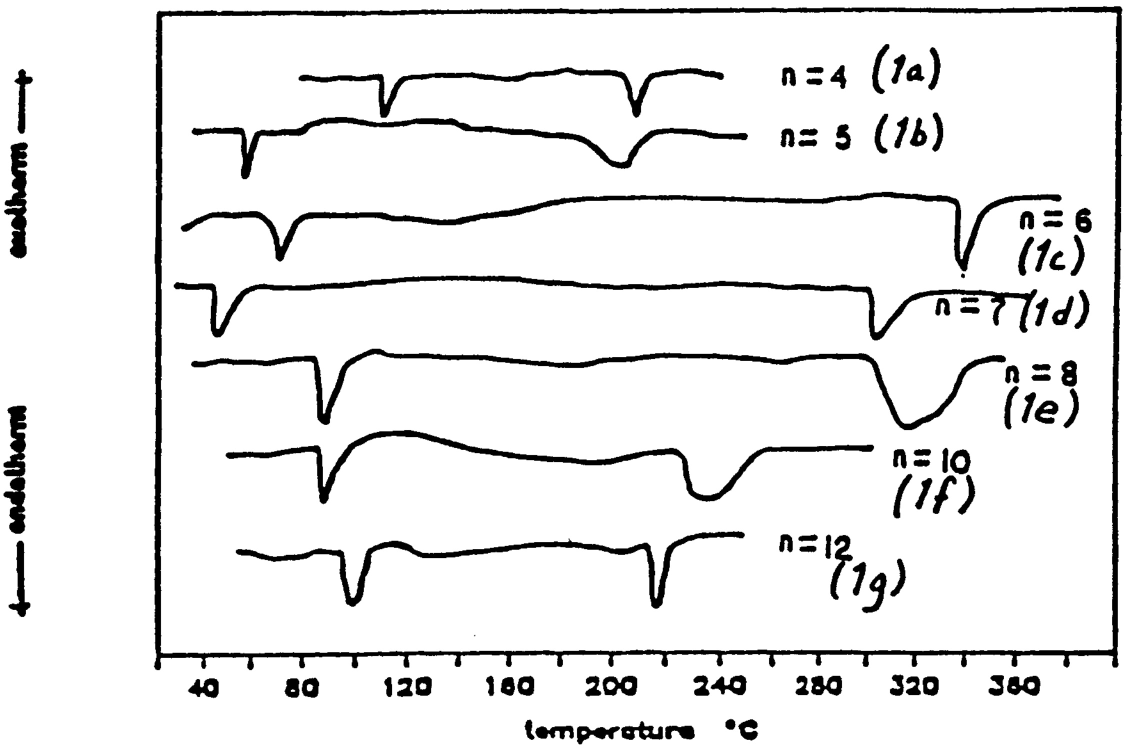


Figure 5 DSC Thermograms of L-C Diols Ia-g.